# EUROPEAN PATENT APPLICATION

(11) **EP 4 311 192 A2**
(43) Date of publication of application: **24.01.2024**
(21) Application number: 23187102.1
(22) Date of filing: 21.07.2023
(51) Int. Cl.: H04L 45/00, H04L 45/52, H04L 45/741, H04L 45/76

(54) **COMMUNICATION METHOD AND APPARATUS**

(30) Priority: 21.07.2022 CN 202210860604
(71) Applicant: Huawei Technologies Co., Ltd., Shenzhen, Guangdong 518129 (CN)
(72) Inventor: ZHU, Tong, Shenzhen, 518129 (CN); DING, Jiutao, Shenzhen, 518129 (CN)
(74) Representative: Gill Jennings & Every LLP

(57) **Abstract**

This application provides a communication method and apparatus. The method includes: A first communication apparatus receives a first EVPN MAC route from a second communication apparatus, where the first EVPN MAC route carries a first MAC address and a first VNI. The first communication apparatus generates a second EVPN MAC route based on the first EVPN MAC route, where the second EVPN MAC route carries the first MAC address and a first SID that is of the first communication apparatus and that corresponds to the first VNI. The first communication apparatus sends the second EVPN MAC route to a third communication apparatus. This application implements interconnection between a VXLAN and an SRv6 network.

## Description

### TECHNICAL FIELD

This application relates to the communication field, and in particular, to a communication method and apparatus.

### BACKGROUND

With development of information technology, to cope with rapid growth of data amounts of various types of data, increasingly more organizations start to construct data centers to transmit, display, compute, and store data.

Currently, data exchange is mainly performed in a data center through a virtual extensible local area network (virtual extensible local area network, VXLAN), and different data centers may be interconnected through a multi-protocol label switching (multi-protocol label switching, MPLS) network.

However, as increasingly more networks start to use a segment routing over IPv6 (segment routing over IPv6, SRv6) network for networking, how to implement interconnection between data centers through the SRv6 network becomes an urgent problem to be resolved currently.

### SUMMARY

This application provides a communication method and apparatus, to implement interconnection between a VXLAN and an SRv6 network.

According to a first aspect, a communication method is provided. The method includes: A first communication apparatus receives a first Ethernet virtual private network media access control EVPN MAC route from a second communication apparatus, where the first EVPN MAC route carries a first MAC address and a first virtual extensible local area network identifier VNI. The first communication apparatus generates a second EVPN MAC route based on the first EVPN MAC route, where the second EVPN MAC route carries the first MAC address and a first segment routing over IPv6 segment identifier SRv6 SID that is of the first communication apparatus and that corresponds to the first VNI. The first communication apparatus sends the second EVPN MAC route to a third communication apparatus.

In the communication method, when receiving the first EVPN MAC route that is of a corresponding VXLAN and that carries the first MAC address and the first VNI, the first communication apparatus may convert the first EVPN MAC route into a second EVPN MAC route that corresponds to an SRv6 network and that carries the first MAC address and the first SRv6 SID (corresponding to the first VΓΠ), and may send the second EVPN MAC route to the third communication apparatus. Therefore, when the first communication apparatus receives an SRv6 packet that carries the first SRv6 SID from the SRv6 network, the communication apparatus can decapsulate the SRv6 packet to obtain a layer 2 packet, and re-encapsulate the layer 2 packet as a VXLAN packet including the first VNI, to implement forwarding of the layer 2 packet by using the VXLAN. In this way, interconnection between the VXLAN and the SRv6 network is implemented.

In a possible design, the method further includes: The first communication apparatus determines, according to an SRv6 SID allocation policy, the first SRv6 SID corresponding to the first VNI. The SRv6 SID allocation policy includes at least one of the following: allocating different SRv6 SIDs based on different EVPN instances corresponding to EVPN MAC routes, allocating different SRv6 SIDs based on different MAC addresses carried in EVPN MAC routes; or allocating different SRv6 SIDs based on EVPN MAC routes from different communication apparatuses.

In the foregoing design, a corresponding SRv6 SID allocation policy may be used to determine the first SRv6 SID as required, thereby facilitating load sharing and network operation and maintenance.

In a possible design, the first SRv6 SID is an SRv6 SID allocated to a first Ethernet virtual private network EVPN instance of the first communication apparatus.

According to the foregoing design, when the first communication apparatus receives, from the SRv6 network, the SRv6 packet that carries the first SRv6 SID, the first communication apparatus may first determine the first EVPN instance based on the first SRv6 SID, and may further determine a forwarding entry corresponding to the layer 2 packet by using the first EVPN instance, to complete forwarding of the layer 2 packet.

In a possible design, a MAC table corresponding to the first EVPN instance includes a correspondence between the first MAC address and the first VNI.

According to the foregoing design, when the first communication apparatus receives, from the SRv6 network, the SRv6 packet that carries the first SRv6 SID, after the first communication apparatus determines the first EVPN instance based on the first SRv6 SID, the first communication apparatus may find the correspondence between the first MAC address and the first VNI from the MAC table corresponding to the first EVPN instance, to determine the first VΓΠ, and to encapsulate the layer 2 packet into the VXLAN packet that carries the first VNI for forwarding, thereby completing forwarding of the layer 2 packet.

In a possible design, the method further includes: The first communication apparatus receives a third EVPN MAC route, where the third EVPN MAC route carries a second MAC address and a second VΓΠ, and the third EVPN MAC route corresponds to a second EVPN instance of the first communication apparatus. The first communication apparatus generates a fourth EVPN MAC route based on the third EVPN MAC route, where the fourth EVPN MAC route carries the second MAC address and a second SRv6 SID, and the second SRv6 SID is an SRv6 SID allocated to the second EVPN instance. The first communication apparatus sends the fourth EVPN MAC route to the third communication apparatus.

In the foregoing design, after receiving EVPN MAC routes corresponding to different EVPN instances (that is, the first EVPN MAC route corresponding to the first EVPN instance and the third EVPN MAC route corresponding to the second EVPN instance), the first communication apparatus separately generates EVPN MAC routes that carry different SRv6 SIDs (that is, the second EVPN MAC route that carries the first SRv6 SID and the fourth EVPN MAC route that carries the second SRv6 SID) and sends the EVPN MAC routes to the third communication apparatus. Therefore, after receiving the SRv6 packet from the SRv6 network, the first communication apparatus may first determine the EVPN instance based on the SRv6 SID carried in the SRv6 packet (for example, determining the first EVPN instance based on the first SRv6 SID or determining the second EVPN instance based on the second SRv6 SID), to determine the forwarding entry of the layer 2 packet by using a corresponding EVPN instance and to complete VXLAN encapsulation and forwarding of the layer 2 packet.

In a possible design, the method further includes: The first communication apparatus records a correspondence between the first SRv6 SID and the first VNI.

In the foregoing design, the correspondence between the first SRv6 SID and the first VNI is recorded, so that the first communication apparatus can quickly determine the first VNI corresponding to the first SRv6 SID. Further, after receiving the SRv6 packet from the SRv6 network, the first communication apparatus may first quickly determine the first VNI based on the first SRv6 SID carried in the SRv6 packet, and complete encapsulation of the VXLAN packet based on the first VNI for forwarding.

In a possible design, the first SRv6 SID is associated with a first operation, and the first operation is performing virtual extensible local area network VXLAN encapsulation.

According to the foregoing design, after receiving the SRv6 packet including the first SRv6 SID, the first communication apparatus may directly determine, based on the first SRv6 SID, that VXLAN encapsulation needs to be performed, and then be directly triggered to search for the correspondence between the first SRv6 SID and the first VNI, to perform VXLAN encapsulation.

In a possible design, the method further includes: The first communication apparatus receives a fifth EVPN MAC route, where the fifth EVPN MAC route carries a third MAC address and the first VNI. The first communication apparatus generates a sixth EVPN MAC route based on the fifth EVPN MAC route, where the sixth EVPN MAC route carries the third MAC address and a third SRv6 SID corresponding to the first VNI. The first communication apparatus sends the sixth EVPN MAC route to the third communication apparatus.

According to the foregoing design, after receiving EVPN MAC routes corresponding to different MAC addresses (that is, the first EVPN MAC route corresponding to the first MAC address and the fifth EVPN MAC route corresponding to the third MAC address), the first communication apparatus separately generates EVPN MAC routes that carry different SRv6 SIDs (that is, the second EVPN MAC route that carries the first SRv6 SID and the sixth EVPN MAC route that carries the third SRv6 SID) and sends the EVPN MAC routes to the third communication apparatus. Therefore, different MAC addresses in a same VNI may correspond to different SIDs. In this way, on one hand, on the SRv6 network, the different SIDs can be used to transmit layer 2 packets from the different MAC addresses, to facilitate load balancing; and on the other hand, on the SRv6 network, a destination address of the SRv6 packet can be determined based on the SID carried in the SRv6 packet, to facilitate network management and maintenance.

In a possible design, the method further includes: The first communication apparatus receives a seventh EVPN MAC route from a fourth communication apparatus, where the seventh EVPN MAC route carries the first MAC address and the first VNI. The first communication apparatus generates an eighth EVPN MAC route based on the seventh EVPN MAC route, where the eighth EVPN MAC route carries the first MAC address and a fourth SRv6 SID corresponding to the first VNI. The first communication apparatus sends the eighth EVPN MAC route to the third communication apparatus

According to the foregoing design, after receiving EVPN MAC routes corresponding to different next-hop information (that is, the first EVPN MAC route whose corresponding next hop is the second communication apparatus and the seventh EVPN MAC route whose corresponding next hop is the fourth communication apparatus), the first communication apparatus separately generates EVPN MAC routes that carry different SRv6 SIDs (that is, the second EVPN MAC route that carries the first SRv6 SID and the eighth EVPN MAC route that carries the fourth SRv6 SID) and sends the EVPN MAC routes to the third communication apparatus. Therefore, different next-hop nodes in a same VNI may correspond to different SIDs. In this way, on one hand, on the SRv6 network, the different SIDs can be used to transmit layer 2 packets to the different next-hop nodes, to facilitate load balancing; and on the other hand, on the SRv6 network, a next-hop node of the layer 2 packet after the SRv6 packet is transmitted to the first communication apparatus may be determined based on the SID carried in the SRv6 packet, to facilitate network management and maintenance.

In a possible design, the method further includes: The first communication apparatus receives a first SRv6 packet whose destination address is the first SRv6 SID from the third communication apparatus, where the SRv6 packet includes a first layer 2 packet whose destination address is the first MAC address. The first communication apparatus determines the first VNI based on the first SRv6 SID. The first communication apparatus performs VXLAN encapsulation on the first layer 2 packet to obtain a first VXLAN packet, where the first VXLAN packet includes the first VNI. The first communication apparatus forwards the first VXLAN packet to the second communication apparatus.

In this design, when the first communication apparatus receives the SRv6 packet that carries the first SRv6 SID from the SRv6 network, the communication apparatus can decapsulate the SRv6 packet to obtain a layer 2 packet, and re-encapsulate the layer 2 packet as a VXLAN packet including the first VNI, to implement forwarding of the layer 2 packet by using the VXLAN. In this way, interconnection between the VXLAN and the SRv6 network is implemented.

In a possible design, that the first communication apparatus determines the first VNI based on the first SRv6 SID includes: The first communication apparatus determines the first EVPN instance based on the first SRv6 SID. The first communication apparatus determines, based on the first MAC address, the first VNI from the MAC table corresponding to the first EVPN instance, where the MAC table includes the correspondence between the first MAC address and the first VNI.

According to the foregoing design, when the first communication apparatus receives, from the SRv6 network, the SRv6 packet that carries the first SRv6 SID, after the first communication apparatus determines the first EVPN instance based on the first SRv6 SID, the first communication apparatus may find the correspondence between the first MAC address and the first VNI from the MAC table corresponding to the first EVPN instance, to determine the first VΓΠ, and to encapsulate the layer 2 packet into the VXLAN packet that carries the first VNI for forwarding, thereby completing forwarding of the layer 2 packet.

In a possible design, the method further includes: The first communication apparatus receives a second SRv6 packet whose destination address is the second SRv6 SID from the third communication apparatus, where the second SRv6 packet includes a second layer 2 packet whose destination address is the second MAC address. The first communication apparatus determines the second EVPN instance based on the second SRv6 SID. The first communication apparatus determines, based on the second MAC address, the second VNI from a MAC table corresponding to the second EVPN instance, where the MAC table includes a correspondence between the second MAC address and the second VNI. The first communication apparatus performs VXLAN encapsulation on the second layer 2 packet to obtain a second VXLAN packet, where the second VXLAN packet includes the second VNI. The first communication apparatus forwards the second VXLAN packet.

In the foregoing design, after receiving, from the SRv6 network, SRv6 packets that carry different SRv6 SIDs (for example, the first SRv6 packet whose destination address is the first SRv6 SID and the second SRv6 packet whose destination address is the second SRv6 SID), the first communication apparatus may first determine the EVPN instance based on the SRv6 SID carried in the SRv6 packet (for example, determining the first EVPN instance based on the first SRv6 SID or determining the second EVPN instance based on the second SRv6 SID), to determine the forwarding entry of the layer 2 packet by using a corresponding EVPN instance and to complete VXLAN encapsulation and forwarding of the layer 2 packet.

In a possible design, that the first communication apparatus determines the first VNI based on the first SRv6 SID includes: The first communication apparatus determines the first VNI based on the first SRv6 SID and a correspondence that is between the first SRv6 SID and the first VNI and that is recorded in the first communication apparatus.

According to the foregoing design, the first communication apparatus can quickly determine the first VNI corresponding to the first SRv6 SID. Further, after receiving the SRv6 packet from the SRv6 network, the first communication apparatus may first quickly determine the first VNI based on the first SRv6 SID carried in the SRv6 packet, and complete encapsulation of the VXLAN packet based on the first VNI for forwarding.

In a possible design, the method further includes: The first communication apparatus receives a third SRv6 packet whose destination address is the third SRv6 SID from the third communication apparatus, where the third SRv6 packet includes a third layer 2 packet whose destination address is the third MAC address. The first communication apparatus determines the first VNI based on the third SRv6 SID and a correspondence that is between the third SRv6 SID and the first VNI and that is recorded in the first communication apparatus. The first communication apparatus performs VXLAN encapsulation on the third layer 2 packet to obtain a third VXLAN packet, where the third VXLAN packet includes the first VNI. The first communication apparatus forwards the third VXLAN packet to the second communication apparatus.

According to the foregoing design, after receiving SRv6 packets corresponding to different MAC addresses and different SRv6 SIDs (that is, the first SRv6 packet corresponding to the first MAC address and the third SRv6 packet corresponding to the third MAC address, where the different MAC addresses correspond to different SIDs), the first communication apparatus may separately determine the first VNIs based on the different SRv6 SIDs carried in the SRv6 packets and encapsulate the VXLAN packet. The different MAC addresses correspond to the different SIDs. Therefore, on one hand, on the SRv6 network, the different SIDs can be used to transmit layer 2 packets from the different MAC addresses, to facilitate load balancing; and on the other hand, on the SRv6 network, a destination address of the SRv6 packet can be determined based on the SID carried in the SRv6 packet, to facilitate network management and maintenance.

In a possible design, the method further includes: The first communication apparatus receives a fourth SRv6 packet whose destination address is the fourth SRv6 SID from the third communication apparatus, where the fourth SRv6 packet includes a fourth layer 2 packet whose destination address is the first MAC address. The first communication apparatus determines the first VNI based on the fourth SRv6 SID and a correspondence that is between the fourth SRv6 SID and the first VNI and that is recorded in the first communication apparatus. The first communication apparatus performs VXLAN encapsulation on the fourth layer 2 packet to obtain a fourth VXLAN packet, where the fourth VXLAN packet includes the first VNI. The first communication apparatus forwards the fourth VXLAN packet to the fourth communication apparatus

According to the foregoing design, after receiving SRv6 packets corresponding to different next-hop nodes and different SRv6 SIDs (that is, the first SRv6 packet corresponding to the second communication apparatus and the third SRv6 packet corresponding to the fourth communication apparatus, where the different next-hop nodes correspond to different SIDs), the first communication apparatus may separately determine the first VNIs based on the different SRv6 SIDs carried in the SRv6 packets and encapsulate the VXLAN packet. The different next hops correspond to the different SIDs. Therefore, on one hand, on the SRv6 network, the different SIDs can be used to transmit layer 2 packets, to facilitate load balancing; and on the other hand, on the SRv6 network, a next-hop node of the layer 2 packet after the SRv6 packet is transmitted to the first communication apparatus may be determined based on the SID carried in the SRv6 packet, to facilitate network management and maintenance.

In a possible design, both the first communication apparatus and the second communication apparatus each are a data center gateway.

According to a second aspect, a communication method is provided. The method includes: A first communication apparatus receives a first SRv6 packet whose destination address is a first segment routing over IPv6 segment identifier SRv6 SID from a second communication apparatus, where the first SRv6 packet includes a first layer 2 packet whose destination address is a first media access control MAC address. The first communication apparatus determines a first virtual extensible local area network identifier VNI based on the first SRv6 SID. The first communication apparatus performs virtual extensible local area network VXLAN encapsulation on the first layer 2 packet to obtain a first VXLAN packet, where the first VXLAN packet includes the first VNI. The first communication apparatus forwards the first VXLAN packet to a third communication apparatus.

In this communication method, when the first communication apparatus receives an SRv6 packet that carries the first SRv6 SID from the SRv6 network, the communication apparatus can decapsulate the SRv6 packet to obtain a layer 2 packet, and re-encapsulate the layer 2 packet as a VXLAN packet including the first VNI, to implement forwarding of the layer 2 packet by using the VXLAN. In this way, interconnection between the VXLAN and the SRv6 network is implemented.

In a possible design, the first SRv6 SID is an SRv6 SID allocated to a first Ethernet virtual private network EVPN instance of the first communication apparatus.

According to the foregoing design, when the first communication apparatus receives, from the SRv6 network, the SRv6 packet that carries the first SRv6 SID, the first communication apparatus may first determine the first EVPN instance based on the first SRv6 SID, and may further determine a forwarding entry corresponding to the layer 2 packet by using the first EVPN instance, to complete forwarding of the layer 2 packet.

In a possible design, that the first communication apparatus determines a first VNI based on the first SRv6 SID includes: The first communication apparatus determines the first EVPN instance based on the first SRv6 SID. The first communication apparatus determines, based on the first MAC address, the first VNI from a MAC table corresponding to the first EVPN instance, where the MAC table includes a correspondence between the first MAC address and the first VNI.

According to the foregoing design, when the first communication apparatus receives, from the SRv6 network, the SRv6 packet that carries the first SRv6 SID, after the first communication apparatus determines the first EVPN instance based on the first SRv6 SID, the first communication apparatus may find the correspondence between the first MAC address and the first VNI from the MAC table corresponding to the first EVPN instance, to determine the first VΓΠ, and to encapsulate the layer 2 packet into the VXLAN packet that carries the first VNI for forwarding, thereby completing forwarding of the layer 2 packet.

In a possible design, the method further includes: The first communication apparatus receives a second SRv6 packet whose destination address is a second SRv6 SID from the second communication apparatus, where the second SRv6 packet includes a second layer 2 packet whose destination address is a second MAC address. The first communication apparatus determines a second EVPN instance based on the second SRv6 SID. The first communication apparatus determines, based on the second MAC address, a second VNI from a MAC table corresponding to the second EVPN instance, where the MAC table includes a correspondence between the second MAC address and the second VNI. The first communication apparatus performs VXLAN encapsulation on the second layer 2 packet to obtain a second VXLAN packet, where the second VXLAN packet includes the second VNI. The first communication apparatus forwards the second VXLAN packet.

In the foregoing design, after receiving, from the SRv6 network, SRv6 packets that carry different SRv6 SIDs (for example, the first SRv6 packet whose destination address is the first SRv6 SID and the second SRv6 packet whose destination address is the second SRv6 SID), the first communication apparatus may first determine the EVPN instance based on the SRv6 SID carried in the SRv6 packet (for example, determining the first EVPN instance based on the first SRv6 SID or determining the second EVPN instance based on the second SRv6 SID), to determine the forwarding entry of the layer 2 packet by using a corresponding EVPN instance and to complete VXLAN encapsulation and forwarding of the layer 2 packet.

In a possible design, that the first communication apparatus determines a first VNI based on the first SRv6 SID includes: The first communication apparatus determines the first VNI based on the first SRv6 SID and a correspondence that is between the first SRv6 SID and the first VNI and that is recorded in the first communication apparatus.

According to the foregoing design, the first communication apparatus can quickly determine the first VNI corresponding to the first SRv6 SID. Further, after receiving the SRv6 packet from the SRv6 network, the first communication apparatus may first quickly determine the first VNI based on the first SRv6 SID carried in the SRv6 packet, and complete encapsulation of the VXLAN packet based on the first VNI for forwarding.

In a possible design, the first SRv6 SID is associated with a first operation, and the first operation is performing VXLAN encapsulation.

According to the foregoing design, after receiving the SRv6 packet including the first SRv6 SID, the first communication apparatus may directly determine, based on the first SRv6 SID, that VXLAN encapsulation needs to be performed, and then be directly triggered to search for the correspondence between the first SRv6 SID and the first VNI, to perform VXLAN encapsulation.

In a possible design, the method further includes: The first communication apparatus receives a third SRv6 packet whose destination address is a third SRv6 SID from the second communication apparatus, where the third SRv6 packet includes a third layer 2 packet whose destination address is a third MAC address. The first communication apparatus determines the first VNI based on the third SRv6 SID and a correspondence that is between the third SRv6 SID and the first VNI and that is recorded in the first communication apparatus. The first communication apparatus performs VXLAN encapsulation on the third layer 2 packet to obtain a third VXLAN packet, where the third VXLAN packet includes the first VNI. The first communication apparatus forwards the third VXLAN packet to the third communication apparatus.

According to the foregoing design, after receiving SRv6 packets corresponding to different MAC addresses and different SRv6 SIDs (that is, the first SRv6 packet corresponding to the first MAC address and the third SRv6 packet corresponding to the third MAC address, where the different MAC addresses correspond to different SIDs), the first communication apparatus may separately determine the first VNIs based on the different SRv6 SIDs carried in the SRv6 packets and encapsulate the VXLAN packet. The different MAC addresses correspond to the different SIDs. Therefore, on one hand, on the SRv6 network, the different SIDs can be used to transmit layer 2 packets from the different MAC addresses, to facilitate load balancing; and on the other hand, on the SRv6 network, a destination address of the SRv6 packet can be determined based on the SID carried in the SRv6 packet, to facilitate network management and maintenance.

In a possible design, the method further includes: The first communication apparatus receives a fourth SRv6 packet whose destination address is a fourth SRv6 SID from the second communication apparatus, where the fourth SRv6 packet includes a fourth layer 2 packet whose destination address is the first MAC address. The first communication apparatus determines the first VNI based on the fourth SRv6 SID and a correspondence that is between the fourth SRv6 SID and the first VNI and that is recorded in the first communication apparatus. The first communication apparatus performs VXLAN encapsulation on the fourth layer 2 packet to obtain a fourth VXLAN packet, where the fourth VXLAN packet includes the first VNI. The first communication apparatus forwards the fourth VXLAN packet to a fourth communication apparatus

According to the foregoing design, after receiving SRv6 packets corresponding to next-hop nodes and different SRv6 SIDs (that is, the first SRv6 packet corresponding to the third communication apparatus and the third SRv6 packet corresponding to the fourth communication apparatus, where different next-hop nodes correspond to different SIDs), the first communication apparatus may separately determine the first VNIs based on the different SRv6 SIDs carried in the SRv6 packets and encapsulate the VXLAN packet. The different next hops correspond to the different SIDs. Therefore, on one hand, on the SRv6 network, the different SIDs can be used to transmit layer 2 packets from the different MAC addresses, to facilitate load balancing; and on the other hand, on the SRv6 network, a next-hop node of the layer 2 packet after the SRv6 packet is transmitted to the first communication apparatus may be determined based on the SID carried in the SRv6 packet, to facilitate network management and maintenance.

In a possible design, both the first communication apparatus and the third communication apparatus each are a data center gateway.

According to a third aspect, a communication method is provided. The method includes: A first communication apparatus receives a first Ethernet virtual private network media access control EVPN MAC route from a second communication apparatus, where the first EVPN MAC route carries a first MAC address and a first SRv6 SID. The first communication apparatus generates a second EVPN MAC route based on the first EVPN MAC route, where the second EVPN MAC route carries the first MAC address and a first virtual extensible local area network identifier VNI corresponding to the first SRv6 SID. The first communication apparatus sends the second EVPN MAC route to a third communication apparatus.

In the communication method, when receiving the first EVPN MAC route that is of a corresponding SRv6 network and that carries the first MAC address and the first SRv6 SID, the first communication apparatus may convert the first EVPN MAC route into a second EVPN MAC route that corresponds to a VXLAN and that carries the first MAC address and the first VNI (corresponding to the first SRv6 SID), and may send the second EVPN MAC route to the third communication apparatus. Therefore, when the first communication apparatus receives a VXLAN packet that carries the first VNI from the VXLAN, the communication apparatus can decapsulate the VXLAN packet to obtain a layer 2 packet, and re-encapsulate the layer 2 packet as an SRv6 packet including the first SRv6 SID, to implement forwarding of the layer 2 packet by using the SRv6 network. In this way, interconnection between the VXLAN and the SRv6 network is implemented.

In a possible design, the method further includes: The first communication apparatus determines, according to a VNI allocation policy, the first VNI corresponding to the first SRv6 SID. The SRv6 SID allocation policy includes at least one of the following: allocating different VNIs based on different EVPN instances corresponding to EVPN MAC routes, allocating different VNIs based on different MAC addresses carried in EVPN MAC routes; or allocating different VNIs based on EVPN MAC routes from different communication apparatuses.

In the foregoing design, a corresponding SRv6 SID allocation policy may be used to determine the first SRv6 SID as required, thereby facilitating load sharing and network operation and maintenance.

In a possible design, the first VNI is a VNI allocated to a first Ethernet virtual private network EVPN instance of the first communication apparatus.

According to the foregoing design, when the first communication apparatus receives, from the VXLAN, the VXLAN packet that carries the first VNI, the first communication apparatus may first determine the first EVPN instance based on the first VNI, and may further determine a forwarding entry corresponding to the layer 2 packet by using the first EVPN instance, to complete forwarding of the layer 2 packet.

In a possible design, a MAC table corresponding to the first EVPN instance includes a correspondence between the first MAC address and the first SRv6 SID.

According to the foregoing design, when the first communication apparatus receives, from the VXLAN, the VXLAN packet that carries the first VΓΠ, after the first communication apparatus determines the first EVPN instance based on the first VΓΠ, the first communication apparatus may find the correspondence between the first MAC address and the first SRv6 SID from the MAC table corresponding to the first EVPN instance, to determine the first SRv6 SID, and to encapsulate the layer 2 packet into the SRv6 packet that carries the first SRv6 SID for forwarding, thereby completing forwarding of the layer 2 packet.

In a possible design, the method further includes: The first communication apparatus receives a third EVPN MAC route, where the third EVPN MAC route carries a second MAC address and a second SRv6 SID, and the third EVPN MAC route corresponds to a second EVPN instance. The first communication apparatus generates a fourth EVPN MAC route based on the third EVPN MAC route, where the fourth EVPN MAC route carries the second MAC address and a second VNI, and the second VNI is a VNI allocated to the second EVPN instance. The first communication apparatus sends the fourth EVPN MAC route to the third communication apparatus.

In the foregoing design, after receiving EVPN MAC routes corresponding to different EVPN instances (that is, the first EVPN MAC route corresponding to the first EVPN instance and the third EVPN MAC route corresponding to the second EVPN instance), the first communication apparatus separately generates EVPN MAC routes that carry different VNIs (that is, the second EVPN MAC route that carries the first VNI and the fourth EVPN MAC route that carries the second VNI) and sends the EVPN MAC routes to the third communication apparatus. Therefore, after receiving the VXLAN packet from the VXLAN, the first communication apparatus may first determine the EVPN instance based on the VNI carried in the VXLAN packet (for example, determining the first EVPN instance based on the first VNI or determining the second EVPN instance based on the second VΓΠ), to determine the forwarding entry of the layer 2 packet by using a corresponding EVPN instance and to complete VXLAN encapsulation and forwarding of the layer 2 packet.

In a possible design, the method further includes: The first communication apparatus records a correspondence between the first VNI and the first SRv6 SID.

In the foregoing design, the correspondence between the first VNI and the first SRv6 SID is recorded, so that the first communication apparatus can quickly determine the first SRv6 SID corresponding to the first VNI. Further, after receiving the VXLAN packet from the VXLAN, the first communication apparatus may first quickly determine the first SRv6 SID based on the first VNI carried in the VXLAN packet, and complete encapsulation of the VXLAN packet based on the first VNI for forwarding.

In a possible design, the method further includes: The first communication apparatus receives a fifth EVPN MAC route, where the fifth EVPN MAC route carries a third MAC address and the first SRv6 SID. The first communication apparatus generates a sixth EVPN MAC route based on the fifth EVPN MAC route, where the sixth EVPN MAC route carries the third MAC address and a third VNI corresponding to the first SRv6 SID. The first communication apparatus sends the sixth EVPN MAC route to the third communication apparatus.

According to the foregoing design, after receiving EVPN MAC routes corresponding to different MAC addresses (that is, the first EVPN MAC route corresponding to the first MAC address and the fifth EVPN MAC route corresponding to the third MAC address), the first communication apparatus separately generates EVPN MAC routes that carry different VNIs (that is, the second EVPN MAC route that carries the first VNI and the sixth EVPN MAC route that carries the third VNI) and sends the EVPN MAC routes to the third communication apparatus. Therefore, different MAC addresses may correspond to different SIDs. In this way, on one hand, on the SRv6 network, the different SIDs can be used to transmit layer 2 packets from the different MAC addresses, to facilitate load balancing; and on the other hand, on the SRv6 network, a destination address of the SRv6 packet can be determined based on the SID carried in the SRv6 packet, to facilitate network management and maintenance.

In a possible design, the method further includes: The first communication apparatus receives a seventh EVPN MAC route from a fourth communication apparatus, where the seventh EVPN MAC route carries the first MAC address and the first SRv6 SID. The first communication apparatus generates an eighth EVPN MAC route based on the seventh EVPN MAC route, where the eighth EVPN MAC route carries the first MAC address and a fourth VNI corresponding to the first SRv6 SID. The first communication apparatus sends the eighth EVPN MAC route to the third communication apparatus

According to the foregoing design, after receiving EVPN MAC routes corresponding to different next-hop information (that is, the first EVPN MAC route whose corresponding next hop is the second communication apparatus and the seventh EVPN MAC route whose corresponding next hop is the fourth communication apparatus), the first communication apparatus separately generates EVPN MAC routes that carry different SRv6 SIDs (that is, the second EVPN MAC route that carries the first SRv6 SID and the eighth EVPN MAC route that carries the fourth SRv6 SID) and sends the EVPN MAC routes to the third communication apparatus. Therefore, different next-hop nodes may correspond to different SIDs. In this way, on one hand, on the SRv6 network, the different SIDs can be used to transmit layer 2 packets to the different next-hop nodes, to facilitate load balancing; and on the other hand, on the SRv6 network, a next-hop node of the layer 2 packet after the SRv6 packet is transmitted to the first communication apparatus may be determined based on the SID carried in the SRv6 packet, to facilitate network management and maintenance.

In a possible design, the method further includes: The first communication apparatus receives a first VXLAN packet that is from the third communication apparatus and that includes the first VΓΠ, where the first VXLAN packet includes a first layer 2 packet whose destination address is the first MAC address. The first communication apparatus determines the first SRv6 SID based on the first VNI. The first communication apparatus performs SRv6 encapsulation on the first layer 2 packet to obtain a first SRv6 packet, where the first SRv6 packet includes the first SRv6 SID. The first communication apparatus forwards the first SRv6 packet to the second communication apparatus.

In this design, when the first communication apparatus receives a VXLAN packet that carries the first VNI from the VXLAN, the communication apparatus can decapsulate the VXLAN packet to obtain a layer 2 packet, and re-encapsulate the layer 2 packet as an SRv6 packet including the first SRv6 SID, to implement forwarding of the layer 2 packet by using the SRv6 network. In this way, interconnection between the VXLAN and the SRv6 network is implemented.

In a possible design, that the first communication apparatus determines the first SRv6 SID based on the first VNI includes: The first communication apparatus determines the first EVPN instance based on the first VNI. The first communication apparatus determines, based on the first MAC address, the first SRv6 SID from the MAC table corresponding to the first EVPN instance, where the MAC table includes the correspondence between the first MAC address and the first SRv6 SID.

According to the foregoing design, when the first communication apparatus receives, from the VXLAN, the VXLAN packet that carries the first VΓΠ, after the first communication apparatus determines the first EVPN instance based on the first VΓΠ, the first communication apparatus may find the correspondence between the first MAC address and the first SRv6 SID from the MAC table corresponding to the first EVPN instance, to determine the first SRv6 SID, and to encapsulate the layer 2 packet into the SRv6 packet that carries the first SRv6 SID for forwarding, thereby completing forwarding of the layer 2 packet.

In a possible design, the method further includes: The first communication apparatus receives a second VXLAN packet that is from the third communication apparatus and that includes the second VΓΠ, where the second VXLAN packet includes a second layer 2 packet whose destination address is the second MAC address. The first communication apparatus determines a second EVPN instance based on the second VNI. The first communication apparatus determines, based on the second MAC address, the second SRv6 SID from a MAC table corresponding to the second EVPN instance, where the MAC table includes a correspondence between the second MAC address and the second SRv6 SID. The first communication apparatus performs SRv6 encapsulation on the second layer 2 packet to obtain a second SRv6 packet, where the second SRv6 packet includes the second SRv6 SID. The first communication apparatus forwards the second SRv6 packet.

In the foregoing design, after receiving, from the VXLAN, SRv6 packets that carry different VNIs (for example, the first VXLAN packet that carries the first VNI and the second VXLAN packet that carries the second VΓΠ), the first communication apparatus may first determine the EVPN instance based on the VNI carried in the VXLAN packet (for example, determining the first EVPN instance based on the first VNI or determining the second EVPN instance based on the second VΓΠ), to determine the forwarding entry of the layer 2 packet by using a corresponding EVPN instance and to complete VXLAN encapsulation and forwarding of the layer 2 packet.

In a possible design, that the first communication apparatus determines the first SRv6 SID based on the first VNI includes: The first communication apparatus determines the first SRv6 SID based on the first VNI and the correspondence that is between the first VNI and the first SRv6 SID and that is recorded in the first communication apparatus.

According to the foregoing design, the first communication apparatus can quickly determine the first SRv6 SID corresponding to the first VNI. Further, after receiving the VXLAN packet from the VXLAN, the first communication apparatus may first quickly determine the first SRv6 SID based on the first VNI carried in the VXLAN packet, and complete encapsulation of the SRv6 packet based on the first SRv6 SID for forwarding.

In a possible design, the method further includes: The first communication apparatus receives a third VXLAN packet that is from the third communication apparatus and that includes the third VNI, where the third VXLAN packet includes a third layer 2 packet whose destination address is the third MAC address. The first communication apparatus determines the first SRv6 SID based on the third VNI and a correspondence that is between the third VNI and the first SRv6 SID and that is recorded in the first communication apparatus. The first communication apparatus performs SRv6 encapsulation on the third layer 2 packet to obtain a third SRv6 packet, where the third SRv6 packet includes the first SRv6 SID. The first communication apparatus forwards the third SRv6 packet to the second communication apparatus.

According to the foregoing design, after receiving VXLAN packets corresponding to different MAC addresses and different VNIs (that is, the first VXLAN packet corresponding to the first MAC address and the third VXLAN packet corresponding to the third MAC address, where the different MAC addresses correspond to different VNIs), the first communication apparatus may separately determine the SRv6 SIDs based on the different VNIs carried in the VXLAN packets and encapsulate the SRv6 packet. The different MAC addresses correspond to the different VNIs. Therefore, on one hand, on the VXLAN, the different VNIs can be used to transmit layer 2 packets from the different MAC addresses, to facilitate load balancing; and on the other hand, on the VXLAN, a destination address of the VXLAN packet can be determined based on the VNI carried in the VXLAN packet, to facilitate network management and maintenance.

In a possible design, the method further includes: The first communication apparatus receives a fourth VXLAN packet that is from the third communication apparatus and that includes the fourth VΓΠ, where the fourth VXLAN packet includes a fourth layer 2 packet whose destination address is the first MAC address. The first communication apparatus determines the first SRv6 SID based on the fourth VNI and a correspondence that is between the fourth VNI and the first SRv6 SID and that is recorded in the first communication apparatus. The first communication apparatus performs SRv6 encapsulation on the fourth layer 2 packet to obtain a fourth SRv6 packet, where the fourth SRv6 packet includes the first SRv6 SID. The first communication apparatus forwards the fourth SRv6 packet to the fourth communication apparatus.

According to the foregoing design, after receiving VXLAN packets corresponding to different next-hop nodes and different VNIs (that is, the first VXLAN packet corresponding to the second communication apparatus and the third VXLAN packet corresponding to the fourth communication apparatus, where the different MAC addresses correspond to different SRv6 SIDs), the first communication apparatus may separately determine the first SRv6 SID based on the different VNIs carried in the VXLAN packet and encapsulate the VXLAN packet. The different next hops correspond to the different VNIs. Therefore, on one hand, on the SRv6 network, the different VNIs can be used to transmit layer 2 packets, to facilitate load balancing; and on the other hand, on the VXLAN, a next-hop node of the layer 2 packet after the VXLAN packet is transmitted to the first communication apparatus may be determined based on the VNI carried in the VXLAN packet, to facilitate network management and maintenance.

In a possible design, both the first communication apparatus and the second communication apparatus each are a data center gateway.

According to a fourth aspect, a communication method is provided. The method includes: A first communication apparatus receives a first virtual extensible local area network VXLAN packet that is from a second communication apparatus and that includes a first virtual extensible local area network identifier VΓΠ, where the first VXLAN packet includes a first layer 2 packet whose destination address is a first media access control MAC address. The first communication apparatus determines a first segment routing over IPv6 segment identifier SRv6 SID based on the first VNI. The first communication apparatus performs SRv6 encapsulation on the first layer 2 packet to obtain a first SRv6 packet, where the first SRv6 packet includes the first SRv6 SID. The first communication apparatus forwards the first SRv6 packet to a third communication apparatus.

In this design, when the first communication apparatus receives a VXLAN packet that carries the first VNI from the VXLAN, the communication apparatus can decapsulate the VXLAN packet to obtain a layer 2 packet, and re-encapsulate the layer 2 packet as an SRv6 packet including the first SRv6 SID, to implement forwarding of the layer 2 packet by using the SRv6 network. In this way, interconnection between the VXLAN and the SRv6 network is implemented.

In a possible design, the first VNI is a VNI allocated to a first Ethernet virtual private network EVPN instance of the first communication apparatus.

According to the foregoing design, when the first communication apparatus receives, from the VXLAN, the VXLAN packet that carries the first VNI, the first communication apparatus may first determine the first EVPN instance based on the first VNI, and may further determine a forwarding entry corresponding to the layer 2 packet by using the first EVPN instance, to complete forwarding of the layer 2 packet.

In a possible design, that the first communication apparatus determines a first segment routing over IPv6 segment identifier SRv6 SID based on the first VNI includes: The first communication apparatus determines the first EVPN instance based on the first VΓΠ; and the first communication apparatus determines, based on the first MAC address, the first SRv6 SID from a MAC table corresponding to the first EVPN instance, where the MAC table includes a correspondence between the first MAC address and the first SRv6 SID.

According to the foregoing design, when the first communication apparatus receives, from the VXLAN, the VXLAN packet that carries the first VΓΠ, after the first communication apparatus determines the first EVPN instance based on the first VΓΠ, the first communication apparatus may find the correspondence between the first MAC address and the first SRv6 SID from the MAC table corresponding to the first EVPN instance, to determine the first SRv6 SID, and to encapsulate the layer 2 packet into the SRv6 packet that carries the first SRv6 SID for forwarding, thereby completing forwarding of the layer 2 packet.

In a possible design, the method further includes: The first communication apparatus receives a second VXLAN packet that is from the second communication apparatus and that includes a second VΓΠ, where the second VXLAN packet includes a second layer 2 packet whose destination address is a second MAC address; the first communication apparatus determines a second EVPN instance based on the second VNI; the first communication apparatus determines, based on the second MAC address, a second SRv6 SID from a MAC table corresponding to the second EVPN instance, where the MAC table includes a correspondence between the second MAC address and the second SRv6 SID; the first communication apparatus performs SRv6 encapsulation on the second layer 2 packet to obtain a second SRv6 packet, where the second SRv6 packet includes the second SRv6 SID; and the first communication apparatus forwards the second SRv6 packet.

In the foregoing design, after receiving, from the VXLAN, SRv6 packets that carry different VNIs (for example, the first VXLAN packet that carries the first VNI and the second VXLAN packet that carries the second VΓΠ), the first communication apparatus may first determine the EVPN instance based on the VNI carried in the VXLAN packet (for example, determining the first EVPN instance based on the first VNI or determining the second EVPN instance based on the second VΓΠ), to determine the forwarding entry of the layer 2 packet by using a corresponding EVPN instance and to complete VXLAN encapsulation and forwarding of the layer 2 packet.

In a possible design, that the first communication apparatus determines a first segment routing over IPv6 segment identifier SRv6 SID based on the first VNI includes: The first communication apparatus determines the first SRv6 SID based on the first VNI and a correspondence that is between the first VNI and the first SRv6 SID and that is recorded in the first communication apparatus.

According to the foregoing design, the first communication apparatus can quickly determine the first SRv6 SID corresponding to the first VNI. Further, after receiving the VXLAN packet from the VXLAN, the first communication apparatus may first quickly determine the first SRv6 SID based on the first VNI carried in the VXLAN packet, and complete encapsulation of the SRv6 packet based on the first SRv6 SID for forwarding.

In a possible design, the method further includes: The first communication apparatus receives a third VXLAN packet that is from the second communication apparatus and that includes a third VΓΠ, where the third VXLAN packet includes a third layer 2 packet whose destination address is a third MAC address; the first communication apparatus determines the first SRv6 SID based on the third VNI and a correspondence that is between the third VNI and the first SRv6 SID and that is recorded in the first communication apparatus; the first communication apparatus performs SRv6 encapsulation on the third layer 2 packet to obtain a third SRv6 packet, where the third SRv6 packet includes the first SRv6 SID; and the first communication apparatus forwards the third SRv6 packet to the third communication apparatus.

According to the foregoing design, after receiving VXLAN packets corresponding to different MAC addresses and different VNIs (that is, the first VXLAN packet corresponding to the first MAC address and the third VXLAN packet corresponding to the third MAC address, where the different MAC addresses correspond to different VNIs), the first communication apparatus may separately determine the SRv6 SIDs based on the different VNIs carried in the VXLAN packets and encapsulate the SRv6 packet. The different MAC addresses correspond to the different VNIs. Therefore, on one hand, on the VXLAN, the different VNIs can be used to transmit layer 2 packets from the different MAC addresses, to facilitate load balancing; and on the other hand, on the VXLAN, a destination address of the VXLAN packet can be determined based on the VNI carried in the VXLAN packet, to facilitate network management and maintenance.

In a possible design, the method further includes: The first communication apparatus receives a fourth VXLAN packet that is from the second communication apparatus and that includes the fourth VΓΠ, where the fourth VXLAN packet includes a fourth layer 2 packet whose destination address is the first MAC address; the first communication apparatus determines the first SRv6 SID based on the fourth VNI and a correspondence that is between the fourth VNI and the first SRv6 SID and that is recorded in the first communication apparatus; the first communication apparatus performs SRv6 encapsulation on the fourth layer 2 packet to obtain a fourth SRv6 packet, where the fourth SRv6 packet includes the first SRv6 SID; and the first communication apparatus forwards the fourth SRv6 packet to a fourth communication apparatus.

According to the foregoing design, after receiving VXLAN packets corresponding to different next-hop nodes and different VNIs (that is, the first VXLAN packet corresponding to the third communication apparatus and the third VXLAN packet corresponding to the fourth communication apparatus, where the different MAC addresses correspond to different SRv6 SIDs), the first communication apparatus may separately determine the first SRv6 SID based on the different VNIs carried in the VXLAN packet and encapsulate the VXLAN packet. The different next hops correspond to the different VNIs. Therefore, on one hand, on the SRv6 network, the different VNIs can be used to transmit layer 2 packets, to facilitate load balancing; and on the other hand, on the VXLAN, a next-hop node of the layer 2 packet after the VXLAN packet is transmitted to the first communication apparatus may be determined based on the VNI carried in the VXLAN packet, to facilitate network management and maintenance.

In a possible design, both the first communication apparatus and the third communication apparatus each are a data center gateway.

According to a fifth aspect, this application provides a first communication apparatus, configured to implement the method performed by the first communication apparatus in the first aspect and any one of the possible implementations. Specifically, the first communication apparatus includes a transceiver unit and a processing unit. The transceiver unit is configured to perform the receiving operation and/or the sending operation performed by the first communication apparatus, and the processing unit is configured to perform an operation other than the operation performed by the transceiver unit.

In a possible design, the transceiver unit is configured to receive a first Ethernet virtual private network media access control EVPN MAC route from a second communication apparatus, where the first EVPN MAC route carries a first MAC address and a first virtual extensible local area network identifier VNI. The processing unit is configured to generate a second EVPN MAC route based on the first EVPN MAC route, where the second EVPN MAC route carries the first MAC address and a first segment routing over IPv6 segment identifier SRv6 SID that is of the first communication apparatus and that corresponds to the first VNI. The transceiver unit is further configured to send the second EVPN MAC route to a third communication apparatus.

In a possible design, the first SRv6 SID is an SRv6 SID allocated to a first Ethernet virtual private network EVPN instance of the first communication apparatus.

In a possible design, a MAC table corresponding to the first EVPN instance includes a correspondence between the first MAC address and the first VNI.

In a possible design, the transceiver unit is further configured to receive a third EVPN MAC route, where the third EVPN MAC route carries a second MAC address and a second VΓΠ, and the third EVPN MAC route corresponds to a second EVPN instance of the first communication apparatus; the processing unit is further configured to generate a fourth EVPN MAC route based on the third EVPN MAC route, where the fourth EVPN MAC route carries the second MAC address and a second SRv6 SID, and the second SRv6 SID is an SRv6 SID allocated to the second EVPN instance; and the transceiver unit is further configured to send the fourth EVPN MAC route to the third communication apparatus.

In a possible design, the processing unit is further configured to record, by the first communication apparatus, a correspondence between the first SRv6 SID and the first VNI.

In a possible design, the first SRv6 SID is associated with a first operation, and the first operation is performing virtual extensible local area network VXLAN encapsulation.

In a possible design, the transceiver unit is further configured to receive a fifth EVPN MAC route, where the fifth EVPN MAC route carries a third MAC address and the first VΓΠ; the processing unit is further configured to generate a sixth EVPN MAC route based on the fifth EVPN MAC route, where the sixth EVPN MAC route carries the third MAC address and a third SRv6 SID corresponding to the first VNI; and the first communication apparatus sends the sixth EVPN MAC route to the third communication apparatus.

In a possible design, the transceiver unit is further configured to receive a seventh EVPN MAC route from a fourth communication apparatus, where the seventh EVPN MAC route carries the first MAC address and the first VNI; the processing unit is further configured to generate an eighth EVPN MAC route based on the seventh EVPN MAC route, where the eighth EVPN MAC route carries the first MAC address and a fourth SRv6 SID corresponding to the first VNI; and the transceiver unit is further configured to send the eighth EVPN MAC route to the third communication apparatus.

In a possible design, the transceiver unit is further configured to receive a first SRv6 packet whose destination address is the first SRv6 SID from the third communication apparatus, where the SRv6 packet includes a first layer 2 packet whose destination address is the first MAC address; the processing unit is further configured to determine the first VNI based on the first SRv6 SID; the processing unit is further configured to perform VXLAN encapsulation on the first layer 2 packet to obtain a first VXLAN packet, where the first VXLAN packet includes the first VNI; and the transceiver unit is further configured to forward the first VXLAN packet to the second communication apparatus.

In a possible design, that the processing unit is further configured to determine the first VNI based on the first SRv6 SID includes: The processing unit is further configured to determine the first EVPN instance based on the first SRv6 SID; and the processing unit is further configured to determine, based on the first MAC address, the first VNI from the MAC table corresponding to the first EVPN instance, where the MAC table includes the correspondence between the first MAC address and the first VNI.

In a possible design, the processing unit is further configured to receive a second SRv6 packet whose destination address is the second SRv6 SID from the third communication apparatus, where the second SRv6 packet includes a second layer 2 packet whose destination address is the second MAC address; the processing unit is further configured to determine the second EVPN instance based on the second SRv6 SID; the processing unit is further configured to determine, based on the second MAC address, the second VNI from a MAC table corresponding to the second EVPN instance, where the MAC table includes a correspondence between the second MAC address and the second VΓΠ; the first communication apparatus performs VXLAN encapsulation on the second layer 2 packet to obtain a second VXLAN packet, where the second VXLAN packet includes the second VΓΠ; and the transceiver unit is further configured to forward the second VXLAN packet.

In a possible design, that the processing unit is further configured to determine the first VNI based on the first SRv6 SID includes: The processing unit is further configured to determine the first VNI based on the first SRv6 SID and the correspondence that is between the first SRv6 SID and the first VNI and that is recorded in the first communication apparatus.

In a possible design, the transceiver unit is further configured to receive a third SRv6 packet whose destination address is the third SRv6 SID from the third communication apparatus, where the third SRv6 packet includes a third layer 2 packet whose destination address is the third MAC address; the processing unit is further configured to determine the first VNI based on the third SRv6 SID and a correspondence that is between the third SRv6 SID and the first VNI and that is recorded in the first communication apparatus; the processing unit is further configured to perform VXLAN encapsulation on the third layer 2 packet to obtain a third VXLAN packet, where the third VXLAN packet includes the first VΓΠ; and the transceiver unit is further configured to forward the third VXLAN packet to the second communication apparatus.

In a possible design, the transceiver unit is further configured to receive a fourth SRv6 packet whose destination address is the fourth SRv6 SID from the third communication apparatus, where the fourth SRv6 packet includes a fourth layer 2 packet whose destination address is the first MAC address; the processing unit is further configured to determine the first VNI based on the fourth SRv6 SID and a correspondence that is between the fourth SRv6 SID and the first VNI and that is recorded in the first communication apparatus; the processing unit is further configured to perform VXLAN encapsulation on the fourth layer 2 packet to obtain a fourth VXLAN packet, where the fourth VXLAN packet includes the first VNI; and the transceiver unit is further configured to forward the fourth VXLAN packet to the fourth communication apparatus.

In a possible design, both the first communication apparatus and the second communication apparatus each are a data center gateway.

According to a sixth aspect, this application provides a first communication apparatus, configured to implement the method performed by the first communication apparatus in the second aspect and any one of the possible implementations. Specifically, the first communication apparatus includes a transceiver unit and a processing unit. The transceiver unit is configured to perform the receiving operation and/or the sending operation performed by the first communication apparatus, and the processing unit is configured to perform an operation other than the operation performed by the transceiver unit.

In a possible design, the transceiver unit is configured to receive a first SRv6 packet whose destination address is a first segment routing over IPv6 segment identifier SRv6 SID from a second communication apparatus, where the first SRv6 packet includes a first layer 2 packet whose destination address is a first media access control MAC address; the processing unit is configured to determine a first virtual extensible local area network identifier VNI based on the first SRv6 SID; the processing unit is further configured to perform virtual extensible local area network VXLAN encapsulation on the first layer 2 packet to obtain a first VXLAN packet, where the first VXLAN packet includes the first VΓΠ; and the transceiver unit is further configured to forward the first VXLAN packet to a third communication apparatus.

In a possible design, the first SRv6 SID is an SRv6 SID allocated to a first Ethernet virtual private network EVPN instance of the first communication apparatus.

In a possible design, that the processing unit is configured to determine the first VNI based on the first SRv6 SID includes: The processing unit is configured to determine the first EVPN instance based on the first SRv6 SID; the processing unit is configured to determine, based on the first MAC address, the first VNI from a MAC table corresponding to the first EVPN instance, where the MAC table includes a correspondence between the first MAC address and the first VNI.

In a possible design, the transceiver unit is further configured to receive a second SRv6 packet whose destination address is a second SRv6 SID from the second communication apparatus, where the second SRv6 packet includes a second layer 2 packet whose destination address is a second MAC address; the processing unit is further configured to determine a second EVPN instance based on the second SRv6 SID; the processing unit is further configured to determine, based on the second MAC address, a second VNI from a MAC table corresponding to the second EVPN instance, where the MAC table includes a correspondence between the second MAC address and the second VΓΠ; the processing unit is further configured to perform VXLAN encapsulation on the second layer 2 packet to obtain a second VXLAN packet, where the second VXLAN packet includes the second VΓΠ; and the transceiver unit is further configured to forward the second VXLAN packet.

In a possible design, that the processing unit is configured to determine the first VNI based on the first SRv6 SID includes: The processing unit is configured to determine the first VNI based on the first SRv6 SID and a correspondence that is between the first SRv6 SID and the first VNI and that is recorded in the first communication apparatus.

In a possible design, the first SRv6 SID is associated with a first operation, and the first operation is performing VXLAN encapsulation.

In a possible design, the transceiver unit is further configured to receive a third SRv6 packet whose destination address is a third SRv6 SID from the second communication apparatus, where the third SRv6 packet includes a third layer 2 packet whose destination address is a third MAC address; the processing unit is further configured to determine the first VNI based on the third SRv6 SID and a correspondence that is between the third SRv6 SID and the first VNI and that is recorded in the first communication apparatus; the processing unit is further configured to perform VXLAN encapsulation on the third layer 2 packet to obtain a third VXLAN packet, where the third VXLAN packet includes the first VΓΠ; and the transceiver unit is further configured to forward the third VXLAN packet to the third communication apparatus.

In a possible design, the transceiver unit is further configured to receive a fourth SRv6 packet whose destination address is a fourth SRv6 SID from the second communication apparatus, where the fourth SRv6 packet includes a fourth layer 2 packet whose destination address is the first MAC address; the processing unit is further configured to determine the first VNI based on the fourth SRv6 SID and a correspondence that is between the fourth SRv6 SID and the first VNI and that is recorded in the first communication apparatus; the processing unit is further configured to perform VXLAN encapsulation on the fourth layer 2 packet to obtain a fourth VXLAN packet, where the fourth VXLAN packet includes the first VNI; and the transceiver unit is further configured to forward the fourth VXLAN packet to a fourth communication apparatus.

In a possible design, both the first communication apparatus and the third communication apparatus each are a data center gateway.

According to a seventh aspect, this application provides a first communication apparatus, configured to implement the method performed by the first communication apparatus in the third aspect and any one of the possible implementations. Specifically, the first communication apparatus includes a transceiver unit and a processing unit. The transceiver unit is configured to perform the receiving operation and/or the sending operation performed by the first communication apparatus, and the processing unit is configured to perform an operation other than the operation performed by the transceiver unit.

In a possible design, the transceiver unit is configured to receive a first Ethernet virtual private network media access control EVPN MAC route from a second communication apparatus, where the first EVPN MAC route carries a first MAC address and a first SRv6 SID; the processing unit is configured to generate a second EVPN MAC route based on the first EVPN MAC route, where the second EVPN MAC route carries the first MAC address and a first virtual extensible local area network identifier VNI corresponding to the first SRv6 SID; and the transceiver unit is further configured to send the second EVPN MAC route to a third communication apparatus.

In a possible design, the first VNI is a VNI allocated to a first Ethernet virtual private network EVPN instance of the first communication apparatus.

In a possible design, a MAC table corresponding to the first EVPN instance includes a correspondence between the first MAC address and the first SRv6 SID.

In a possible design, the transceiver unit is further configured to receive a third EVPN MAC route, where the third EVPN MAC route carries a second MAC address and a second SRv6 SID, and the third EVPN MAC route corresponds to a second EVPN instance; the processing unit is further configured to generate a fourth EVPN MAC route based on the third EVPN MAC route, where the fourth EVPN MAC route carries the second MAC address and a second VΓΠ, and the second VNI is a VNI allocated to the second EVPN instance; and the transceiver unit is further configured to send the fourth EVPN MAC route to the third communication apparatus.

In a possible design, the processing unit is further configured to record a correspondence between the first VNI and the first SRv6 SID.

In a possible design, the transceiver unit is further configured to receive a fifth EVPN MAC route, where the fifth EVPN MAC route carries a third MAC address and the first SRv6 SID; the processing unit is further configured to generate a sixth EVPN MAC route based on the fifth EVPN MAC route, where the sixth EVPN MAC route carries the third MAC address and a third VNI corresponding to the first SRv6 SID; and the transceiver unit is further configured to send the sixth EVPN MAC route to the third communication apparatus.

In a possible design, the transceiver unit is further configured to receive a seventh EVPN MAC route from a fourth communication apparatus, where the seventh EVPN MAC route carries the first MAC address and the first SRv6 SID; the processing unit is further configured to generate an eighth EVPN MAC route based on the seventh EVPN MAC route, where the eighth EVPN MAC route carries the first MAC address and a fourth VNI corresponding to the first SRv6 SID; and the transceiver unit is further configured to send the eighth EVPN MAC route to the third communication apparatus.

In a possible design, the transceiver unit is further configured to receive a first VXLAN packet that is from the third communication apparatus and that includes the first VΓΠ, where the first VXLAN packet includes a first layer 2 packet whose destination address is the first MAC address; the processing unit is further configured to generate the first SRv6 SID based on the first VNI; the processing unit is further configured to perform SRv6 encapsulation on the first layer 2 packet to obtain a first SRv6 packet, where the first SRv6 packet includes the first SRv6 SID; and the transceiver unit is further configured to forward the first SRv6 packet to the second communication apparatus.

In a possible design, that the processing unit is further configured to determine the first SRv6 SID based on the first VNI includes: The processing unit is further configured to determine the first EVPN instance based on the first VNI; and the processing unit is further configured to determine, based on the first MAC address, the first SRv6 SID from the MAC table corresponding to the first EVPN instance, where the MAC table includes the correspondence between the first MAC address and the first SRv6 SID.

In a possible design, the transceiver unit is further configured to receive a second VXLAN packet that is from the third communication apparatus and that includes the second VΓΠ, where the second VXLAN packet includes a second layer 2 packet whose destination address is the second MAC address; the processing unit is further configured to determine a second EVPN instance based on the second VΓΠ; the processing unit is further configured to determine, based on the second MAC address, the second SRv6 SID from a MAC table corresponding to the second EVPN instance, where the MAC table includes a correspondence between the second MAC address and the second SRv6 SID; the processing unit is further configured to perform SRv6 encapsulation on the second layer 2 packet to obtain a second SRv6 packet, where the second SRv6 packet includes the second SRv6 SID; and the transceiver unit is further configured to forward the second SRv6 packet.

In a possible design, that the processing unit is further configured to determine the first SRv6 SID based on the first VNI includes: The processing unit is further configured to determine the first SRv6 SID based on the first VNI and the correspondence that is between the first VNI and the first SRv6 SID and that is recorded in the first communication apparatus.

In a possible design, the transceiver unit is further configured to receive a third VXLAN packet that is from the third communication apparatus and that includes the third VΓΠ, where the third VXLAN packet includes a third layer 2 packet whose destination address is the third MAC address; the processing unit is further configured to determine the first SRv6 SID based on the third VNI and a correspondence that is between the third VNI and the first SRv6 SID and that is recorded in the first communication apparatus; the processing unit is further configured to perform SRv6 encapsulation on the third layer 2 packet to obtain a third SRv6 packet, where the third SRv6 packet includes the first SRv6 SID; and the transceiver unit is further configured to forward the third SRv6 packet to the second communication apparatus.

In a possible design, the transceiver unit is further configured to receive a fourth VXLAN packet that is from the third communication apparatus and that includes the fourth VNI, where the fourth VXLAN packet includes a fourth layer 2 packet whose destination address is the first MAC address; the processing unit is further configured to determine the first SRv6 SID based on the fourth VNI and a correspondence that is between the fourth VNI and the first SRv6 SID and that is recorded in the first communication apparatus; the processing unit is further configured to perform SRv6 encapsulation on the fourth layer 2 packet to obtain a fourth SRv6 packet, where the fourth SRv6 packet includes the first SRv6 SID; and the transceiver unit is further configured to forward the fourth SRv6 packet to the fourth communication apparatus.

In a possible design, both the first communication apparatus and the second communication apparatus each are a data center gateway.

According to an eighth aspect, this application provides a first communication apparatus, configured to implement the method performed by the first communication apparatus in the fourth aspect and any one of the possible implementations. Specifically, the first communication apparatus includes a transceiver unit and a processing unit. The transceiver unit is configured to perform the receiving operation and/or the sending operation performed by the first communication apparatus, and the processing unit is configured to perform an operation other than the operation performed by the transceiver unit.

In a possible design, the transceiver unit is configured to receive a first virtual extensible local area network VXLAN packet that is from a second communication apparatus and that includes a first virtual extensible local area network identifier VΓΠ, where the first VXLAN packet includes a first layer 2 packet whose destination address is a first media access control MAC address; the processing unit is configured to determine a first segment routing over IPv6 segment identifier SRv6 SID based on the first VNI; the processing unit is further configured to perform SRv6 encapsulation on the first layer 2 packet to obtain a first SRv6 packet, where the first SRv6 packet includes the first SRv6 SID; and the transceiver unit is further configured to forward the first SRv6 packet to a third communication apparatus.

In a possible design, the first VNI is a VNI allocated to a first Ethernet virtual private network EVPN instance of the first communication apparatus.

In a possible design, that the processing unit is configured to determine the first segment routing over IPv6 segment identifier SRv6 SID based on the first VNI includes: The processing unit is configured to determine the first EVPN instance based on the first VNI; and the processing unit is configured to determine, based on the first MAC address, the first SRv6 SID from a MAC table corresponding to the first EVPN instance, where the MAC table includes a correspondence between the first MAC address and the first SRv6 SID.

In a possible design, the transceiver unit is further configured to receive a second VXLAN packet that is from the second communication apparatus and that includes a second VΓΠ, where the second VXLAN packet includes a second layer 2 packet whose destination address is a second MAC address; the processing unit is further configured to determine a second EVPN instance based on the second VΓΠ; the processing unit is further configured to determine, based on the second MAC address, a second SRv6 SID from a MAC table corresponding to the second EVPN instance, where the MAC table includes a correspondence between the second MAC address and the second SRv6 SID; the processing unit is further configured to perform SRv6 encapsulation on the second layer 2 packet to obtain a second SRv6 packet, where the second SRv6 packet includes the second SRv6 SID; and the transceiver unit is further configured to forward the second SRv6 packet.

In a possible design, that the processing unit is configured to determine the first segment routing over IPv6 segment identifier SRv6 SID based on the first VNI includes: The processing unit is configured to determine the first SRv6 SID based on the first VNI and a correspondence that is between the first VNI and the first SRv6 SID and that is recorded in the first communication apparatus.

In a possible design, the transceiver unit is further configured to receive a third VXLAN packet that is from the second communication apparatus and that includes a third VΓΠ, where the third VXLAN packet includes a third layer 2 packet whose destination address is a third MAC address; the processing unit is further configured to determine the first SRv6 SID based on the third VNI and a correspondence that is between the third VNI and the first SRv6 SID and that is recorded in the first communication apparatus; the processing unit is further configured to perform SRv6 encapsulation on the third layer 2 packet to obtain a third SRv6 packet, where the third SRv6 packet includes the first SRv6 SID; and the transceiver unit is further configured to forward the third SRv6 packet to the third communication apparatus.

In a possible design, the transceiver unit is further configured to receive a fourth VXLAN packet that is from the second communication apparatus and that includes the fourth VΓΠ, where the fourth VXLAN packet includes a fourth layer 2 packet whose destination address is the first MAC address; the processing unit is further configured to determine the first SRv6 SID based on the fourth VNI and a correspondence that is between the fourth VNI and the first SRv6 SID and that is recorded in the first communication apparatus; the processing unit is further configured to perform SRv6 encapsulation on the fourth layer 2 packet to obtain a fourth SRv6 packet, where the fourth SRv6 packet includes the first SRv6 SID; and the transceiver unit is further configured to forward the fourth SRv6 packet to a fourth communication apparatus.

In a possible design, both the first communication apparatus and the third communication apparatus each are a data center gateway.

According to a ninth aspect, a communication apparatus is provided, including a processor and an interface. The processor receives or sends data through the interface, and the processor is configured to implement the method according to the first aspect or any design in the first aspect, the second aspect or any design in the second aspect, the third aspect or any design in the third aspect, or the fourth aspect or any design in the fourth aspect.

According to a tenth aspect, a communication system is provided, including a first data center gateway and a second data center gateway. The first data center gateway is configured to implement the method according to the first aspect or any design in the first aspect or the second aspect or any design in the second aspect, and the second data center gateway is configured to implement the method according to the third aspect or any design in the third aspect or the fourth aspect or any design in the fourth aspect.

According to an eleventh aspect, a computer-readable storage medium is provided. The computer-readable storage medium stores instructions, and when the instructions are run on a processor, the method according to the first aspect or any design in the first aspect, the second aspect or any design in the second aspect, the third aspect or any design in the third aspect, or the fourth aspect or any design in the fourth aspect is implemented.

According to a twelfth aspect, a computer program product is provided. The computer program product includes instructions, and when the instructions are run on a processor, the method according to the first aspect or any design in the first aspect, the second aspect or any design in the second aspect, the third aspect or any design in the third aspect, or the fourth aspect or any design in the fourth aspect is implemented.

### BRIEF DESCRIPTION OF DRAWINGS

FIG. 1 is a schematic diagram 1 of a network architecture according to an embodiment of this application;
FIG. 2 is a schematic flowchart 1 of a communication method according to an embodiment of this application;
FIG. 3 is a schematic flowchart 2 of a communication method according to an embodiment of this application;
FIG. 4 is a schematic flowchart 3 of a communication method according to an embodiment of this application;
FIG. 5A and FIG. 5B are a schematic flowchart 4 of a communication method according to an embodiment of this application;
FIG. 6 is a schematic diagram 2 of a network architecture according to an embodiment of this application;
FIG. 7A and FIG. 7B are a schematic flowchart 5 of a communication method according to an embodiment of this application;
FIG. 8A and FIG. 8B are a schematic flowchart 6 of a communication method according to an embodiment of this application;
FIG. 9 is a schematic flowchart 7 of a communication method according to an embodiment of this application;
FIG. 10(a) and FIG. 10(b) are a schematic diagram 3 of a network architecture according to an embodiment of this application;
FIG. 11A and FIG. 11B are a schematic flowchart 8 of a communication method according to an embodiment of this application;
FIG. 12 is a schematic flowchart 9 of a communication method according to an embodiment of this application;
FIG. 13 is a schematic flowchart 10 of a communication method according to an embodiment of this application;
FIG. 14 is a schematic flowchart 11 of a communication method according to an embodiment of this application;
FIG. 15 is a schematic flowchart 12 of a communication method according to an embodiment of this application;
FIG. 16 is a schematic flowchart 13 of a communication method according to an embodiment of this application;
FIG. 17 is a schematic flowchart 14 of a communication method according to an embodiment of this application;
FIG. 18 is a schematic flowchart 15 of a communication method according to an embodiment of this application;
FIG. 19 is a schematic flowchart 16 of a communication method according to an embodiment of this application;
FIG. 20 is a schematic flowchart 17 of a communication method according to an embodiment of this application;
FIG. 21 is a schematic flowchart 18 of a communication method according to an embodiment of this application;
FIG. 22 is a schematic diagram 1 of a structure of a communication apparatus according to an embodiment of this application;
FIG. 23 is a schematic diagram 2 of a structure of a communication apparatus according to an embodiment of this application; and
FIG. 24 is a schematic diagram 3 of a structure of a communication apparatus according to an embodiment of this application.

### DESCRIPTION OF EMBODIMENTS

The following describes the technical solutions in embodiments of this application with reference to the accompanying drawings in embodiments of this application. To clearly describe the technical solutions in embodiments of this application, terms such as "first" and "second" are used in embodiments of this application to distinguish between same items or similar items that have basically the same functions or purposes. Persons skilled in the art may understand that the terms such as "first" and "second" do not constitute a limitation on a quantity or an execution sequence, and that the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

First, related technologies in embodiments of this application are described.
1. Virtual extensible local area network (virtual extensible local area network, VXLAN) is a virtual network technology that overlays a layer 2 network on a layer 3 network. Currently, the VXLAN is usually used in a data center to implement interconnection between tenants.
   The layer 2 network is a network constructed by a core layer and an access layer. The layer 2 network is usually used to implement communication through media access control (media access control, MAC) addressing in a same collision domain. The layer 3 network is a network that includes a core layer, an aggregation layer, and an access layer. The layer 3 network may cross a plurality of collision domains to implement cross-network segment communication by using an internet protocol (Internet protocol, IP) route.
   Based on an existing IP network, the VXLAN can provide layer 2 interconnection for distributed physical sites and isolate services of different tenants. Specifically, in the VXLAN, a VXLAN tunnel (VXLAN tunnel) may be established on a layer 3 network between VXLAN tunnel endpoints (VXLAN tunnel endpoints, VTEPs), and layer 2 network-based interconnection may be performed, through the VXLAN tunnel, on tenants corresponding to a same virtual extensible local area network identifier (VXLAN identifier, VΓΠ).
2. Segment routing over IPv6 (segment routing over IPv6, SRv6) is an SR technology based on an IPv6 forwarding plane. The SRv6 combines source routing advantages of SR and simplicity and scalability of IPv6, and is increasingly applied to various border gateway protocol (border gateway protocol, BGP) services.
   In the IPv6 network, a segment identifier (segment identifier, SID) is used as an identifier (segment) in a route. The SID includes a location (locator) field used to route and forward a data packet and a function (function) field used to identify a forwarding action performed by the communication apparatus. Therefore, the SRv6 has both routing and MPLS forwarding attributes.
3. Ethernet virtual private network (Ethernet virtual private network, EVPN) is a layer 2 network-based VPN technology. Currently, the EVPN is usually used to transmit MAC routing information and IP routing information, and is used as a control layer of an overlay (overlay) network such as a VXLAN or SRv6.

To facilitate understanding of the technical solutions provided in embodiments of this application, the following describes an application scenario of embodiments of this application.

Currently, an MPLS network is usually used in related technologies to implement interconnection between different data centers. However, as the SRv6 network is increasingly widely used, in this embodiment, if data centers can be interconnected by using the SRv6 network, construction costs of the data centers can be reduced, construction speeds of the data centers can be improved, and the like.

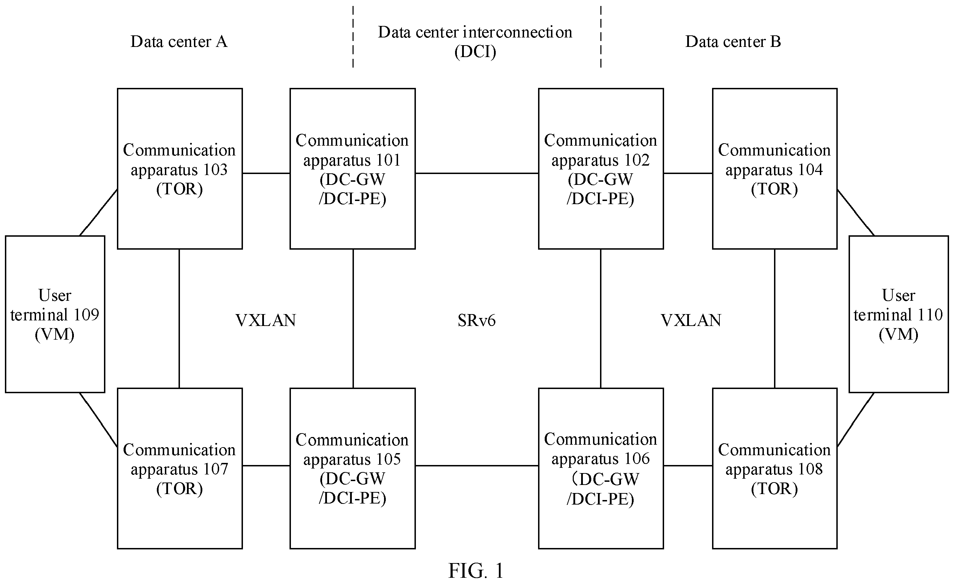

For the foregoing problem, this embodiment provides a network architecture. The SRv6 network may be used to implement interconnection between data centers. FIG. 1 is a schematic diagram of a network architecture according to an embodiment. A data center A and a data center B are included. Data exchange is performed in the data center A and the data center B by using a VXLAN. Data center interconnection (data center interconnect, DCI) is implemented between the data center A and the data center B by using an SRv6 network.

Specifically, the data center A includes a plurality of switches, such as a top of rack (top of rack, TOR) switch, that are configured to establish the VXLAN. For example, a communication apparatus 103 and a communication apparatus 107 are used as examples in the figure.

In the data center, a user terminal can be connected to one or more switches to exchange data with another user terminal in the VXLAN. FIG. 1 is used as an example. A user terminal 109 may implement data exchange with another user terminal in the VXLAN by using a switch such as the communication apparatus 103 or the communication apparatus 107.

When the user terminal is connected to a plurality of switches, different transmission paths corresponding to different switches may be load balanced through load sharing. For example, when communicating with the another user terminal, the user terminal 109 may perform communication through a transmission path corresponding to the communication apparatus 103, or may perform communication through a transmission path corresponding to the communication apparatus 107.

In the data center, the user terminal may be specifically a virtual machine (virtual machine, VM) running on a server or an entity hardware device. It may be understood that, in some application scenarios, the TOR switch and the user terminal may be virtual machines running on a same server or different servers. In other application scenarios, the TOR switch may also be an independent switch device. This may not be limited in this embodiment.

In addition, the data center A further includes a communication apparatus configured to interconnect with the SRv6 network, for example, a communication apparatus 101 and a communication apparatus 105 in FIG. 1.

In one aspect, compared with the data center A, the communication apparatus 101 and the communication apparatus 105 are configured to implement a function of a data center gateway (data center gateway, DC-GW) of the data center A, to implement external interconnection of the data center A. In another aspect, compared with the DCI, the communication apparatus 101 and the communication apparatus 105 each are configured to implement a function of a provider edge (provider edge, PE) router. Therefore, the communication apparatus 101 and the communication apparatus 105 each may also be considered as a DCI-PE in the DCI.

When the communication apparatus 101 and the communication apparatus 105 each are used as the DCI-PE in the DCI, the communication apparatus 101 and the communication apparatus 105 each may be specifically a superstratum PE (superstratum PE, SPE). Correspondingly, the communication apparatus 103 and the communication apparatus 107 each may be an underlayer PE (underlayer PE, UPE).

In addition, in the DCI, similar to the communication apparatus 101 and the communication apparatus 105, the DCI further includes a communication apparatus 102 and a communication apparatus 106. In one aspect, compared with the DCI, the communication apparatus 102 and the communication apparatus 106 each are configured to implement a function of a PE router. Therefore, the communication apparatus 102 and the communication apparatus 106 each may be considered as a DCI-PE of the DCI. In another aspect, the communication apparatus 102 and the communication apparatus 106 each are further used as a DC-GW to implement external interconnection of the data center B.

The communication apparatus 101, the communication apparatus 102, the communication apparatus 105, and the communication apparatus 106 can implement interconnection by using the SRv6 network.

In addition, the data center B includes a plurality of switches configured to establish the VXLAN, for example, a TOR switch. For example, a communication apparatus 104 and a communication apparatus 108 are used as examples in the figure. In the data center, a user terminal can be connected to one or more switches to exchange data with another user terminal in the VXLAN. FIG. 1 is used as an example. A user terminal 110 may implement data exchange with another user terminal in the VXLAN by using a switch such as the communication apparatus 104 or the communication apparatus 108.

In addition, when the communication apparatus 102 and the communication apparatus 106 each are used as the DCI-PE in the DCI, the communication apparatus 102 and the communication apparatus 106 each may be specifically a superstratum PE (superstratum PE, SPE). Correspondingly, the communication apparatus 104 and the communication apparatus 108 each may be an underlayer PE (underlayer PE, UPE).

It may be understood that for descriptions of each communication apparatus and the user terminal in the data center B, refer to the foregoing corresponding content of the data center A. Details are not described herein again.

As described above, currently in the related technology, the MPLS network is usually used to implement interconnection between different data centers. Therefore, to implement the network architecture shown in FIG. 1, interconnection between the VXLAN and the SRv6 network needs to be implemented. To solve this problem, this embodiment provides a communication method. The method may be applied to a communication apparatus, for example, the communication apparatus 101, the communication apparatus 102, the communication apparatus 105, and the communication apparatus 106 in FIG. 1.

In the communication method, when a communication apparatus that is used as a DC-GW/DCI-PE in a data center on one side receives a VXLAN packet from a VXLAN, the communication apparatus can decapsulate the VXLAN packet to obtain a layer 2 packet, re-encapsulate the layer 2 packet into an SRv6 packet that meets a requirement, and forward, by using an SRv6 network, the SRv6 packet to a communication apparatus that is used as a DC-GW/DCI-PE in a data center on the other side. After the SRv6 packet that meets the requirement is received by the communication apparatus in the data center on the other side, the communication apparatus may re-encapsulate the layer 2 packet in the SRv6 packet as a VXLAN packet, and forward the VXLAN packet to a corresponding user terminal.

With reference to an example, the following describes in detail the communication method provided in this embodiment by using an example in which the user terminal 109 performs cross-data center interconnection with the user terminal 110 by using the communication apparatus 103, the communication apparatus 101, the communication apparatus 102, and the communication apparatus 104 in FIG. 1.

First, a running process of a control flow after the user terminal 109 accesses the VXLAN of the data center A is described.

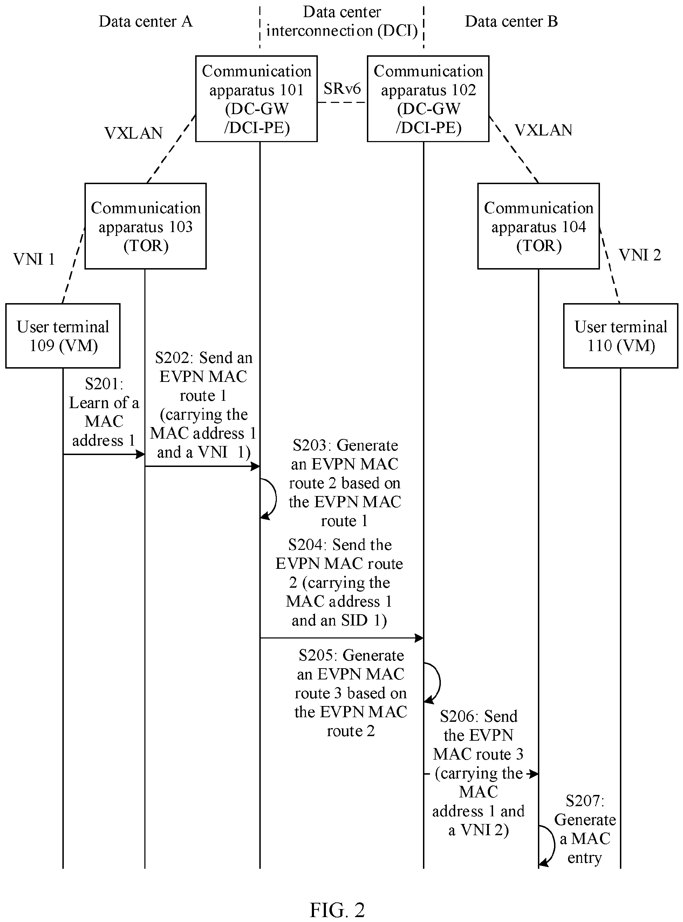

As shown in FIG. 2, the method may include the following steps.

S201: The communication apparatus 103 learns of a MAC address 1 of the user terminal 109 from the user terminal 109.

For example, after accessing a network, the user terminal 109 may actively send the local MAC address 1 to the communication apparatus 103 and the communication apparatus 107 that are connected to the user terminal 109, so that the communication apparatus 103 and the communication apparatus 107 learn of the MAC address 1 of the user terminal 109.

That the communication apparatus 103 learns of the MAC address 1 may specifically include: the communication apparatus 103 records, in a MAC table corresponding to a local EVPN instance (which may be specifically an EVPN instance corresponding to an interface of the user terminal 109 on the communication apparatus 103, and is referred to as an EVPN instance 1031 below), a correspondence between a port of the user terminal 109 on the communication apparatus 103 and the MAC address 1.

S202: The communication apparatus 103 sends an EVPN MAC route 1 to the communication apparatus 101.

The EVPN MAC route 1 carries the MAC address 1 and a VNI 1. In addition, it may be understood that the EVPN MAC route 1 may further carry other information. For example, the EVPN MAC route 1 further carries next-hop information. A next hop in this embodiment is an access address of the communication apparatus 103.

For example, after learning of the MAC address 1, the communication apparatus 103 sends an EVPN MAC route (that is, the EVPN MAC route 1) to the communication apparatus 101 by using the EVPN instance 1031 configured on the communication apparatus 103. The EVPN MAC route carries the MAC address 1 and a VNI (that is, the VNI 1) allocated to the EVPN instance 1031.

The EVPN MAC route 1 may indicate, by using the MAC address 1 and the VΓΠ 1 that are carried, to encapsulate a layer 2 packet whose destination address is the MAC address 1 into a VXLAN packet including the VNI 1 and forward the VXLAN packet to the communication apparatus 103.

S203: The communication apparatus 101 generates an EVPN MAC route 2 based on the EVPN MAC route 1.

The EVPN MAC route 2 carries the MAC address 1 and an SID 1 corresponding to the VNI 1.

The SID 1 corresponds to the VNI 1, which may be understood as that the communication apparatus 101 can determine the corresponding VNI 1 based on the SID 1.

Specifically, when the communication apparatus 101 allocates SIDs to different VNIs, the SIDs may be allocated in different implementations according to an actual requirement. Specifically, this embodiment provides the following several implementations.

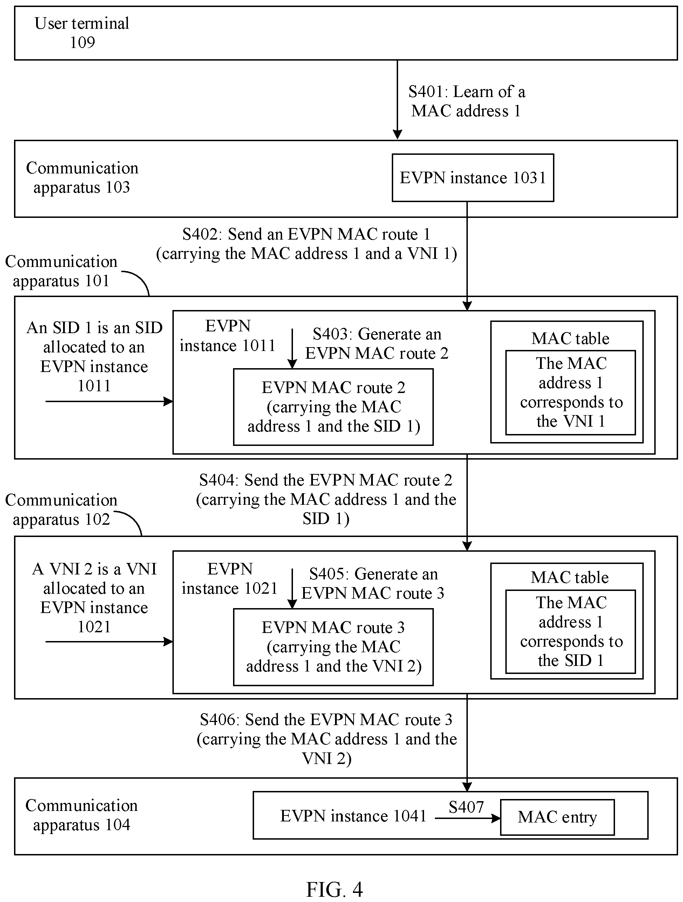

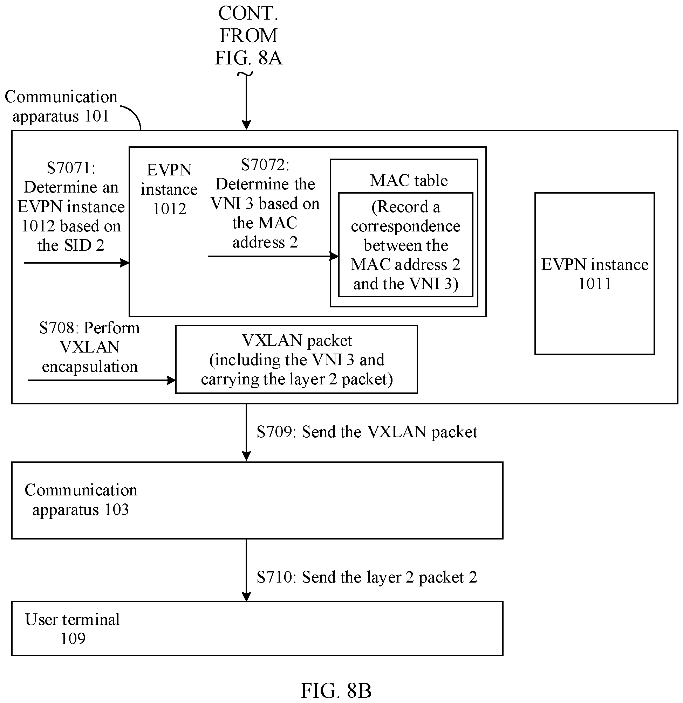

Implementation 1: Per EVPN instance for per SID. The communication apparatus 101 allocates different SIDs for different EVPN instances. For example, in S203, the SID 1 may be an SID allocated to an EVPN instance in the communication apparatus 101 (the EVPN instance corresponds to the VNI 1). The following describes this implementation in detail with reference to the examples shown in FIG. 4 to FIG. 8A and FIG. 8B.

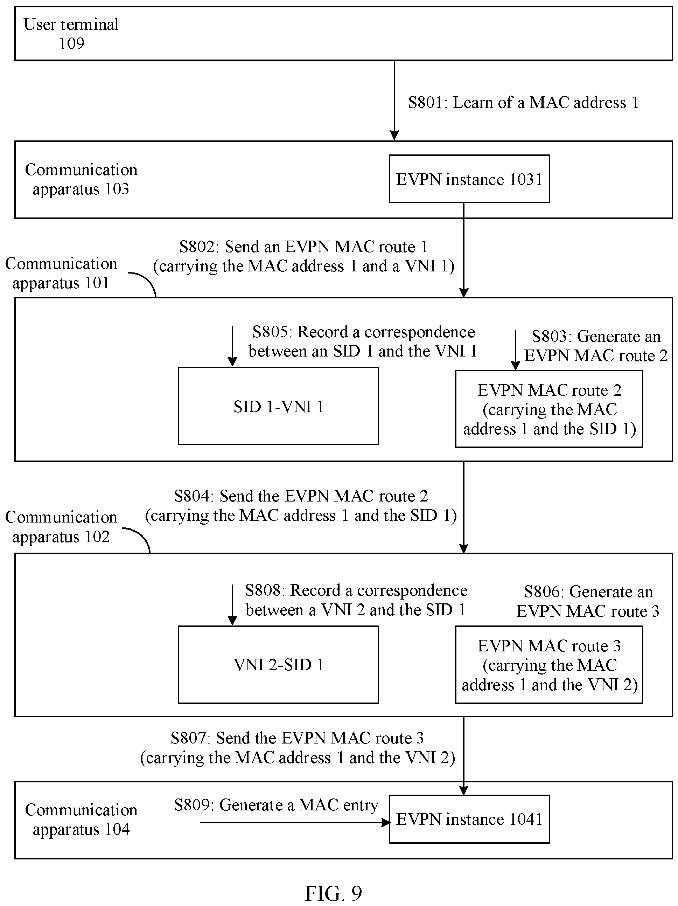

Implementation 2: Per MAC address for per SID. Different SIDs can be allocated for a same VNI and different MAC addresses in the data center A. For example, in S203, the SID 1 may be an SID allocated by the communication apparatus 101 for the MAC address 1. The following describes this implementation in detail in the examples shown in FIG. 9, FIG. 10(a), and FIG. 11A and FIG. 11B to FIG. 13.

Implementation 3: Per next hop for per SID. Different SIDs can be allocated for a same VNI and different next-hop information in the data center A. For example, in S203, the SID 1 may be an SID allocated by the communication apparatus 101 for the communication apparatus 103. The following describes this implementation in detail in the examples shown in FIG. 9, FIG. 10(a), and FIG. 14 and FIG. 15.

It may be understood that, in an actual application process, the correspondence between the VNI and the SID may also be constructed in a manner other than the foregoing three implementations. A specific implementation of the correspondence between the VNI and the SID may not be limited in this embodiment.

In addition, it may be understood that the EVPN MAC route 1 may further include other information, for example, an access address of the communication apparatus 101.

The EVPN MAC route 2 may indicate, by using the MAC address 1 and the SID 1 that are carried, to encapsulate a layer 2 packet whose destination address is the MAC address 1 into an SRv6 packet whose destination address is the SID 1 and forward the SRv6 packet to the communication apparatus 101.

S204: The communication apparatus 101 sends the EVPN MAC route 2 to the communication apparatus 102.

In this way, after receiving the SRv6 packet whose destination address is the SID 1 from the communication apparatus 102, the communication apparatus 101 may first determine the VNI 1 based on the SID 1. After decapsulating the SRv6 packet to obtain the layer 2 packet (for example, the layer 2 packet whose destination address is the MAC address 1), the communication apparatus 101 encapsulates, according to an indication of the EVPN MAC route 1, the layer 2 packet into the VXLAN packet including the VNI 1 and forwards the VXLAN packet to the communication apparatus 103. Then, the communication apparatus 103 forwards the layer 2 packet to the user terminal 109 to complete packet transmission.

S205: The communication apparatus 102 generates an EVPN MAC route 3 based on the EVPN MAC route 2.

The EVPN MAC route 3 carries the MAC address 1 and a VNI 2 corresponding to the SID 1.

The VNI 2 corresponds to the SID 1, which may be understood as that the communication apparatus 102 can determine the corresponding SID 1 based on the VNI 2.

Specifically, when the communication apparatus 102 allocates VNIs to different SIDs, the VNIs may be allocated in different implementations according to an actual requirement. Specifically, this embodiment provides the following several implementations.

Implementation 1: Per EVPN instance for per VNI. The communication apparatus 102 allocates different VNIs for different EVPN instances. For example, in S205, the VNI 2 may be a VNI allocated to an EVPN instance in the communication apparatus 102 (the EVPN instance corresponds to the SID 1). The following describes this implementation in detail with reference to the examples shown in FIG. 4 to FIG. 8A and FIG. 8B.

Implementation 2: Per MAC address for per VNI. Different VNIs may be allocated for different MAC addresses. For example, in S205, the VNI 2 may be a VNI allocated by the communication apparatus 102 for the MAC address 1. The following describes this implementation in detail in the examples shown in FIG. 9, FIG. 10(a), and FIG. 11A and FIG. 11B to FIG. 13.

Implementation 3: Per next hop for per VNI. Different VNIs may be allocated for different next-hop information. For example, in S203, the VNI 2 may be an SID allocated by the communication apparatus 102 for the communication apparatus 101. The following describes this implementation in detail in the examples shown in FIG. 9, FIG. 10(a), and FIG. 16 and FIG. 17.

It may be understood that, in an actual application process, the correspondence between the SID and the VNI may also be constructed in a manner other than the foregoing three implementations. A specific implementation of the correspondence between the SID and the VNI may not be limited in this embodiment.

In addition, it may be understood that the EVPN MAC route 3 may further include other information, for example, an access address of the communication apparatus 102.

The EVPN MAC route 3 may indicate, by using the MAC address 1 and the VNI 2 that are carried, to encapsulate a layer 2 packet whose destination address is the MAC address 1 into a VXLAN packet including the VNI 2 and forward the VXLAN packet to the communication apparatus 102.

S206: The communication apparatus 102 sends the EVPN MAC route 3 to the communication apparatus 104.

In this way, after receiving the VXLAN packet including the VNI 2 from the communication apparatus 104, the communication apparatus 102 may first determine the SID 1 based on the VNI 2. After decapsulating the VXLAN packet to obtain the layer 2 packet (for example, the layer 2 packet whose destination address is the MAC address 1), the communication apparatus 102 encapsulates, according to an indication of the EVPN MAC route 2, the layer 2 packet into the SRv6 packet whose destination address is the SID 1 and forwards the SRv6 packet to the communication apparatus 101. Then, with reference to the description in S204, the communication apparatus 101 decapsulates the SRv6 packet, encapsulates the layer 2 packet into the VXLAN packet, and forwards the VXLAN packet to the communication apparatus 103. Then, the communication apparatus 103 forwards the layer 2 packet to the user terminal 109 to complete packet transmission.

S207: The communication apparatus 104 generates a MAC entry based on the EVPN MAC route 3.

For example, the communication apparatus 104 generates, based on the EVPN MAC route 3, the MAC entry in an EVPN instance (referred to as an EVPN instance 1041 below) corresponding to the VNI 2 configured in the communication apparatus 104. The MAC entry may include the MAC address 1, the VNI 2, and the access address of the communication apparatus 102. In this way, when receiving the layer 2 packet that is forwarded by the user terminal 110 and whose destination address is the MAC address 1, after determining the EVPN instance 1041 based on an interface of the user terminal 110, the communication apparatus 104 may find the MAC entry that includes the MAC address 1, the VNI 2, and the access address of the communication apparatus 102 from a MAC table corresponding to the EVPN instance 1041, then encapsulate the layer 2 packet into the VXLAN packet including the VNI 2, and forward the VXLAN packet to the communication apparatus 102.

With reference to the running process of the control flow shown in FIG. 2, the following describes a process in which the user terminal 110 in the data center B forwards a packet to the user terminal 109 in the data center A.

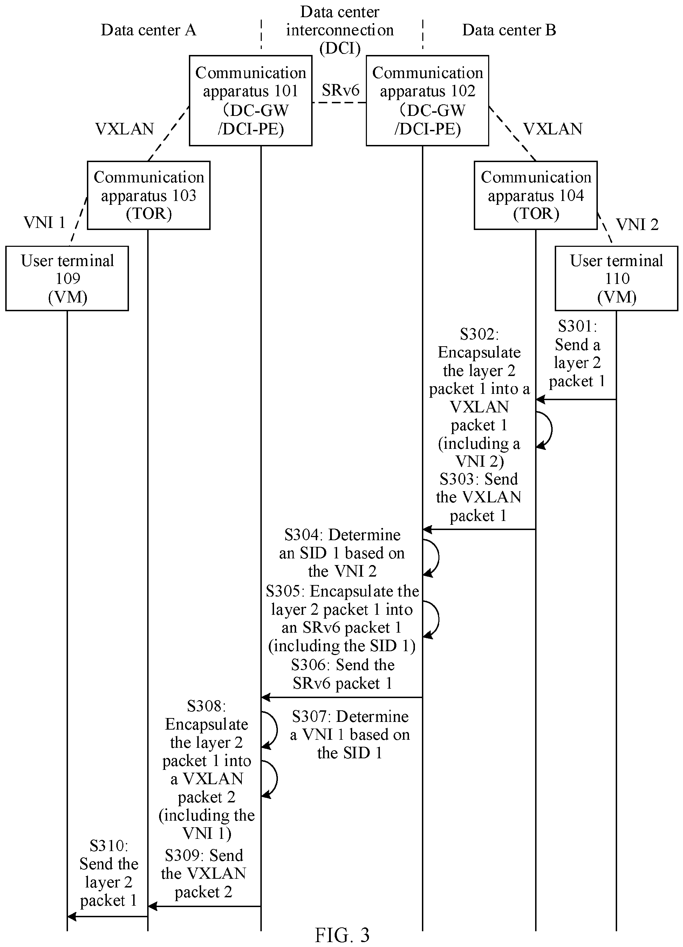

As shown in FIG. 3, the method may include the following steps.

S301: The user terminal 110 forwards a layer 2 packet 1 whose destination address is a MAC address 1 to the communication apparatus 104.

The MAC address 1 is a MAC address of the user terminal 109.

It may be understood that the layer 2 packet in this embodiment may be understood as a packet transmitted in a layer 2 network, or a packet addressed by using a MAC address.

S302: The communication apparatus 104 encapsulates the layer 2 packet 1 into a VXLAN packet 1.

The communication apparatus 104 may first determine, based on an interface of the user terminal 110 on the communication apparatus 104, an EVPN instance 1041 corresponding to the user terminal 110. Then, the communication apparatus 104 searches, based on the MAC address 1, a MAC table corresponding to the EVPN instance 1041 for a MAC entry. A MAC entry that includes the MAC address 1, a VNI 2, and an access address of the communication apparatus 102 is found. Then, the communication apparatus 104 encapsulates the layer 2 packet 1 into the VXLAN packet 1 that includes the VNI 2 and whose destination address is the communication apparatus 102.

S303: The communication apparatus 104 forwards the VXLAN packet 1 to the communication apparatus 102.

As described above, the VXLAN packet 1 carries the VNI 2 and the layer 2 packet 1 whose destination address is the MAC address 1.

S304: The communication apparatus 102 determines an SID 1 based on the VNI 2 in the VXLAN packet.

Specifically, as described in S205 above, because there is the correspondence between the VNI 2 and the SID 1, the communication apparatus 102 may determine the SID 1 based on the VNI 2.

S305: The communication apparatus 102 performs SRv6 encapsulation on the layer 2 packet 1, to obtain an SRv6 packet 1.

The SRv6 packet 1 includes the SID 1.

For example, when a segment routing policy (segment routing policy, SR policy) transmission manner is used between the communication apparatus 102 and the communication apparatus 101, the SID 1 may be directly used as the destination address in the SRv6 packet 1. For another example, when an SRv6 best-effort (Segment Routing IPv6 Best Effort, SRv6 BE) transmission manner is used between the communication apparatus 102 and the communication apparatus 101, the SID 1 is carried in the SRv6 as a segment identifier.

S306: The communication apparatus 102 forwards the SRv6 packet 1 to the communication apparatus 101.

S307: The communication apparatus 101 determines a VNI 1 based on the destination address SID 1 in the SRv6 packet 1.

Specifically, as described in 203 above, because there is the correspondence between the SID 1 and the VNI 1, the communication apparatus 101 may determine the VNI 1 based on the SID 1.

S307: The communication apparatus 101 performs VXLAN encapsulation on the layer 2 packet 1, to obtain a VXLAN packet 2.

The VXLAN packet 2 carries the VNI 1.

S308: The communication apparatus 101 forwards the VXLAN packet 2 to the communication apparatus 103.

S309: The communication apparatus 103 forwards the layer 2 packet 1 in the VXLAN packet to the user terminal 109.

Specifically, after receiving the VXLAN packet, the communication apparatus 103 decapsulates the VXLAN packet, then determines an EVPN instance based on the VNI 1 in the VXLAN packet (which may be the EVPN instance 1031 corresponding to the user terminal 109 described in S202), and further determines, based on the MAC address 1, an interface (that is, an interface of the user terminal 109) corresponding to the MAC address 1 in a found MAC entry in a MAC table corresponding to the EVPN instance 1031.

In the method shown in FIG. 3, the layer 2 packet sent by the user terminal 110 in the data center B may be forwarded to the user terminal 109 in the data center A.

Considering that in some application scenarios, a communication apparatus (for example, the communication apparatus 101, the communication apparatus 102, the communication apparatus 105, and the communication apparatus 106 in FIG. 1) on a transmission path may be configured with an EVPN instance used to control layer 2 packet forwarding, or may not be configured with an EVPN instance used to control layer 2 packet forwarding. The following describes in detail the communication methods provided in FIG. 2 and FIG. 3 in this embodiment in two implementations according to whether the EVPN instance is configured on the communication apparatus.

In a first implementation, when EVPN instances are configured on all communication apparatuses on the transmission path, the following describes in detail the communication method provided in this embodiment by using an example in which the user terminal 109 performs cross-data center interconnection with the user terminal 110 by using the communication apparatus 103, the communication apparatus 101, the communication apparatus 102, and the communication apparatus 104 in FIG. 1.

First, a running process of a control flow after the user terminal 109 accesses the VXLAN of the data center A is described.

As shown in FIG. 4, the method may specifically include the following steps.

S401: The communication apparatus 103 learns of a MAC address 1 of the user terminal 109 from the user terminal 109.

For a specific implementation process of S401, refer to content of S201 above. Details are not described herein again.

S402: The communication apparatus 103 sends an EVPN MAC route 1 to the communication apparatus 101.

As described in S202, after learning of the MAC address 1, the communication apparatus 103 sends an EVPN MAC route (that is, the EVPN MAC route 1) to the communication apparatus 101 by using the EVPN instance 1031.

S403: The communication apparatus 101 generates an EVPN MAC route 2 based on the EVPN MAC route 1.

Similar to content in S204, the EVPN MAC route 2 carries the MAC address 1 and an SID 1 corresponding to the VNI 1. The EVPN MAC route 2 may indicate, by using the MAC address 1 and the SID 1 that are carried, to encapsulate a layer 2 packet whose destination address is the MAC address 1 into an SRv6 packet including the SID 1 and forward the SRv6 packet to the communication apparatus 101.

In a possible design, the communication apparatus 101 may determine, based on a route target (route target) extended community attribute carried in the EVPN MAC route 1, an EVPN instance 1011 configured on the communication apparatus 101. Then, the EVPN MAC route 2 is generated in the EVPN instance 1011.

In a possible design, the SID 1 is an SID allocated to the EVPN instance 1011 of the communication apparatus 101. In other words, the EVPN instance 1011 may be determined in the communication apparatus 101 based on the SID 1.

According to this design, after receiving the SRv6 packet whose destination address is the SID 1, the communication apparatus 101 may determine the EVPN instance 1011 based on the SID 1, and further may search the EVPN instance 1011 for forwarding information of the layer 2 packet 1.

In a possible implementation, in this embodiment, a MAC table of the EVPN instance 1011 includes a correspondence between the MAC address 1 and the VNI 1.

Specifically, the correspondence between the MAC address 1 and the VNI 1 is recorded in the MAC table of the EVPN instance 1011, so that after receiving the SRv6 packet whose destination address is the SID 1 (in which the layer 2 packet whose destination address is the MAC address 1 is encapsulated), the communication apparatus 101 may first determine the EVPN instance 1011 based on the SID 1; then search, based on the MAC address 1, the MAC table corresponding to the EVPN instance 1011 for the correspondence between the MAC address 1 and the VNI 1, to further determine the VNI 1; and further determine the VNI 1 corresponding to the SID 1 based on the SID 1.

In addition, it may be understood that a MAC entry that records the MAC address 1 and the VΓΠ 1 in the MAC table of the EVPN instance 1011 may further include other information. For example, next-hop information herein may be an address of the communication apparatus 103, so that the communication apparatus 101 determines, when encapsulating the VXLAN packet, that a next hop of the VXLAN packet is the communication apparatus 103.

S404: The communication apparatus 101 sends the EVPN MAC route 2 to the communication apparatus 102.

S405: The communication apparatus 102 generates an EVPN MAC route 3 based on the EVPN MAC route 2.

The EVPN MAC route 3 carries the MAC address 1 and a VNI 2 corresponding to the SID 1. The EVPN MAC route 3 may indicate, by using the MAC address 1 and the VNI 2, to encapsulate a layer 2 packet whose destination address is the MAC address 1 into a VXLAN packet including the VNI 2 and forward the VXLAN packet to the communication apparatus 102.

In a possible design, the communication apparatus 102 may determine, based on a route target extended community attribute carried in the EVPN MAC route 2, an EVPN instance 1021 configured on the communication apparatus 102. Then, the EVPN MAC route 3 is generated in the EVPN instance 1021.

In a possible design, the VNI 2 is a VNI allocated to the EVPN instance 1021 of the communication apparatus 102.

According to this design, after receiving the VXLAN packet that carries the VNI 2, the communication apparatus 102 may determine the EVPN instance 1021 based on the VNI 2, and may further search the EVPN instance 1021 for forwarding information of the layer 2 packet.

In a possible implementation, in this embodiment, a MAC table of the EVPN instance 1021 includes a correspondence between the MAC address 1 and the SID 1.

Specifically, the correspondence between the MAC address 1 and the SID 1 is recorded in the MAC table of the EVPN instance 1021, so that after receiving the VXLAN packet that carries the VNI 2 (in which the layer 2 packet whose destination address is the MAC address 1 is encapsulated), the communication apparatus 102 may first determine the EVPN instance 1021 based on the VNI 2; then search, based on the MAC address 1, the MAC table corresponding to the EVPN instance 1021 for the correspondence between the MAC address 1 and the SID 1, to further determine the SID 1; and further determine the SID 1 corresponding to the VΓΠ 2 based on the VNI 2.

In addition, it may be understood that a MAC entry that records the MAC address 1 and the SID 1 in the MAC table of the EVPN instance 1021 may further include other information. For example, next-hop information herein may be an address of the communication apparatus 101, so that the communication apparatus 102 determines, when encapsulating the SRv6 packet, that a next hop of the SRv6 packet is the communication apparatus 101.

S406: The communication apparatus 102 sends the EVPN MAC route 3 to the communication apparatus 104.

S407: The communication apparatus 104 generates a MAC entry based on the EVPN MAC route 3.

For a specific implementation process of S407, refer to related content of S207 above. Repeated parts are not described again.

With reference to the running process of the control flow shown in FIG. 4, the following describes a process in which the user terminal 110 in the data center B forwards a packet to the user terminal 109 in the data center A.

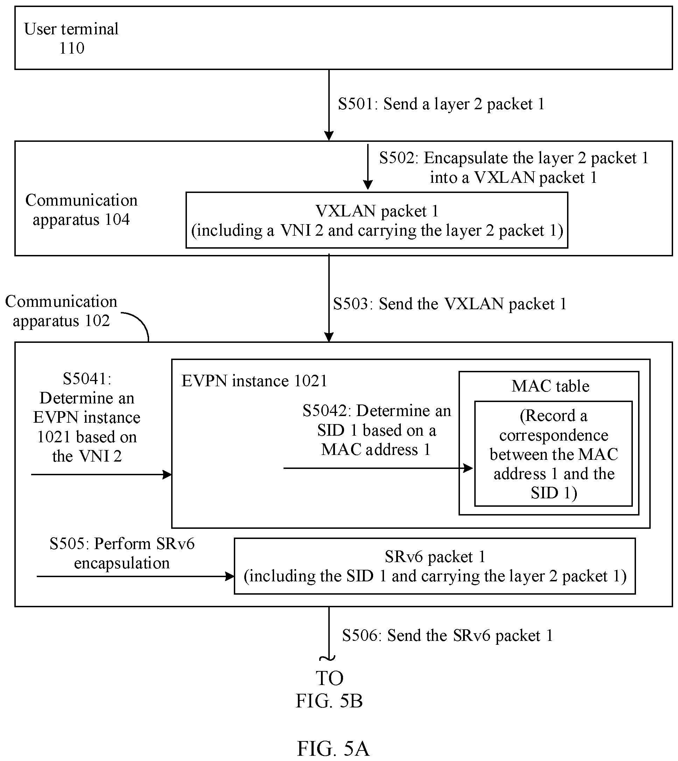

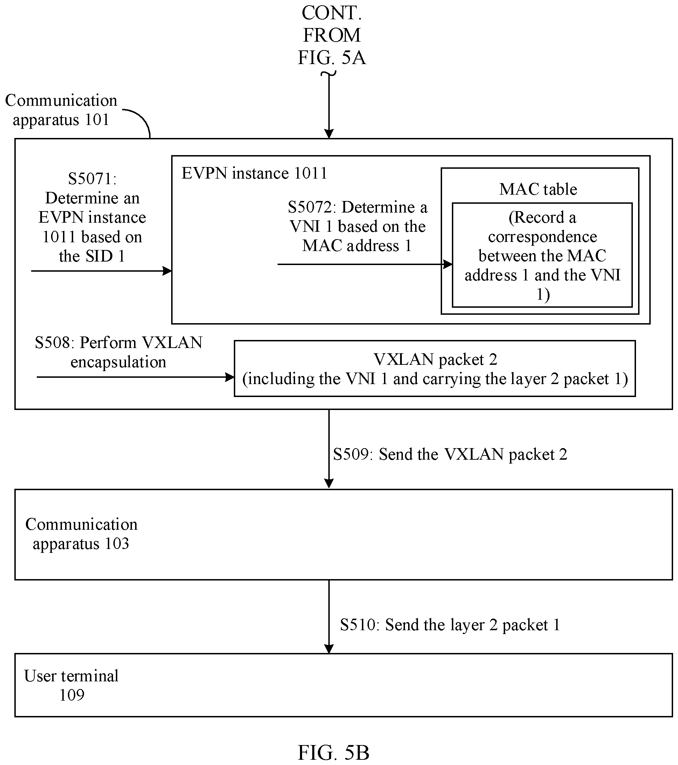

As shown in FIG. 5A and FIG. 5B, the method may include the following steps.

S501: The user terminal 110 forwards a layer 2 packet 1 whose destination address is a MAC address 1 to the communication apparatus 104.

S502: The communication apparatus 104 encapsulates the layer 2 packet 1 into a VXLAN packet 1 that includes a VNI 2 and whose destination address is the communication apparatus 102.

S503: The communication apparatus 104 forwards the VXLAN packet 1 to the communication apparatus 102.

For content of S501 to S503, refer to corresponding content of S301 to S303. Repeated parts are not described again.

S504: The communication apparatus 102 determines an SID 1 based on the VΓΠ 2 in the VXLAN packet 1.

In a possible design, as described in S405 above, the VNI 2 is a VNI allocated to an EVPN instance 1021 of the communication apparatus 102. Therefore, the communication apparatus 102 may determine the EVPN instance 1021 based on the VNI 2, and further determine the SID 1.

Optionally, S504 may specifically include:
S5041: The communication apparatus 102 determines the EVPN instance 1021 based on the VNI 2.
S5042: The communication apparatus 102 determines, based on the MAC address 1, the SID 1 from a MAC table corresponding to the EVPN instance 1021.

As described in S407, a correspondence between the MAC address 1 and the SID 1 is recorded in the MAC table corresponding to the EVPN instance 1021.

S505: The communication apparatus 102 performs SRv6 encapsulation on the layer 2 packet 1, to obtain an SRv6 packet 1.

Refer to S305. The SRv6 packet 1 includes the SID 1.

S506: The communication apparatus 102 forwards the SRv6 packet 1 to the communication apparatus 101.

S507: The communication apparatus 101 determines a VΓΠ 1 based on the SID 1 in the SRv6 packet 1.

In a possible design, as described in S403 above, the SID 1 is an SID allocated to an EVPN instance 1011 of the communication apparatus 101. Therefore, the communication apparatus 101 may determine the EVPN instance 1011 based on the SID 1, and further determine the VNI 1.

Optionally, S507 may specifically include:
S5071: The communication apparatus 101 determines the EVPN instance 1011 based on the SID 1.
S5072: The communication apparatus 101 determines, based on the MAC address 1, the VΓΠ 1 from a MAC table corresponding to the EVPN instance 1011.

As described in S404, a correspondence between the MAC address 1 and the VNI 1 is recorded in the MAC table corresponding to the EVPN instance 1011.

S508: The communication apparatus 101 performs VXLAN encapsulation on the layer 2 packet 1, to obtain a VXLAN packet 2.

As shown in S308, the VXLAN packet 2 carries the VNI 1.

S509: The communication apparatus 101 forwards the VXLAN packet 2 to the communication apparatus 103.

S510: The communication apparatus 103 forwards the layer 2 packet 1 in the VXLAN packet to the user terminal 109.

For content of S509 and S510, refer to corresponding content of S309 and S310. Repeated parts are not described again.

The foregoing S401 to S407 and S501 to S510 describe in detail the control flow and packet forwarding process after the user terminal 109 accesses the VXLAN of the data center A by using an example in which the user terminal 109 performs cross-data center interconnection with the user terminal 110 by using the communication apparatus 103, the communication apparatus 101, the communication apparatus 102, and the communication apparatus 104. In an actual application process, the communication apparatus may include one or more EVPN instances, which are used to implement data transmission on different paths. In this way, different SIDs or VNIs can be allocated to different EVPN instances to implement data transmission across VXLANs and SRv6 networks on different paths.

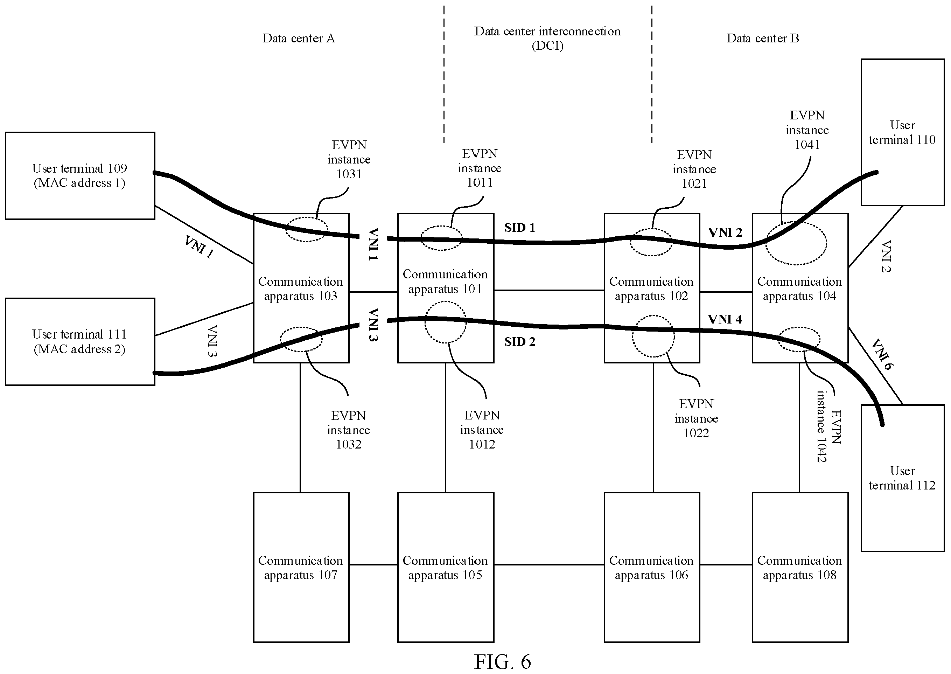

For example, in FIG. 6, in addition to the EVPN instance 1011, the communication apparatus 101 further includes an EVPN instance 1012. A VNI 3 and an SID 2 are allocated to the EVPN instance 1012. In addition, in addition to the EVPN instance 1021, the communication apparatus 102 further includes an EVPN instance 1022. A VNI 4 is allocated to the EVPN instance 1022. In addition, in addition to the EVPN instance 1031 corresponding to the VΓΠ 1, the communication apparatus 103 further includes an EVPN instance 1032 to which the VNI 3 is allocated. In addition, in addition to the EVPN instance 1041 corresponding to the VNI 2, the communication apparatus 104 further includes an EVPN instance 1042 to which the VNI 4 is allocated.

With reference to an example, the following describes a process in which the user terminal 111 in the data center A interconnects to the user terminal 112 in the data center B after accessing the VXLAN in the data center A.

First, a running process of a control flow after the user terminal 111 accesses the VXLAN of the data center A is described.

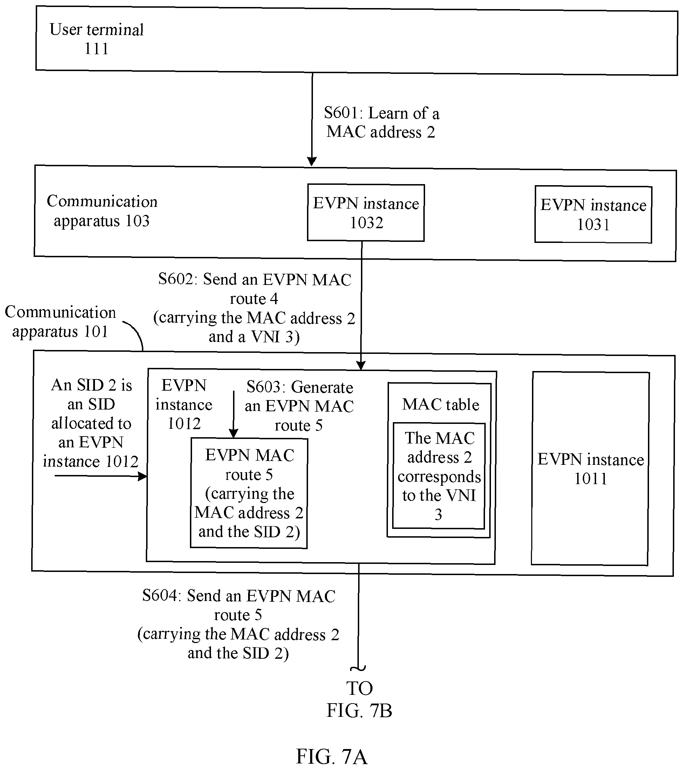

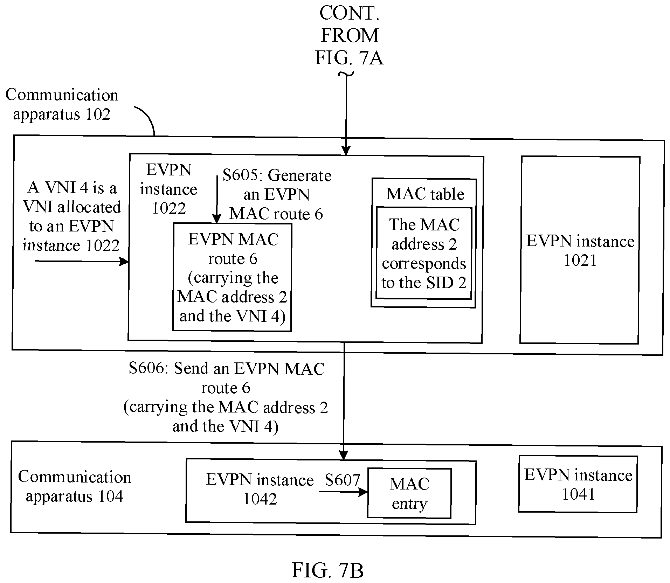

As shown in FIG. 7A and FIG. 7B, the method specifically further includes the following steps.

S601: The communication apparatus 103 learns of a MAC address 2 of the user terminal 111 from the user terminal 111.

S602: The communication apparatus 103 sends an EVPN MAC route 4 to the communication apparatus 101.

After learning of the MAC address 2, the communication apparatus 103 determines, based on an interface of the user terminal 111, an EVPN instance 1032 corresponding to the user terminal 111, and then sends the EVPN MAC route 4 to the communication apparatus 101 by using the EVPN instance 1032. The EVPN MAC route 4 includes the MAC address 2 and a VNI 3.

S603: The communication apparatus 101 generates an EVPN MAC route 5 based on the EVPN MAC route 4.

The EVPN MAC route 5 carries the MAC address 2 and an SID 2 corresponding to the VNI 3. The EVPN MAC route 2 may indicate, by using the MAC address 2 and the SID 2 that are carried, to encapsulate a layer 2 packet whose destination address is the MAC address 2 into an SRv6 packet including the SID 2 and forward the SRv6 packet to the communication apparatus 101.

The SID 2 is an SID allocated to the EVPN instance 1012 of the communication apparatus 101.

Specifically, different SIDs are allocated to different EVPN instances in the communication apparatus 101, so that after receiving SRv6 packets including the different SIDs, the communication apparatus 101 can find a corresponding EVPN instance based on the SID, then find next hop information of a layer 2 packet in the SRv6 packet from a MAC table corresponding to the EVPN instance (for example, find a corresponding VNI and a next-hop address in the MAC table of the corresponding EVPN instance based on a MAC address carried in the layer 2 packet), and complete corresponding encapsulating and forwarding of the layer 2 packet.

A MAC table of the EVPN instance 1012 includes a correspondence between the MAC address 2 and the VNI 3.

In addition, it may be understood that a MAC entry that records the MAC address 2 and the VNI 3 in the MAC table of the EVPN instance 1012 may further include other information. For example, next-hop information herein may be an address of the communication apparatus 103, so that the communication apparatus 101 determines, when encapsulating the VXLAN packet, that a next hop of the VXLAN packet is the communication apparatus 103.

S604: The communication apparatus 101 sends the EVPN MAC route 5 to the communication apparatus 102.

S605: The communication apparatus 102 generates an EVPN MAC route 6 based on the EVPN MAC route 5.

The EVPN MAC route 6 carries the MAC address 2 and a VNI 4 corresponding to the SID 2. The EVPN MAC route 6 may indicate, by using the MAC address 2 and the VNI 4, to encapsulate a layer 2 packet whose destination address is the MAC address 2 into a VXLAN packet including the VNI 4 and forward the VXLAN packet to the communication apparatus 102.

The VNI 4 is a VNI allocated to the EVPN instance 1022 of the communication apparatus 102.

Specifically, different VNIs are allocated to different EVPN instances in the communication apparatus 102, so that after receiving VXLAN packets including the different VNIs, the communication apparatus 102 can find a corresponding EVPN instance based on the VNI, then find next hop information of a layer 2 packet in the VXLAN packet from a MAC table corresponding to the EVPN instance (for example, find a corresponding SID and a next-hop address in the MAC table of the corresponding EVPN instance based on a MAC address carried in the layer 2 packet), and complete corresponding encapsulating and forwarding of the layer 2 packet.

A MAC table of the EVPN instance 1022 includes a correspondence between the MAC address 2 and the SID 2.

It may be understood that a MAC entry that records the MAC address 2 and the SID 2 in the MAC table of the EVPN instance 1022 may further include other information.

S606: The communication apparatus 102 sends the EVPN MAC route 6 to the communication apparatus 104.

S607: The communication apparatus 104 generates a MAC entry based on the EVPN MAC route 6.

For a specific implementation process of S607, refer to related content of S207 above. Repeated parts are not described again.

With reference to the running process of the control flow shown in FIG. 7A and FIG. 7B, the following describes a process in which the user terminal 112 in the data center B forwards a packet to the user terminal 111 in the data center A.

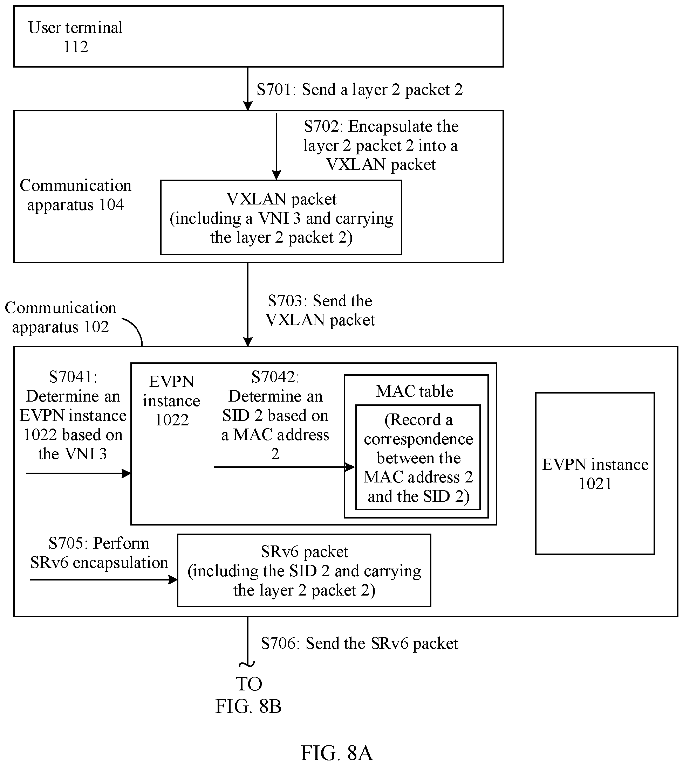

As shown in FIG. 8A and FIG. 8B, the method may include the following steps:
S701: The user terminal 112 forwards a layer 2 packet 2 whose destination address is a MAC address 2 to the communication apparatus 104.
S702: The communication apparatus 104 encapsulates the layer 2 packet 2 into a VXLAN packet that includes a VNI 4 and whose destination address is the communication apparatus 102.
S703: The communication apparatus 104 forwards the VXLAN packet to the communication apparatus 102.

For content of S701 to S703, refer to corresponding content of S301 to S303. Repeated parts are not described again.

S704: The communication apparatus 102 determines an SID 2 based on the VNI 4 in the VXLAN packet.

As described in S605 above, the VNI 4 is a VNI allocated to an EVPN instance 1022 of the communication apparatus 102. Therefore, the communication apparatus 102 may determine the EVPN instance 1022 based on the VNI 4, and further determine the SID 2.

S704 may specifically include:
S7041: The communication apparatus 102 determines the EVPN instance 1022 based on the VNI 4.
S7042: The communication apparatus 102 determines, based on the MAC address 2, an SID 4 from a MAC table corresponding to the EVPN instance 1022.

As described in S605, a correspondence between the MAC address 1 and the SID 4 is recorded in the MAC table corresponding to the EVPN instance 1022.

S705: The communication apparatus 102 performs SRv6 encapsulation on the layer 2 packet 2, to obtain an SRv6 packet.

The SRv6 packet includes the SID 2.

S706: The communication apparatus 102 forwards the SRv6 packet to the communication apparatus 101.

S707: The communication apparatus 101 determines a VΓΠ 2 based on the SID 2 in the SRv6 packet.

As described in S603 above, the SID 2 is an SID allocated to an EVPN instance 1012 of the communication apparatus 101. Therefore, the communication apparatus 101 may determine the EVPN instance 1012 based on the SID 2, and further determine a VNI 3.

S707 may specifically include:
S7071: The communication apparatus 101 determines the EVPN instance 1012 based on the SID 2.
S7072: The communication apparatus 101 determines, based on the MAC address 1, the VNI 3 from a MAC table corresponding to the EVPN instance 1012.

As described in S603, a correspondence between the MAC address 2 and the VNI 3 is recorded in the MAC table corresponding to the EVPN instance 1012.

S708: The communication apparatus 101 performs VXLAN encapsulation on the layer 2 packet 2, to obtain the VXLAN packet.

The VXLAN packet carries the VNI 3.

S709: The communication apparatus 101 forwards the VXLAN packet to the communication apparatus 103.

S710: The communication apparatus 103 forwards the layer 2 packet 1 in the VXLAN packet to the user terminal 111.

For content of S709 and S710, refer to corresponding content of S309 and S310. Repeated parts are not described again.

In a second implementation, when no EVPN instance is configured on the communication apparatus on the transmission path, the following describes in detail the communication method provided in this embodiment by using an example in which the user terminal 109 performs cross-data center interconnection with the user terminal 110 by using the communication apparatus 103, the communication apparatus 101, the communication apparatus 102, and the communication apparatus 104 in FIG. 1.

First, a running process of a control flow after the user terminal 109 accesses the VXLAN of the data center A is described.

As shown in FIG. 9, the method may specifically include the following steps.

S801: The communication apparatus 103 learns of a MAC address 1 of the user terminal 109 from the user terminal 109.

For a specific implementation process of S801, refer to content of S201 above. Details are not described herein again.

S802: The communication apparatus 103 sends an EVPN MAC route 1 to the communication apparatus 101.

As described in S202, after learning of the MAC address 1, the communication apparatus 103 sends an EVPN MAC route (that is, the EVPN MAC route 1) to the communication apparatus 101 by using the EVPN instance 1031.

S803: The communication apparatus 101 generates an EVPN MAC route 2 based on the EVPN MAC route 1.

Similar to content in S204, the EVPN MAC route 2 carries the MAC address 1 and an SID 1. The EVPN MAC route 2 indicates to encapsulate a layer 2 packet whose destination address is the MAC address 1 into an SRv6 packet whose destination address is the SID 1 and forward the SRv6 packet to the communication apparatus 101.

Specifically, the communication apparatus 101 may obtain the EVPN MAC route 2 by modifying information in the EVPN MAC route 1. For example, the communication apparatus 101 may modify a next hop in the EVPN MAC route 1 to an access address of the communication apparatus 101, delete the VNI in the EVPN MAC route 1, and add the SID 1 to the EVPN MAC route 1, to obtain the EVPN MAC route 2.

S804: The communication apparatus 101 sends the EVPN MAC route 2 to the communication apparatus 102.

In a possible design, the method further includes:
S805: The communication apparatus 101 records a correspondence between the SID 1 and a VNI 1.

In this way, after receiving the SRv6 packet whose destination address is the SID 1, the communication apparatus 101 may encapsulate, according to the correspondence, the layer 2 packet carried in the SRv6 packet into a VXLAN packet that includes the VΓΠ 1 and whose destination address is the communication apparatus 103 for forwarding.

That is, after the communication apparatus 102 encapsulates, based on the EVPN MAC route 2, the layer 2 packet whose destination address is the MAC address 1 into the SRv6 packet whose destination address is the SID 1, and forwards the SRv6 packet to the communication apparatus 101, when content in the layer 2 packet is not parsed, the communication apparatus 101 may encapsulate, based on a first correspondence, the layer 2 packet into the VXLAN packet that includes the VNI 1 and whose destination address is the communication apparatus 103 for forwarding.

In addition, when allocating an SID corresponding to a VNI, the communication apparatus 101 may use different policies to allocate the SID.

In a possible design, the communication apparatus 101 may generate different SIDs based on different MAC addresses carried in the EVPN MAC route.

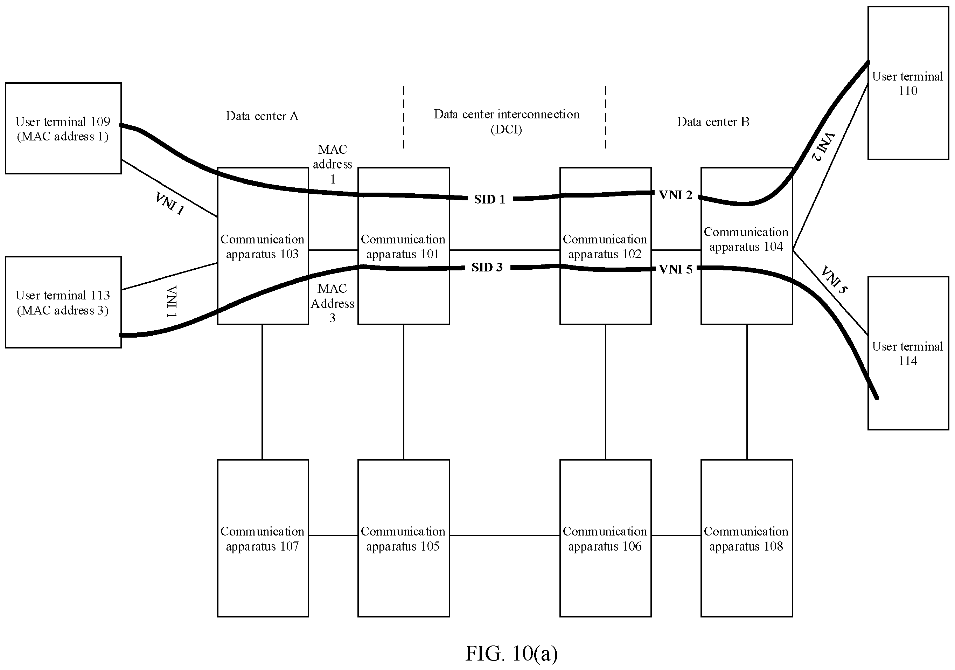

For example, as shown in FIG. 10(a), in one aspect, the communication apparatus 101 may generate the SID 1 based on the MAC address 1 carried in the EVPN MAC route 1, to generate the EVPN MAC route 2 including the SID 1 (S803). In another aspect, the communication apparatus 101 may further generate an SID 3 based on a MAC address 3 of the user terminal 113.

In this case, in one aspect, when the user terminal in the data center B sends a packet to the user terminal 109, the communication apparatus 102 needs to encapsulate the layer 2 packet into the SRv6 packet including the SID 1 and forward the SRv6 packet to the communication apparatus 101. In another aspect, when the user terminal in the data center B sends a packet to the user terminal 113, the communication apparatus 102 needs to encapsulate the layer 2 packet into an SRv6 packet including the SID 3 and forward the SRv6 packet to the communication apparatus 101.

In another possible design, the communication apparatus 101 may generate different SIDs corresponding to different next-hop nodes based on next-hop information in the EVPN MAC route.

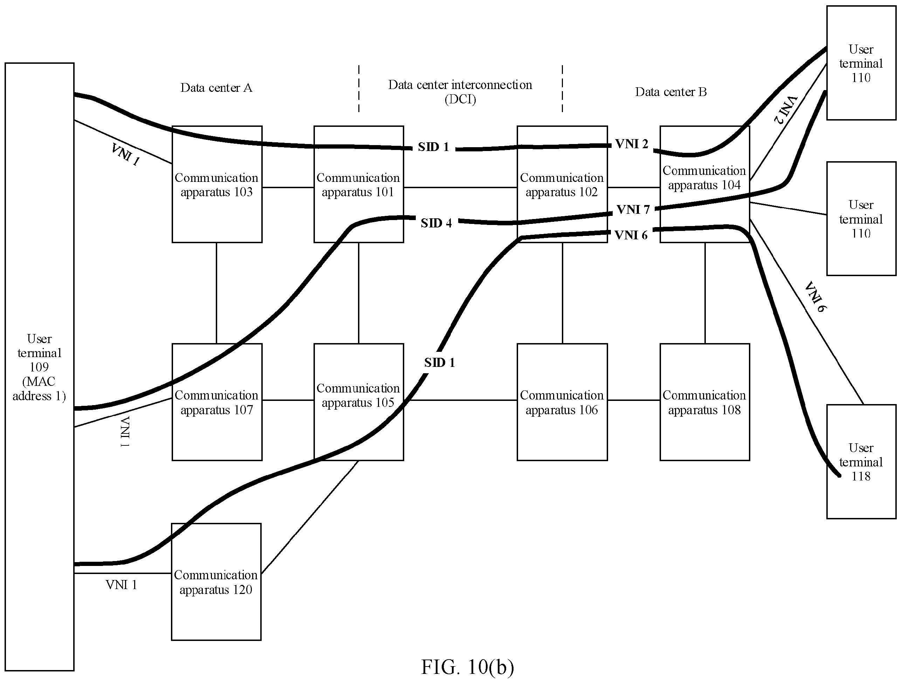

For example, as shown in FIG. 10(b), in one aspect, corresponding to the EVPN MAC route 1 whose next hop is the communication apparatus 103, the communication apparatus 101 allocates the SID 1, to generate the EVPN MAC route 2 including the SID 1 (S803). In another aspect, the communication apparatus 101 may further correspond to an EVPN MAC route whose next hop is the communication apparatus 107, and allocate an SID 4.

Specifically, different from the foregoing description of generating the different SIDs based on the different MAC addresses, that the user terminal 109 separately accesses the data center A by using the communication apparatus 103 and the communication apparatus 107 is used as an example. If the communication apparatus 103 sends an EVPN MAC route (carrying the MAC address of the user terminal 109), the communication apparatus 101 allocates the SID 1. If the communication apparatus 107 sends an EVPN MAC route (carrying the MAC address of the user terminal 109), the communication apparatus 101 allocates the SID 4.

In this case, in one aspect, when the user terminal in the data center B sends a packet to the user terminal, corresponding to the VΓΠ 1, connected to the communication apparatus 103, the communication apparatus 102 needs to encapsulate the layer 2 packet into the SRv6 packet including the SID 1 and forward the SRv6 packet to the communication apparatus 101. In another aspect, when the user terminal in the data center B sends a packet to the user terminal, corresponding to the VNI 1, connected to the communication apparatus 107, the communication apparatus 102 needs to encapsulate the layer 2 packet into an SRv6 packet including the SID 4 and forward the SRv6 packet to the communication apparatus 101. In a possible design, in the method provided in this embodiment, the SID 1 may be preconfigured to associate with the SID 1 to perform a VXLAN encapsulation operation.

For example, a function (function) type of the SID may be preconfigured, where the function type indicates an SID of this type to perform VXLAN encapsulation, or indicate an SID of this type to query a table of correspondences between SIDs and VNIs. In this way, the communication apparatus 101 may indicate a function of the SID 1 as a preset type (for example, the function of the SID 1 is indicated as END.SWV) and record the preset type locally. Therefore, after receiving the SID 1, the communication apparatus 101 is directly triggered to search for the correspondence between the SID 1 and the VNI 1, to perform VXLAN encapsulation.

S806: The communication apparatus 102 generates an EVPN MAC route 3 based on the EVPN MAC route 2.

Similar to content in S206, the EVPN MAC route 3 carries the MAC address 1 and a VNI 2. The EVPN MAC route 3 indicates to encapsulate a layer 2 packet whose destination address is the MAC address 1 into a VXLAN packet including the VNI 2 and forward the VXLAN packet to the communication apparatus 102.

Specifically, the communication apparatus 102 may obtain the EVPN MAC route 3 by modifying information in the EVPN MAC route 2. For example, the communication apparatus 102 may modify a next hop in the EVPN MAC route 2 to an access address of the communication apparatus 102, delete the SID 1 in the EVPN MAC route 2, and add the VNI 2 to the EVPN MAC route 2, to obtain the EVPN MAC route 3.

S807: The communication apparatus 102 sends the EVPN MAC route 3 to the communication apparatus 104.

In a possible design, the method further includes:
S808: The communication apparatus 102 records a correspondence between the VNI 2 and the SID 1.

In this way, after receiving the VXLAN packet including the VNI 2, the communication apparatus 102 may encapsulate, according to the correspondence between the VNI 2 and the SID 1, the layer 2 packet carried in the VXLAN packet into the SRv6 packet that includes the SID 1 and forward the SRv6 packet to the communication apparatus 101.

That is, after the communication apparatus 104 encapsulates, based on the EVPN MAC route 3, the layer 2 packet whose destination address is the MAC address 1 into the VXLAN packet including the VNI 2, and forwards the VXLAN packet to the communication apparatus 102, when content in the layer 2 packet is not parsed, the communication apparatus 102 may encapsulate, according to a second correspondence, the layer 2 packet into the SRv6 packet whose destination address is the SID 1 and forward the SRv6 packet to the communication apparatus 101.

In addition, when allocating a VNI corresponding to a SID, the communication apparatus 102 may use different policies to allocate the VNI.

In a possible design, the communication apparatus 102 may generate different VNIs based on different MAC addresses carried in the EVPN MAC route.

For example, as shown in FIG. 10(a), in one aspect, the communication apparatus 102 may generate the VNI 2 based on the MAC address 1 carried in the EVPN MAC route 2 from the communication apparatus 101, to generate the EVPN MAC route 3 including the VNI 2 (S806). In another aspect, the communication apparatus 101 may further generate the VNI 5 based on the MAC address 3 of the user terminal 113.

In this case, in one aspect, when the user terminal in the data center B sends a packet to the user terminal 109, the layer 2 packet may be encapsulated into the VXLAN packet including the VNI 2 and the VXLAN packet is forwarded to the communication apparatus 102, to complete packet transmission. In another aspect, when the user terminal in the data center B sends a packet to the user terminal 113, the layer 2 packet may be encapsulated into a VXLAN packet including the VNI 5 and the VXLAN packet is forwarded to the communication apparatus 102, to complete packet transmission.

In another possible design, the communication apparatus 101 may generate different VNIs corresponding to different next-hop nodes based on next-hop information in the EVPN MAC route.

For example, as shown in FIG. 10(b), for the communication apparatus 102:

In one aspect, corresponding to the EVPN MAC route 2 whose next hop is the communication apparatus 101, the communication apparatus 101 allocates the VΓΠ 2, to generate the EVPN MAC route 3 including the VNI 2 (S806). In addition, for another EVPN MAC route whose next hop is the communication apparatus 101, the communication apparatus also allocates a VNI 7. For example, in FIG. 10(b), for an EVPN MAC route that is sent from the communication apparatus 107 and that carries the MAC address of the user terminal 109 to the communication apparatus 101, the communication apparatus 101 sends an EVPN MAC route that carries the SID 4 to the communication apparatus 102 based on the EVPN MAC route, and the communication apparatus 102 allocates the VNI 7 based on the received EVPN MAC route.

In another aspect, the communication apparatus 102 may further allocate a VNI 6 corresponding to an EVPN MAC route whose next hop is the communication apparatus 105.

Specifically, different from the foregoing description of generating the different SIDs based on the different MAC addresses, that in FIG. 10(b), the user terminal 109 separately accesses the data center A by using the communication apparatus 103, the communication apparatus 107, and the communication apparatus 120 is used as an example. If communication apparatus 101 sends an EVPN MAC route (carrying the MAC address of the user terminal 109 and the SID 1), the communication apparatus 102 allocates the VΓΠ 2. If the communication apparatus 105 sends an EVPN MAC route (carrying the MAC address of the user terminal 109 and the SID 1), the communication apparatus 102 allocates the VNI 6.

In this case, corresponding to a same MAC address (the MAC address 1) and a same SID (the SID 1), in one aspect, when the user terminal in the data center B sends a packet to the user terminal, corresponding to the VNI 1, connected to the communication apparatus 101, the communication apparatus 104 needs to encapsulate the layer 2 packet into the VXLAN packet including the VΓΠ 2 and forward the VXLAN packet to the communication apparatus 102. In another aspect, when the user terminal in the data center B sends a packet to the user terminal, corresponding to the VNI 1, connected to the communication apparatus 105, the communication apparatus 102 needs to encapsulate the layer 2 packet into a VXLAN packet including the VNI 6 and forward the VXLAN packet to the communication apparatus 102.

S809: The communication apparatus 104 generates a MAC entry based on the EVPN MAC route 3.

For a specific implementation process of S809, refer to related content of S207 above. Repeated parts are not described again.

With reference to the running process of the control flow shown in FIG. 9, the following describes a process in which the user terminal 110 in the data center B forwards a packet to the user terminal 109 in the data center A.

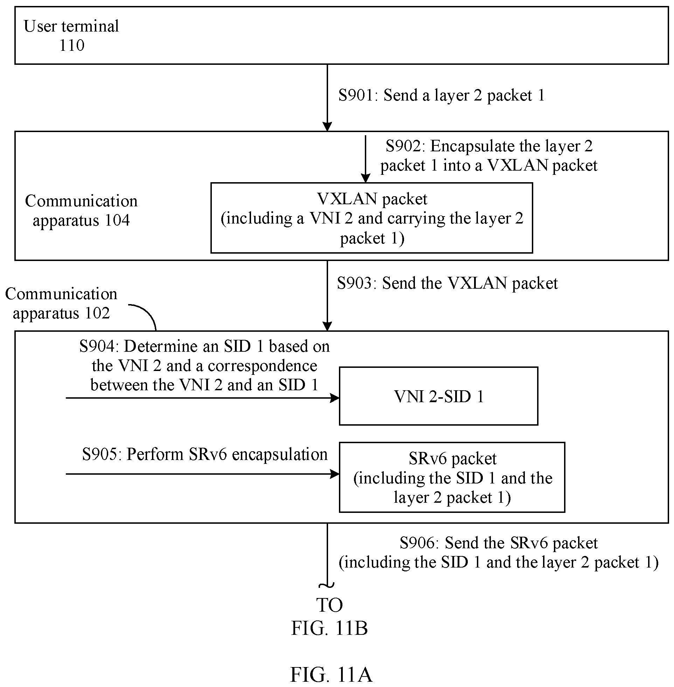

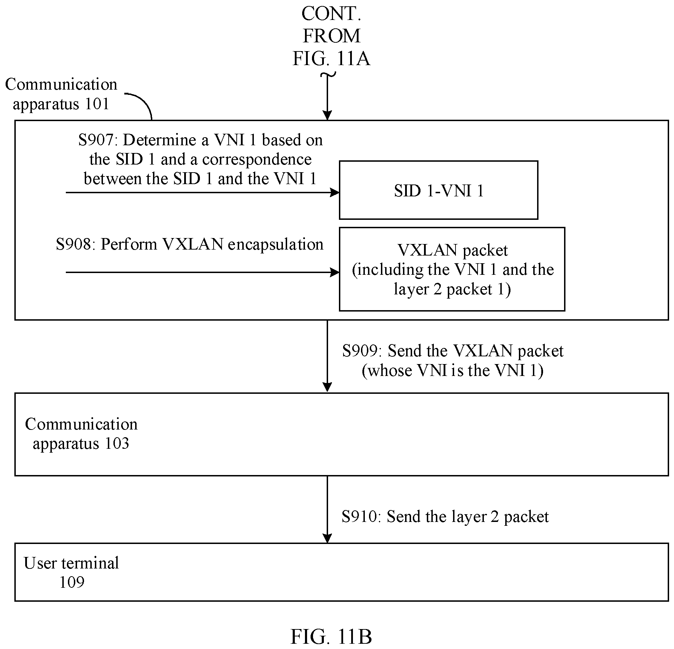

As shown in FIG. 11A and FIG. 11B, the method may include the following steps.

S901: The user terminal 110 forwards a layer 2 packet 1 whose destination address is a MAC address 1 to the communication apparatus 104.

S902: The communication apparatus 104 encapsulates the layer 2 packet 1 into a VXLAN packet that includes a VNI 2 and whose destination address is the communication apparatus 102.

S903: The communication apparatus 104 forwards the VXLAN packet to the communication apparatus 102.

For content of S901 to S903, refer to corresponding content of S301 to S303. Repeated parts are not described again.

S904: The communication apparatus 102 determines an SID 1 based on the VNI 2 in the VXLAN packet.

In a possible design, S904 specifically includes: The communication apparatus 102 determines the SID 1 based on the VNI 2 and a correspondence, between the VNI 2 and the SID 1, recorded in the communication apparatus 102.

Specifically, as described in S808 above, the communication apparatus 102 records the correspondence between the VNI 2 and the SID 1.

S905: The communication apparatus 102 performs SRv6 encapsulation on the layer 2 packet 1, to obtain an SRv6 packet.

The SRv6 packet includes the SID 1.

S906: The communication apparatus 102 sends the SRv6 packet to the communication apparatus 101.

S907: The communication apparatus 101 determines a VΓΠ 1 based on the SID 1 in the SRv6 packet.

In a possible design, S907 specifically includes: The communication apparatus 101 determines the VΓΠ 1 based on the SID 1 and a correspondence, between the SID 1 and the VNI 1, recorded in the communication apparatus 101.

Specifically, as described in S805 above, the communication apparatus 101 records the correspondence between the SID 1 and the VNI 1.

S908: The communication apparatus 101 performs VXLAN encapsulation on the layer 2 packet 1, to obtain the VXLAN packet.

The VXLAN packet includes the VNI 1.

S909: The communication apparatus 101 forwards the VXLAN packet to the communication apparatus 103.

S910: The communication apparatus 103 forwards the layer 2 packet 1 in the VXLAN packet to the user terminal 109.

For content of S909 and S910, refer to corresponding content of S309 and S310. Repeated parts are not described again.

With reference to FIG. 10(a), the following describes in detail a process in which the user terminal 113 in the data center A interconnects to the user terminal in the data center B.

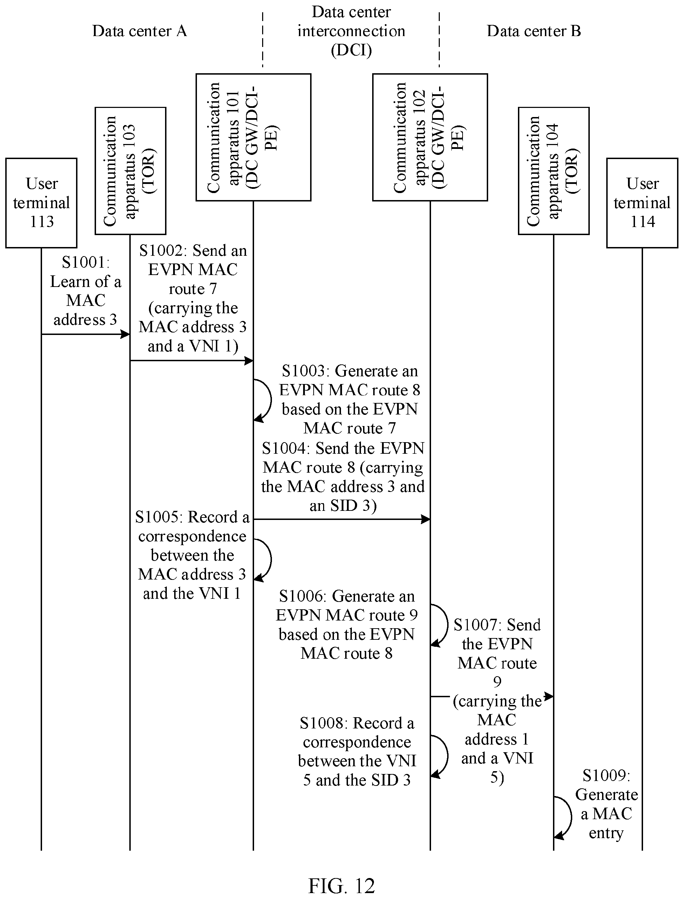

As shown in FIG. 12, the method may specifically include the following steps.

S1001: The communication apparatus 103 learns of a MAC address 3 of the user terminal 113 from the user terminal 113.

S1002: The communication apparatus 103 sends an EVPN MAC route 7 to the communication apparatus 101.

The EVPN MAC route 7 carries the MAC address 3 and a VNI 1.

S1003: The communication apparatus 101 generates an EVPN MAC route 8 based on the EVPN MAC route 7.

The EVPN MAC route 8 includes an SID 3 and the MAC address 3. Specifically, as shown in FIG. 10(a), a correspondence between the VNI 1 and an SID 1 and a correspondence between the VNI 1 and the SID 3 may be recorded on the communication apparatus 101. The SID 1 is an SID allocated corresponding to the MAC address 1, and the SID 3 is an SID allocated corresponding to the MAC address 3.

S1004: The communication apparatus 101 sends the EVPN MAC route 8 to the communication apparatus 102.

In a possible design, the method may further include: S1005: The communication apparatus 101 records the correspondence between the SID 3 and the VNI 1.

S1006: The communication apparatus 102 generates an EVPN MAC route 9 based on the EVPN MAC route 8.

The EVPN MAC route 9 includes a VNI 5 and the MAC address 3. Specifically, as shown in FIG. 10(a), a correspondence between the SID 1 and a VNI 2 and a correspondence between the SID 3 and the VNI 5 may be recorded on the communication apparatus 101. The VNI 2 is a VNI allocated corresponding to the MAC address 1, and the VNI 5 is a VNI allocated corresponding to the MAC address 3.

S1007: The communication apparatus 102 sends the EVPN MAC route 9 to the communication apparatus 104.

In a possible design, the method may further include: S1008: The communication apparatus 102 records the correspondence between the VNI 5 and the SID 3.

S1009: The communication apparatus 104 generates a MAC entry based on the EVPN MAC route 9.

For content similar to S801 to S809 in an implementation process of S1001 to S1009, refer to corresponding descriptions in S801 to S809. Repeated parts are not described again.

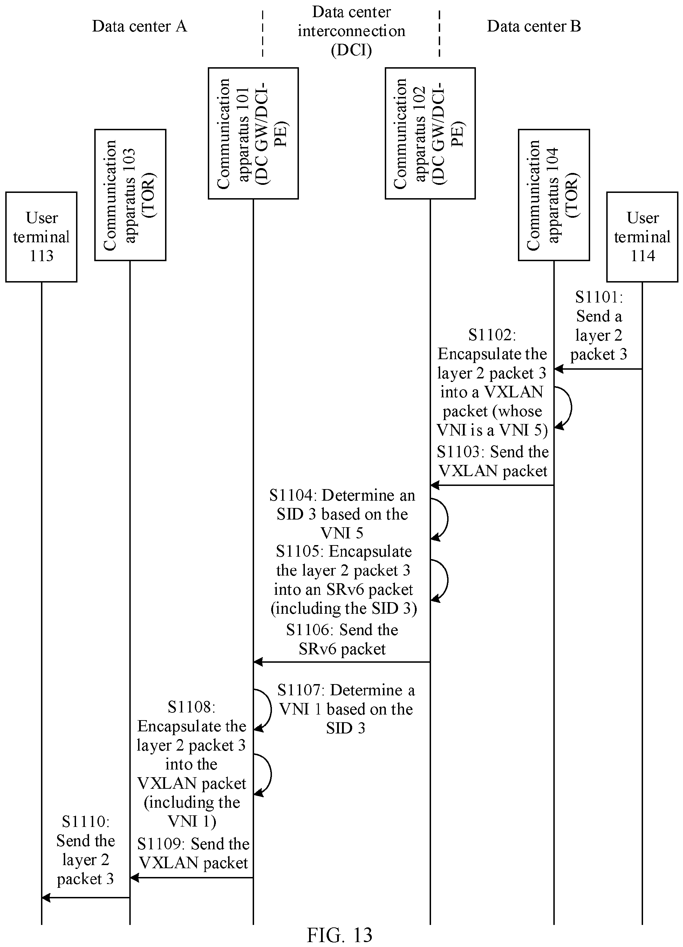

With reference to the running process of the control flow shown in FIG. 12, the following describes a process in which the user terminal 114, corresponding to the VNI 5, in the data center B forwards a packet to the user terminal 113 in the data center A. Specifically, as shown in FIG. 13, the method further includes the following steps.

S1101: The user terminal 114 forwards a layer 2 packet 3 whose destination address is a MAC address 3 to the communication apparatus 104.

S1102: The communication apparatus 104 encapsulates the layer 2 packet 3 into a VXLAN packet that includes a VNI 5 and whose destination address is the communication apparatus 102.

S1103: The communication apparatus 104 forwards the VXLAN packet to the communication apparatus 102.

For content of S1101 to S1103, refer to corresponding content of S301 to S303. Repeated parts are not described again.

S1104: The communication apparatus 102 determines an SID 3 based on the VNI 5 in the VXLAN packet.

In a possible design, S1104 specifically includes: The communication apparatus 102 determines the SID 3 based on the VNI 5 and a correspondence, between the VNI 5 and the SID 3, recorded in the communication apparatus 102.

S1105: The communication apparatus 102 performs SRv6 encapsulation on the layer 2 packet 3, to obtain an SRv6 packet.

The SRv6 packet includes the SID 3.

S1106: The communication apparatus 102 sends the SRv6 packet to the communication apparatus 101.

S1107: The communication apparatus 101 determines a VΓΠ 1 based on the SID 3 in the SRv6 packet.

In a possible design, S1107 specifically includes: The communication apparatus 101 determines the VΓΠ 1 based on the SID 3 and a correspondence, between the SID 3 and the VNI 1, recorded in the communication apparatus 101.

S1108: The communication apparatus 101 performs VXLAN encapsulation on the layer 2 packet 1, to obtain the VXLAN packet.

The VXLAN packet includes the VNI 1.

S1109: The communication apparatus 101 forwards the VXLAN packet to the communication apparatus 103.

S1110: The communication apparatus 103 forwards the layer 2 packet 3 in the VXLAN packet to the user terminal 113.

For content of S1109 and S1110, refer to corresponding content of S309 and S310. Repeated parts are not described again.

With reference to FIG. 10(b), the following describes in detail a process in which the user terminal 109 in the data center A interconnects to the user terminal in the data center B.

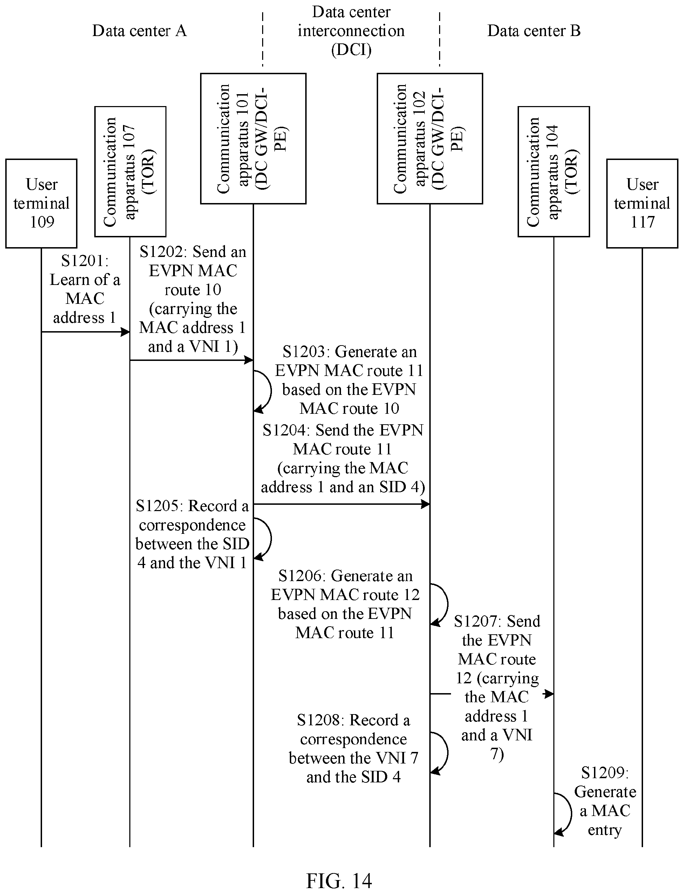

As shown in FIG. 14, the method may specifically include the following steps.

S1201: The communication apparatus 107 learns of a MAC address 1 of the user terminal 109 from the user terminal 109.

S1202: The communication apparatus 107 sends an EVPN MAC route 10 to the communication apparatus 101.

The EVPN MAC route 10 carries the MAC address 1 and a VΓΠ 1.

S1203: The communication apparatus 101 generates an EVPN MAC route 11 based on the EVPN MAC route 10.

The EVPN MAC route 11 includes an SID 4 and the MAC address 1. Specifically, as shown in FIG. 10(b), a correspondence between the VNI 1 and an SID 1 and a correspondence between the VNI 1 and the SID 4 may be recorded on the communication apparatus 101. The SID 1 is an SID allocated to the communication apparatus 103 corresponding to a next hop, and the SID 4 is an SID allocated to the communication apparatus 107 corresponding to a next hop.

Comparing FIG. 10(b) with FIG. 10(a), it can be learned that although S1203 corresponds to a same MAC address (that is, the MAC address 1), because the user terminal connects to a plurality of communication apparatuses (the communication apparatus 103, the communication apparatus 107, and the communication apparatus 120), for the communication apparatus 101, although the EVPN MAC routes received from the communication apparatus 103 and the communication apparatus 107 carry the same MAC address, corresponding SIDs are different because next hop information is different.

S1204: The communication apparatus 101 sends the EVPN MAC route 11 to the communication apparatus 102.

In a possible design, the method may further include: S1205: The communication apparatus 101 records the correspondence between the SID 4 and the VNI 1.

S1206: The communication apparatus 102 generates an EVPN MAC route 12 based on the EVPN MAC route 11.

The EVPN MAC route 12 includes a VNI 2 and the MAC address 1. Specifically, as shown in FIG. 10(b), a correspondence between the SID 1 and the VNI 2, a correspondence between the SID 4 and a VNI 7, and a correspondence between the SID 1 and a VNI 6 may be recorded on the communication apparatus 102 (in this case, it may be understood that an SR policy transmission manner is used in an SRv6 network, and therefore the SID 1 may separately correspond to the communication apparatus 101 and the communication apparatus 105). The VNI 1 is a VNI allocated corresponding to a next hop as the communication apparatus 101, and the VNI 6 is a VNI allocated corresponding to a next hop as the communication apparatus 105.

It can be learned that, compared with the communication apparatus 102, because the communication apparatus 101 and the communication apparatus 105 are respectively different next-hop nodes, although EVPN MAC routes (the EVPN MAC route 2 and the EVPN MAC route 11) sent from the communication apparatus 101 and the communication apparatus 105 to the communication apparatus 102 each carry the MAC address 1 and the SID 1, the communication apparatus 102 allocates the VNI 2 and the VNI 6 respectively to the EVPN MAC route 2 and the EVPN MAC route 11 according to an SID allocation policy that different SIDs are allocated based on different next-hop nodes.

S1207: The communication apparatus 102 sends the EVPN MAC route 12 to the communication apparatus 104.

In a possible design, the method may further include: S1208: The communication apparatus 102 records the correspondence between the VNI 7 and the SID 4.

S1209: The communication apparatus 104 generates a MAC entry based on the EVPN MAC route 12.

For content similar to S801 to S809 in an implementation process of S1201 to S1209, refer to corresponding descriptions in S801 to S809. Repeated parts are not described again.

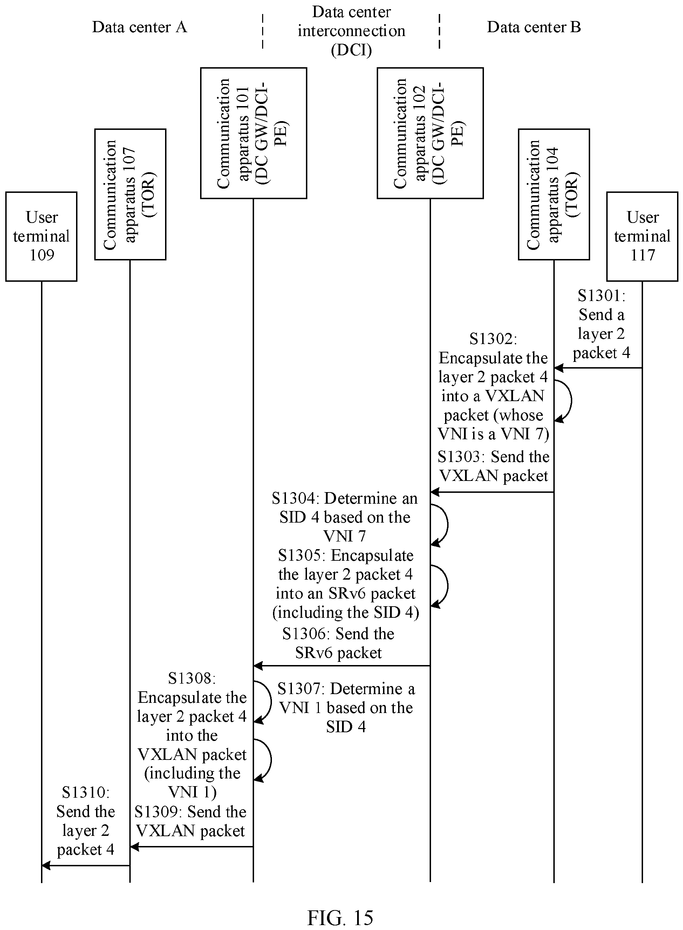

With reference to the running process of the control flow shown in FIG. 14, the following describes a process in which the user terminal 117, corresponding to the VNI 7, in the data center B forwards a packet to the user terminal 109 in the data center A. Specifically, as shown in FIG. 15, the method further includes the following steps.

S1301: The user terminal 117 forwards a layer 2 packet 4 whose destination address is a MAC address 1 to the communication apparatus 104.

S1302: The communication apparatus 104 encapsulates the layer 2 packet 4 into a VXLAN packet that includes a VNI 7 and whose destination address is the communication apparatus 102.

S1303: The communication apparatus 104 forwards the VXLAN packet to the communication apparatus 102.

For content of S1301 to S1303, refer to corresponding content of S301 to S303. Repeated parts are not described again.

S1304: The communication apparatus 102 determines an SID 4 based on the VNI 7 in the VXLAN packet.

S1305: The communication apparatus 102 performs SRv6 encapsulation on the layer 2 packet 4, to obtain an SRv6 packet.

The SRv6 packet includes the SID 4.

S1306: The communication apparatus 102 sends the SRv6 packet to the communication apparatus 101.

S1307: The communication apparatus 101 determines a VΓΠ 1 based on the SID 4 in the SRv6 packet.

S1308: The communication apparatus 101 performs VXLAN encapsulation on the layer 2 packet 4, to obtain the VXLAN packet.

The VXLAN packet includes the VNI 1.

S1309: The communication apparatus 101 forwards the VXLAN packet to the communication apparatus 107.

S1310: The communication apparatus 107 forwards the layer 2 packet 4 in the VXLAN packet to the user terminal 109.

For content of S1309 and S1310, refer to corresponding content of S309 and S310. Repeated parts are not described again.

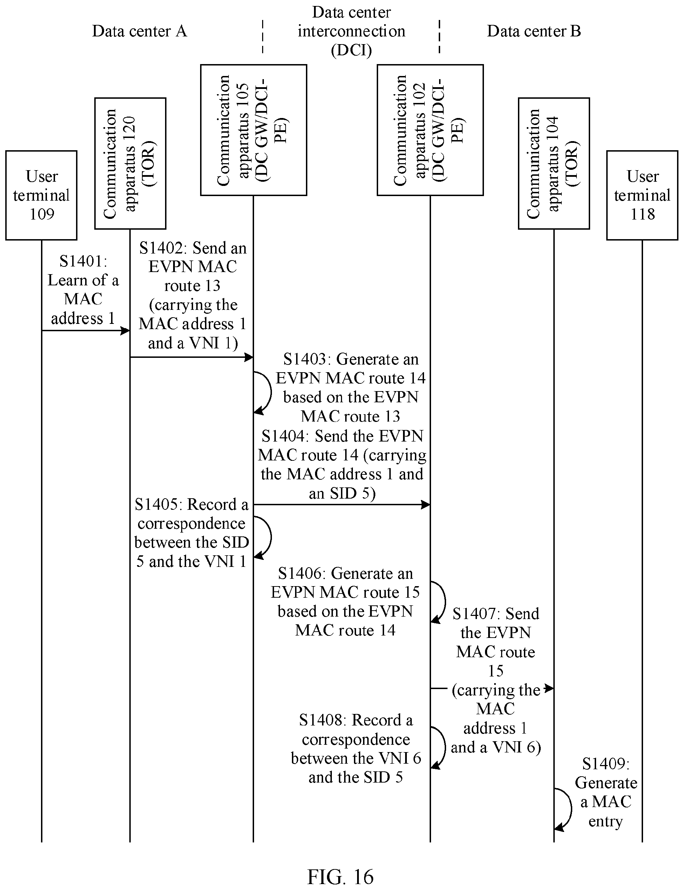

In addition, in FIG. 10(b), when the EVPN MAC route that is about the MAC address of the user terminal 109 is sent by using the communication apparatus 120, a process in which the user terminal 109 in the data center A interconnects to the user terminal in the data center B is shown in FIG. 16. The method may specifically include the following steps.

S1401: The communication apparatus 120 learns of a MAC address 1 of the user terminal 109 from the user terminal 109.

S1402: The communication apparatus 120 sends an EVPN MAC route 13 to the communication apparatus 101.

The EVPN MAC route 13 carries the MAC address 1 and a VΓΠ 1.

S1403: The communication apparatus 105 generates an EVPN MAC route 14 based on the EVPN MAC route 13.

The EVPN MAC route 14 includes an SID 1 and the MAC address 1. Specifically, as shown in FIG. 10(b), a correspondence between the VNI 1 and the SID 1 may be recorded on the communication apparatus 105. The SID 1 is an SID allocated by the communication apparatus 105 to the communication apparatus 120 corresponding to a next hop.

S1404: The communication apparatus 105 sends the EVPN MAC route 14 to the communication apparatus 102.

In a possible design, the method may further include: S1405: The communication apparatus 105 records the correspondence between the SID 1 and the VNI 1.

S1406: The communication apparatus 102 generates an EVPN MAC route 15 based on the EVPN MAC route 14.

The EVPN MAC route 15 includes a VNI 6 and the MAC address 1. Specifically, as shown in FIG. 10(b), a correspondence between the SID 1 and the VNI 2, a correspondence between an SID 4 and the VNI 2, and a correspondence between the SID 1 and the VNI 6 may be recorded on the communication apparatus 102. The VNI 2 is a VNI allocated corresponding to a next hop as the communication apparatus 101, and the VNI 6 is a VNI allocated corresponding to a next hop as the communication apparatus 105.

It can be learned that, in one aspect, EVPN MAC routes sent by the communication apparatus 101 and the communication apparatus 105 to the communication apparatus 102 each may include the SID 1. However, for the communication apparatus 102, the communication apparatus 101 and the communication apparatus 105 are different next-hop nodes, and therefore corresponding to the EVPN MAC route from the communication apparatus 101 (that is, the EVPN MAC route 2 in S804), the communication apparatus 102 allocates the VNI 2; and corresponding to the EVPN MAC route from the communication apparatus 105 (that is, the EVPN MAC route 14 in S1404), the communication apparatus 102 allocates the VNI 6.

S1407: The communication apparatus 102 sends the EVPN MAC route 15 to the communication apparatus 104.

In a possible design, the method may further include: S1408: The communication apparatus 102 records the correspondence between the VNI 6 and the SID 1.

S1409: The communication apparatus 104 generates a MAC entry based on the EVPN MAC route 15.

For content similar to S801 to S809 in an implementation process of S1401 to S1409, refer to corresponding descriptions in S801 to S809. Repeated parts are not described again.

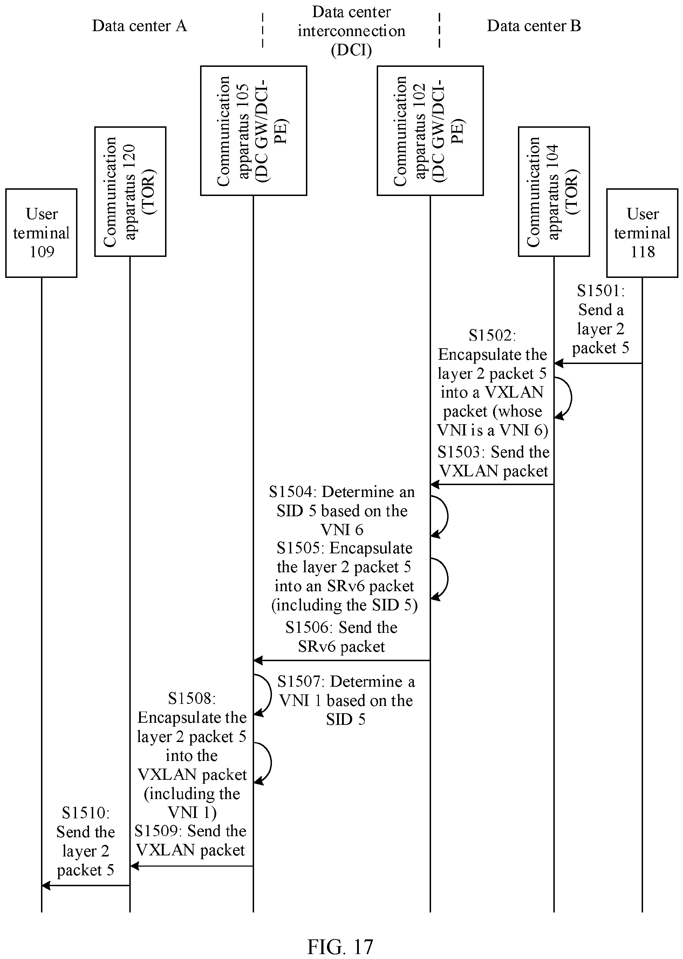

With reference to the running process of the control flow shown in FIG. 16, the following describes a process in which the user terminal 118, corresponding to the VNI 6, in the data center B forwards a packet to the user terminal 109 in the data center A. Specifically, as shown in FIG. 17, the method further includes the following steps.

S1501: The user terminal 118 forwards a layer 2 packet 5 whose destination address is a MAC address 1 to the communication apparatus 104.

S1502: The communication apparatus 104 encapsulates the layer 2 packet 5 into a VXLAN packet that includes a VNI 6 and whose destination address is the communication apparatus 102.

S1503: The communication apparatus 104 forwards the VXLAN packet to the communication apparatus 102.

For content of S1501 to S1503, refer to corresponding content of S301 to S303. Repeated parts are not described again.

S1504: The communication apparatus 102 determines an SID 1 based on the VNI 6 in the VXLAN packet.

S1505: The communication apparatus 102 performs SRv6 encapsulation on the layer 5 packet 2, to obtain an SRv6 packet.

The SRv6 packet includes the SID 1.

In addition, the communication apparatus 102 may further determine next hop information (that is, the communication apparatus 105) of the SRv6 packet based on the VNI 6 in the VXLAN packet.

S1506: The communication apparatus 102 sends the SRv6 packet to the communication apparatus 105.

S1507: The communication apparatus 105 determines a VΓΠ 1 based on the SID 1 in the SRv6 packet.

S1508: The communication apparatus 105 performs VXLAN encapsulation on the layer 2 packet 5, to obtain the VXLAN packet.

The VXLAN packet includes the VΓΠ 1.

S1509: The communication apparatus 105 forwards the VXLAN packet to the communication apparatus 120.

S1510: The communication apparatus 120 forwards the layer 2 packet 5 in the VXLAN packet to the user terminal 109.

For content of S1509 and S1510, refer to corresponding content of S309 and S310. Repeated parts are not described again.

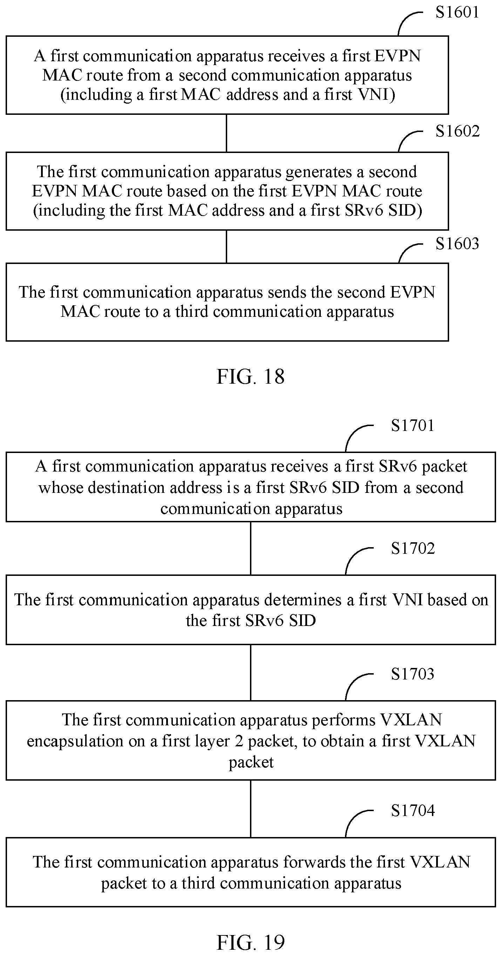

With reference to the accompanying drawings, the following describes the method provided in this embodiment from a perspective of a single communication apparatus. Specifically, as shown in FIG. 18, the method includes the following steps.

S1601: A first communication apparatus receives a first EVPN MAC route from a second communication apparatus.

The first EVPN MAC route carries a first MAC address and a first VNI.

The first communication apparatus may be specifically the communication apparatus 101 in FIG. 2 to FIG. 15, and the second communication apparatus may be specifically the communication apparatus 103 in FIG. 2 to FIG. 15. Specifically, S1601 may be specifically implemented by using content of S202, S402, or S802.

S1602: The first communication apparatus generates a second EVPN MAC route based on the first EVPN MAC route.

The second EVPN MAC route carries the first MAC address and a first SRv6 SID of the first communication apparatus corresponding to the first VNI.

Specifically, S1602 may be specifically implemented by using content of S203, S403, or S803.

S1603: The first communication apparatus sends the second EVPN MAC route to a third communication apparatus.

The third communication apparatus may be specifically the communication apparatus 102 in FIG. 2 to FIG. 15. Specifically, S1603 may be specifically implemented by using content of S204, S404, or S804.

In a possible design, in this embodiment, the first SRv6 SID is an SRv6 SID allocated to a first EVPN instance of the first communication apparatus.

For example, when the first communication apparatus is the foregoing communication apparatus 101, the first EVPN instance may be an EVPN instance 1011 in the communication apparatus 101. The first SRv6 SID may be the foregoing SID 1.

In a possible design, a MAC table corresponding to the first EVPN instance includes a correspondence between the first MAC address and the first VNI.

In a possible design, the method further includes the following S1604 to S1606.

S1604: The first communication apparatus receives a third EVPN MAC route.

The third EVPN MAC route carries a second MAC address and a second VNI, and the third EVPN MAC route corresponds to a second EVPN instance of the first communication apparatus.

The second EVPN instance may be specifically the EVPN instance 1012 in FIG. 7A and FIG. 7B and FIG. 8A and FIG. 8B. Specifically, S1604 may be implemented by using content of S602.

S1605: The first communication apparatus generates a fourth EVPN MAC route based on the third EVPN MAC route.

The fourth EVPN MAC route carries the second MAC address and a second SRv6 SID, and the second SRv6 SID is an SRv6 SID allocated to the second EVPN instance.

Specifically, S1605 may be implemented by using content of S603.

S1606: The first communication apparatus sends the fourth EVPN MAC route to the third communication apparatus.

Specifically, S1606 may be implemented by using content of S604.

In a possible design, the method further includes:
S1607: The first communication apparatus records a correspondence between the first SRv6 SID and the first VNI.

Specifically, S1607 may be implemented by using content of S805.

In a possible design, the first SRv6 SID is associated with a first operation. The first operation is performing VXLAN encapsulation.

In a possible design, the method further includes the following S1608 to S1610.

S1608: The first communication apparatus receives a fifth EVPN MAC route.

The fifth EVPN MAC route carries a third MAC address and the first VNI.

S1608 may be implemented by using content of S1002. The fifth EVPN MAC route may be specifically the EVPN MAC route 7 in S1002.

S1609: The first communication apparatus generates a sixth EVPN MAC route based on the fifth EVPN MAC route.

The sixth EVPN MAC route carries the third MAC address and a third SRv6 SID corresponding to the first VNI.

S1609 may be implemented by using content of S1003. The sixth EVPN MAC route may be specifically the EVPN MAC route 8 in S1003.

S1610: The first communication apparatus sends the sixth EVPN MAC route to the third communication apparatus.

S1610 may be implemented by using content of 51004.

In a possible design, the method further includes the following S1611 to S1613.

S1611: The first communication apparatus receives a seventh EVPN MAC route from a fourth communication apparatus.

The seventh EVPN MAC route carries a first MAC address and a first VNI.

The fourth communication apparatus may be specifically the communication apparatus 107 in FIG. 10(b). Specifically, S1611 may be implemented by using the content of S1202, and the seventh EVPN MAC route may be the EVPN MAC route 10.

S1612: The first communication apparatus generates an eighth EVPN MAC route based on the seventh EVPN MAC route.

The eighth EVPN MAC route carries the first MAC address and a fourth SRv6 SID corresponding to the first VNI.

Specifically, S1612 may be implemented by using the content of S1203, and the eighth EVPN MAC route may be the EVPN MAC route 11.

S1613: The first communication apparatus sends the eighth EVPN MAC route to the third communication apparatus.

Specifically, S1613 may be implemented by using content of S1204.

The following describes a running process of the first communication apparatus corresponding to FIG. 18 from a perspective of a packet forwarding process. Specifically, as shown in FIG. 19, the method further includes the following steps.

S1701: A first communication apparatus receives a first SRv6 packet whose destination address is a first SRv6 SID from a second communication apparatus.

The first SRv6 packet includes a first layer 2 packet whose destination address is a first MAC address.

Specifically, the first communication apparatus may be specifically the communication apparatus 101 in FIG. 2 to FIG. 15, and the second communication apparatus may be specifically the communication apparatus 102 in FIG. 2 to FIG. 15. Specifically, S1701 may be specifically implemented by using content of S306, S506, or S906.

S1702: The first communication apparatus determines a first VNI based on the first SRv6 SID.

Specifically, S1702 may be specifically implemented by using content of S307, S507, or S907.

In a possible design, the first SRv6 SID is an SRv6 SID allocated to a first EVPN instance of the first communication apparatus. The first EVPN instance may be the foregoing EVPN instance 1011.

In a possible design, S1702 includes:
S17021: The first communication apparatus determines the first EVPN instance based on the first SRv6 SID.
S17022: The first communication apparatus determines, based on the first MAC address, the first VNI from a MAC table corresponding to the first EVPN instance, where the MAC table includes a correspondence between the first MAC address and the first VNI.

Specifically, for a specific implementation process of S17021 and S17022, refer to the foregoing content of S5071 and S5072.

In another possible design, S1702 includes:
S1702a: The first communication apparatus determines the first VNI based on the first SRv6 SID and a correspondence that is between the first SRv6 SID and the first VNI and that is recorded in the first communication apparatus.

Specifically, for a specific implementation process of S1702a, refer to the foregoing content of S907.

The first SRv6 SID is associated with the first operation. The first operation is performing VXLAN encapsulation.

S1703: The first communication apparatus performs VXLAN encapsulation on the first layer 2 packet, to obtain a first VXLAN packet.

The first VXLAN packet includes the first VNI 1.

Specifically, S1703 may be specifically implemented by using content of S308, S508, or S908.

S1704: The first communication apparatus forwards the first VXLAN packet to a third communication apparatus.

Specifically, S1703 may be specifically implemented by using content of S309, S509, or S909.

In a possible design, the method further includes the following S1705 to S1709.

S1705: The first communication apparatus receives a second SRv6 packet whose destination address is a second SRv6 SID from the second communication apparatus.

The second SRv6 packet includes a second layer 2 packet whose destination address is a second MAC address.

Specifically, S1705 may be specifically implemented by using content of S706.

S1706: The first communication apparatus determines a second EVPN instance based on the second SRv6 SID.

Specifically, S1706 may be specifically implemented by using content of S7071. The second EVPN instance may be understood as an EVPN instance 1012.

S1707: The first communication apparatus determines, based on the second MAC address, a second VNI from a MAC table corresponding to the second EVPN instance.

The MAC table includes a correspondence between the second MAC address and the second VNI.

Specifically, S1707 may be specifically implemented by using content of S7072.

S1708: The first communication apparatus performs VXLAN encapsulation on the second layer 2 packet, to obtain a second VXLAN packet.

The second VXLAN packet includes the second VNI.

Specifically, S1708 may be specifically implemented by using content of S708.

S1709: The first communication apparatus forwards the second VXLAN packet.

Specifically, S1709 may be specifically implemented by using content of S709.

In a possible design, the method further includes the following S1710 to S1713.

S1710: The first communication apparatus receives a third SRv6 packet whose destination address is a third SRv6 SID from the second communication apparatus.

The third SRv6 packet includes a third layer 2 packet whose destination address is a third MAC address.

Specifically, S1710 may be specifically implemented by using content of S1106.

S1711: The first communication apparatus determines the first VNI based on the third SRv6 SID and a correspondence that is between the third SRv6 SID and the first VNI and that is recorded in the first communication apparatus.

Specifically, S1711 may be specifically implemented by using content of S1107.

S1712: The first communication apparatus performs VXLAN encapsulation on the third layer 2 packet, to obtain a third VXLAN packet.

The third VXLAN packet includes the first VNI 1.

Specifically, S1712 may be specifically implemented by using content of S1108.

S1713: The first communication apparatus forwards the third VXLAN packet to the third communication apparatus.

Specifically, S1713 may be specifically implemented by using content of S1109.

In a possible design, the method further includes the following S1714 to S1717.

S1714: The first communication apparatus receives a fourth SRv6 packet whose destination address is a fourth SRv6 SID from the second communication apparatus.

The fourth SRv6 packet includes a fourth layer 2 packet whose destination address is a first MAC address.

Specifically, S1714 may be specifically implemented by using content of S1306.

S1715: The first communication apparatus determines the first VNI based on the fourth SRv6 SID and a correspondence that is between the fourth SRv6 SID and the first VNI and that is recorded in the first communication apparatus.

Specifically, S1715 may be specifically implemented by using content of S1307.

S1716: The first communication apparatus performs VXLAN encapsulation on the fourth layer 2 packet, to obtain a fourth VXLAN packet.

The fourth VXLAN packet includes the first VNI 1.

Specifically, S1716 may be specifically implemented by using content of S1308.

S1717: The first communication apparatus forwards the fourth VXLAN packet to a fourth communication apparatus.

Specifically, S1717 may be specifically implemented by using content of S1309.

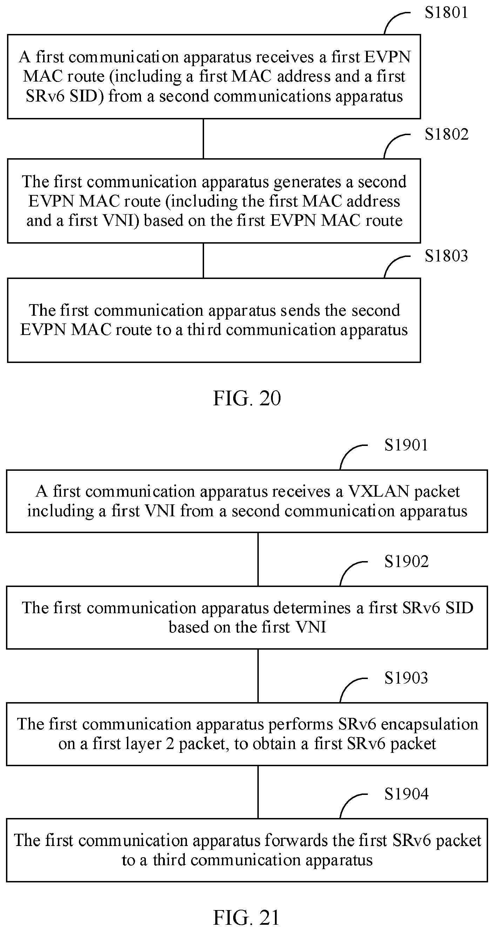

In addition, as shown in FIG. 20, the method provided in this embodiment may further include the following steps.

S1801: A first communication apparatus receives a first EVPN MAC route from a second communication apparatus.

The first EVPN MAC route carries a first MAC address and a first SRv6 SID.

The first communication apparatus may be the communication apparatus 102 in FIG. 2 to FIG. 15, and the second communication apparatus may be the communication apparatus 101 in FIG. 2 to FIG. 15. Specifically, S1801 may be specifically implemented by using content of S204, S404, or S804.

S1802: The first communication apparatus generates a second EVPN MAC route based on the first EVPN MAC route.

The second EVPN MAC route carries the first MAC address and a first VNI corresponding to the first SRv6 SID.

Specifically, S1802 may be specifically implemented by using content of S205, S405, or S806.

S1803: The first communication apparatus sends the second EVPN MAC route to a third communication apparatus.

Specifically, S1803 may be specifically implemented by using content of S206, S406, or S807.

In a possible design, the first VNI is a VNI allocated to a first EVPN instance of the first communication apparatus.

For example, when the first communication apparatus is the foregoing communication apparatus 102, the first EVPN instance may be an EVPN instance 1021 in the communication apparatus 102. The first VNI may be the foregoing VNI 2.

In a possible design, a MAC table corresponding to the first EVPN instance includes a correspondence between the first MAC address and the first SRv6 SID.

In a possible design, the method further includes S1804 to S1806.

S1804: The first communication apparatus receives a third EVPN MAC route.

The third EVPN MAC route carries a second MAC address and a second SRv6 SID; and the third EVPN MAC route corresponds to a second EVPN instance.

The second EVPN instance may be specifically the EVPN instance 1022 in FIG. 7A and FIG. 7B and FIG. 8A and FIG. 8B. Specifically, S1804 may be implemented by using content of S604.

S1805: The first communication apparatus generates a fourth EVPN MAC route based on the third EVPN MAC route.

The fourth EVPN MAC route carries the second MAC address and a second VNI, and the second VNI is a VNI allocated to the second EVPN instance. Specifically, S1805 may be implemented by using content of S605.

S1806: The first communication apparatus sends the fourth EVPN MAC route to the third communication apparatus.

Specifically, S1806 may be implemented by using content of S606.

In a possible design, the method further includes:
S1807: The first communication apparatus records a correspondence between the first VNI and the first SRv6 SID.

Specifically, S1807 may be implemented by using content of S808.

In a possible design, the method further includes the following S1808 to S1810.

S1808: The first communication apparatus receives a fifth EVPN MAC route.

The fifth EVPN MAC route carries a third MAC address and the first SRv6 SID. S1808 may be implemented by using content of S1004. The fifth EVPN MAC route may be specifically the EVPN MAC route 8 in S 1004.

S1809: The first communication apparatus generates a sixth EVPN MAC route based on the fifth EVPN MAC route.

The sixth EVPN MAC route carries the third MAC address and a third VNI corresponding to the first SRv6 SID.

S1809 may be implemented by using content of S1006. The sixth EVPN MAC route may be specifically the EVPN MAC route 9 in S1006.

S1810: The first communication apparatus sends the sixth EVPN MAC route to the third communication apparatus.

S1810 may be implemented by using content of S1007.

In a possible design, the method further includes the following S1811 to S1813.

S1811: The first communication apparatus receives a seventh EVPN MAC route from a fourth communication apparatus.

The seventh EVPN MAC route carries a first MAC address and a first SRv6 SID.

The fourth communication apparatus may be specifically the communication apparatus 105 in FIG. 10(b). Specifically, S1811 may be implemented by using the content of S1404, and the seventh EVPN MAC route may be the EVPN MAC route 14.

S1812: The first communication apparatus generates an eighth EVPN MAC route based on the seventh EVPN MAC route.

The eighth EVPN MAC route carries the first MAC address and a fourth VNI corresponding to the first SRv6 SID.

Specifically, S1812 may be implemented by using the content of S1406, and the eighth EVPN MAC route may be the EVPN MAC route 15.

S1813: The first communication apparatus sends the eighth EVPN MAC route to the third communication apparatus.

Specifically, S1812 may be implemented by using content of S1407.

The following describes a running process of the first communication apparatus corresponding to FIG. 20 from a perspective of a packet forwarding process. Specifically, as shown in FIG. 21, the method further includes the following steps.

S1901: A first communication apparatus receives a VXLAN packet including a first VNI from a second communication apparatus.

The first VXLAN packet includes a first layer 2 packet whose destination address is a first MAC address.

Specifically, the first communication apparatus may be specifically the communication apparatus 102 in FIG. 2 to FIG. 15, and the second communication apparatus may be specifically the communication apparatus 104 in FIG. 2 to FIG. 15. Specifically, S1901 may be specifically implemented by using content of S303, S503, or S903.

S1902: The first communication apparatus determines a first SRv6 SID based on the first VNI.

Specifically, S1902 may be specifically implemented by using content of S304, S504, or S904.

In a possible design, the first VNI is a VNI allocated to a first EVPN instance of the first communication apparatus.

In a possible design, S1902 includes:
S19021: The first communication apparatus determines the first EVPN instance based on the first VNI.
S19022: The first communication apparatus determines, based on the first MAC address, the first SRv6 SID from a MAC table corresponding to the first EVPN instance.

The MAC table includes a correspondence between the first MAC address and the first SRv6 SID.

Specifically, for a specific implementation process of S19021 and S19022, refer to the foregoing content of S5041 and S5042.

In another possible design, S1902 includes:
S1902a: The first communication apparatus determines the first SRv6 SID based on the first VNI and a correspondence that is between the first VNI and the first SRv6 SID and that is recorded in the first communication apparatus.

Specifically, for a specific implementation process of S1902a, refer to the foregoing content of S904.

S1903: The first communication apparatus performs SRv6 encapsulation on a first layer 2 packet, to obtain a first SRv6 packet.

The first SRv6 packet includes the first SRv6 SID.

Specifically, S1903 may be specifically implemented by using content of S305, S505, or S905.

S1904: The first communication apparatus forwards the first SRv6 packet to a third communication apparatus.

Specifically, S1904 may be specifically implemented by using content of S306, S506, or S906.

In a possible design, the method further includes the following S1905 to S1909.

S1905: The first communication apparatus receives a second VXLAN packet including a second VNI from the second communication apparatus.

The second VXLAN packet includes a second layer 2 packet whose destination address is a second MAC address.

S1906: The first communication apparatus determines a second EVPN instance based on the second VNI.

S1907: The first communication apparatus determines, based on the second MAC address, a second SRv6 SID from a MAC table corresponding to the second EVPN instance.

The MAC table includes a correspondence between the second MAC address and the second SRv6 SID.

S1908: The first communication apparatus performs SRv6 encapsulation on a second layer 2 packet, to obtain a second SRv6 packet.

The second SRv6 packet includes the second SRv6 SID.

S1909: The first communication apparatus forwards the second SRv6 packet.

The foregoing S1905 to S1909 may be specifically implemented by using the foregoing content of S703 to S706. The second EVPN instance may be understood as an EVPN instance 1022.

In a possible design, the method further includes the following S1910 to S1913.

S1910: The first communication apparatus receives a third VXLAN packet including a third VNI from the second communication apparatus.

The third VXLAN packet includes a third layer 2 packet whose destination address is a third MAC address.

S1911: The first communication apparatus determines the first SRv6 SID based on the third VNI and a correspondence that is between the third VNI and the first SRv6 SID and that is recorded in the first communication apparatus.

S1912: The first communication apparatus performs SRv6 encapsulation on a third layer 2 packet, to obtain a third SRv6 packet.

The third SRv6 packet includes the first SRv6 SID.

S1913: The first communication apparatus forwards the third SRv6 packet to the third communication apparatus.

The foregoing S1910 to S1913 may be specifically implemented by using the foregoing content of S1103 to S1106.

In a possible design, the method further includes the following S1914 to S1917.

S1914: The first communication apparatus receives a fourth VXLAN packet including a fourth VNI from the second communication apparatus.

The fourth VXLAN packet includes a fourth layer 2 packet whose destination address is the first MAC address.

S1915: The first communication apparatus determines the first SRv6 SID based on the fourth VNI and a correspondence that is between the fourth VNI and the first SRv6 SID and that is recorded in the first communication apparatus.

S1916: The first communication apparatus performs SRv6 encapsulation on a fourth layer 2 packet, to obtain a fourth SRv6 packet.

The fourth SRv6 packet includes the first SRv6 SID.

S1917: The first communication apparatus forwards the fourth SRv6 packet to a fourth communication apparatus.

The foregoing S1914 to S1917 may be specifically implemented by using the foregoing content of S1303 to S1306.

Based on the foregoing method embodiments, the following describes the communication apparatus provided in this embodiment.

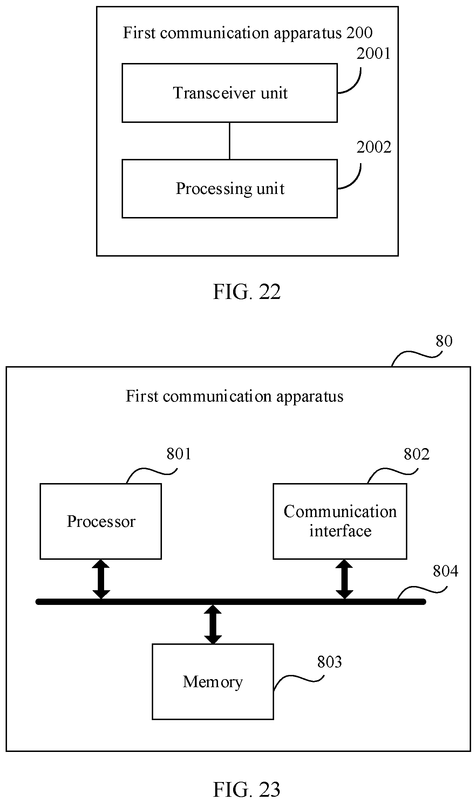

FIG. 22 is a possible schematic diagram of a structure of a communication apparatus in the foregoing method embodiments. The first communication apparatus 200 may implement functions of the communication apparatus 101 in embodiments shown in FIG. 2 to FIG. 15, the first communication apparatus 200 may implement functions of the communication apparatus 102 in embodiments shown in FIG. 2 to FIG. 17, or the first communication apparatus 200 may implement functions of the first communication apparatus in embodiments shown in FIG. 18 to FIG. 21.

Refer to FIG. 22. The first communication apparatus 200 includes a transceiver unit 2001 and a processing unit 2002. These units may perform corresponding functions of each communication apparatus in the foregoing method example.

In a possible implementation, the transceiver unit 2001 is configured to receive a first Ethernet virtual private network media access control EVPN MAC route from a second communication apparatus, where the first EVPN MAC route carries a first MAC address and a first virtual extensible local area network identifier VNI.

The processing unit 2002 is configured to generate a second EVPN MAC route based on the first EVPN MAC route, where the second EVPN MAC route carries the first MAC address and a first segment routing over IPv6 segment identifier SRv6 SID that is of the first communication apparatus and that corresponds to the first VNI.

The transceiver unit 2001 is configured to send the second EVPN MAC route to a third communication apparatus.

In a possible design, the transceiver unit 2001 is configured to receive a first Ethernet virtual private network media access control EVPN MAC route from a second communication apparatus, where the first EVPN MAC route carries a first MAC address and a first virtual extensible local area network identifier VNI.

The processing unit 2002 is configured to generate a second EVPN MAC route based on the first EVPN MAC route, where the second EVPN MAC route carries the first MAC address and a first segment routing over IPv6 segment identifier SRv6 SID that is of the first communication apparatus and that corresponds to the first VNI.

The transceiver unit 2001 is further configured to send the second EVPN MAC route to a third communication apparatus.

In a possible design, the first SRv6 SID is an SRv6 SID allocated to a first Ethernet virtual private network EVPN instance of the first communication apparatus.

In a possible design, a MAC table corresponding to the first EVPN instance includes a correspondence between the first MAC address and the first VNI.

In a possible design, the transceiver unit 2001 is further configured to receive a third EVPN MAC route, where the third EVPN MAC route carries a second MAC address and a second VNI, and the third EVPN MAC route corresponds to a second EVPN instance of the first communication apparatus.

The processing unit 2002 is further configured to generate a fourth EVPN MAC route based on the third EVPN MAC route, where the fourth EVPN MAC route carries the second MAC address and a second SRv6 SID, and the second SRv6 SID is an SRv6 SID allocated to the second EVPN instance.

The transceiver unit 2001 is further configured to send the fourth EVPN MAC route to the third communication apparatus.

In a possible design, the processing unit 2002 is further configured to record, by the first communication apparatus, a correspondence between the first SRv6 SID and the first VNI.

In a possible design, the first SRv6 SID is associated with a first operation, and the first operation is performing virtual extensible local area network VXLAN encapsulation.

In a possible design, the transceiver unit 2001 is further configured to receive a fifth EVPN MAC route, where the fifth EVPN MAC route carries a third MAC address and the first VNI.

The processing unit 2002 is further configured to generate a sixth EVPN MAC route based on the fifth EVPN MAC route, where the sixth EVPN MAC route carries the third MAC address and a third SRv6 SID corresponding to the first VNI. The first communication apparatus sends the sixth EVPN MAC route to the third communication apparatus.

In a possible design, the transceiver unit 2001 is further configured to receive a seventh EVPN MAC route from a fourth communication apparatus, where the seventh EVPN MAC route carries the first MAC address and the first VNI.

The processing unit 2002 is further configured to generate an eighth EVPN MAC route based on the seventh EVPN MAC route, where the eighth EVPN MAC route carries the first MAC address and a fourth SRv6 SID corresponding to the first VNI.

The transceiver unit 2001 is further configured to send the eighth EVPN MAC route to the third communication apparatus

In a possible design, the transceiver unit 2001 is further configured to receive a first SRv6 packet whose destination address is the first SRv6 SID from the third communication apparatus, where the SRv6 packet includes a first layer 2 packet whose destination address is the first MAC address.

The processing unit 2002 is further configured to determine the first VNI based on the first SRv6 SID.

The processing unit 2002 is further configured to perform VXLAN encapsulation on the first layer 2 packet to obtain a first VXLAN packet, where the first VXLAN packet includes the first VNI.

The transceiver unit 2001 is further configured to forward the first VXLAN packet to the second communication apparatus.

In a possible design, that the processing unit 2002 is further configured to determine the first VNI based on the first SRv6 SID includes:

The processing unit 2002 is further configured to determine the first EVPN instance based on the first SRv6 SID; and
the processing unit 2002 is further configured to determine, based on the first MAC address, the first VNI from the MAC table corresponding to the first EVPN instance, where the MAC table includes the correspondence between the first MAC address and the first VNI.

In a possible design, the processing unit 2002 is further configured to receive a second SRv6 packet whose destination address is the second SRv6 SID from the third communication apparatus, where the second SRv6 packet includes a second layer 2 packet whose destination address is the second MAC address; the processing unit 2002 is further configured to determine the second EVPN instance based on the second SRv6 SID; the processing unit 2002 is further configured to determine, based on the second MAC address, the second VNI from a MAC table corresponding to the second EVPN instance, where the MAC table includes a correspondence between the second MAC address and the second VNI; the first communication apparatus performs VXLAN encapsulation on the second layer 2 packet to obtain a second VXLAN packet, where the second VXLAN packet includes the second VNI; and the transceiver unit 2001 is further configured to forward the second VXLAN packet.

In a possible design, that the processing unit 2002 is further configured to determine the first VNI based on the first SRv6 SID includes: The processing unit 2002 is further configured to determine the first VNI based on the first SRv6 SID and the correspondence that is between the first SRv6 SID and the first VNI and that is recorded in the first communication apparatus.

In a possible design, the transceiver unit 2001 is further configured to receive a third SRv6 packet whose destination address is the third SRv6 SID from the third communication apparatus, where the third SRv6 packet includes a third layer 2 packet whose destination address is the third MAC address; the processing unit 2002 is further configured to determine the first VNI based on the third SRv6 SID and a correspondence that is between the third SRv6 SID and the first VNI and that is recorded in the first communication apparatus; the processing unit 2002 is further configured to perform VXLAN encapsulation on the third layer 2 packet to obtain a third VXLAN packet, where the third VXLAN packet includes the first VNI; and the transceiver unit 2001 is further configured to forward the third VXLAN packet to the second communication apparatus.

In a possible design, the transceiver unit 2001 is further configured to receive a fourth SRv6 packet whose destination address is the fourth SRv6 SID from the third communication apparatus, where the fourth SRv6 packet includes a fourth layer 2 packet whose destination address is the first MAC address; the processing unit 2002 is further configured to determine the first VNI based on the fourth SRv6 SID and a correspondence that is between the fourth SRv6 SID and the first VNI and that is recorded in the first communication apparatus; the processing unit 2002 is further configured to perform VXLAN encapsulation on the fourth layer 2 packet to obtain a fourth VXLAN packet, where the fourth VXLAN packet includes the first VNI; and the transceiver unit 2001 is further configured to forward the fourth VXLAN packet to the fourth communication apparatus.

In another implementation, the transceiver unit 2001 is configured to receive a first SRv6 packet whose destination address is a first segment routing over IPv6 segment identifier SRv6 SID from a second communication apparatus, where the first SRv6 packet includes a first layer 2 packet whose destination address is a first media access control MAC address; the processing unit 2002 is configured to determine a first virtual extensible local area network identifier VNI based on the first SRv6 SID; the processing unit 2002 is further configured to perform virtual extensible local area network VXLAN encapsulation on the first layer 2 packet to obtain a first VXLAN packet, where the first VXLAN packet includes the first VNI; and the transceiver unit 2001 is further configured to forward the first VXLAN packet to a third communication apparatus.

In a possible design, the first SRv6 SID is an SRv6 SID allocated to a first Ethernet virtual private network EVPN instance of the first communication apparatus.

In a possible design, that the processing unit 2002 is configured to determine the first VNI based on the first SRv6 SID includes: The processing unit 2002 is configured to determine the first EVPN instance based on the first SRv6 SID; the processing unit 2002 is configured to determine, based on the first MAC address, the first VNI from a MAC table corresponding to the first EVPN instance, where the MAC table includes a correspondence between the first MAC address and the first VNI.

In a possible design, the transceiver unit 2001 is further configured to receive a second SRv6 packet whose destination address is a second SRv6 SID from the second communication apparatus, where the second SRv6 packet includes a second layer 2 packet whose destination address is a second MAC address; the processing unit 2002 is further configured to determine a second EVPN instance based on the second SRv6 SID; the processing unit 2002 is further configured to determine, based on the second MAC address, a second VNI from a MAC table corresponding to the second EVPN instance, where the MAC table includes a correspondence between the second MAC address and the second VΓΠ; the processing unit 2002 is further configured to perform VXLAN encapsulation on the second layer 2 packet to obtain a second VXLAN packet, where the second VXLAN packet includes the second VΓΠ; and the transceiver unit 2001 is further configured to forward the second VXLAN packet.

In a possible design, that the processing unit 2002 is further configured to determine the first VNI based on the first SRv6 SID includes: The processing unit 2002 is further configured to determine the first VNI based on the first SRv6 SID and a correspondence that is between the first SRv6 SID and the first VNI and that is recorded in the first communication apparatus.

In a possible design, the first SRv6 SID is associated with a first operation, and the first operation is performing VXLAN encapsulation.

In a possible design, the transceiver unit 2001 is further configured to receive a third SRv6 packet whose destination address is a third SRv6 SID from the second communication apparatus, where the third SRv6 packet includes a third layer 2 packet whose destination address is a third MAC address.

The processing unit 2002 is further configured to determine the first VNI based on the third SRv6 SID and a correspondence that is between the third SRv6 SID and the first VNI and that is recorded in the first communication apparatus.

The processing unit 2002 is further configured to perform VXLAN encapsulation on the third layer 2 packet to obtain a third VXLAN packet, where the third VXLAN packet includes the first VNI.

The transceiver unit 2001 is further configured to forward the third VXLAN packet to the third communication apparatus.

In a possible design, the transceiver unit 2001 is further configured to receive a fourth SRv6 packet whose destination address is a fourth SRv6 SID from the second communication apparatus, where the fourth SRv6 packet includes a fourth layer 2 packet whose destination address is the first MAC address.

The processing unit 2002 is further configured to determine the first VNI based on the fourth SRv6 SID and a correspondence that is between the fourth SRv6 SID and the first VNI and that is recorded in the first communication apparatus.

The processing unit 2002 is further configured to perform VXLAN encapsulation on the fourth layer 2 packet to obtain a fourth VXLAN packet, where the fourth VXLAN packet includes the first VNI.

The transceiver unit 2001 is further configured to forward the fourth VXLAN packet to a fourth communication apparatus.

In another possible implementation, the transceiver unit 2001 is configured to receive a first Ethernet virtual private network media access control EVPN MAC route from a second communication apparatus, where the first EVPN MAC route carries a first MAC address and a first SRv6 SID.

The processing unit 2002 is configured to generate a second EVPN MAC route based on the first EVPN MAC route, where the second EVPN MAC route carries the first MAC address and a first virtual extensible local area network identifier VNI corresponding to the first SRv6 SID.

The transceiver unit 2001 is further configured to send the second EVPN MAC route to a third communication apparatus.

In a possible design, the first VNI is a VNI allocated to a first Ethernet virtual private network EVPN instance of the first communication apparatus.

In a possible design, a MAC table corresponding to the first EVPN instance includes a correspondence between the first MAC address and the first SRv6 SID.

In a possible design, the transceiver unit 2001 is further configured to receive a third EVPN MAC route, where the third EVPN MAC route carries a second MAC address and a second SRv6 SID, and the third EVPN MAC route corresponds to a second EVPN instance.

The processing unit 2002 is further configured to generate a fourth EVPN MAC route based on the third EVPN MAC route, where the fourth EVPN MAC route carries the second MAC address and a second VNI, and the second VNI is a VNI allocated to the second EVPN instance.

The transceiver unit 2001 is further configured to send the fourth EVPN MAC route to the third communication apparatus.

In a possible design, the processing unit 2002 is further configured to record a correspondence between the first VNI and the first SRv6 SID.

In a possible design, the transceiver unit 2001 is further configured to receive a fifth EVPN MAC route, where the fifth EVPN MAC route carries a third MAC address and the first SRv6 SID.

The processing unit 2002 is further configured to generate a sixth EVPN MAC route based on the fifth EVPN MAC route, where the sixth EVPN MAC route carries the third MAC address and a third VNI corresponding to the first SRv6 SID.

The transceiver unit 2001 is further configured to send the sixth EVPN MAC route to the third communication apparatus.

In a possible design, the transceiver unit 2001 is further configured to receive a seventh EVPN MAC route from a fourth communication apparatus, where the seventh EVPN MAC route carries the first MAC address and the first SRv6 SID.

The processing unit 2002 is further configured to generate an eighth EVPN MAC route based on the seventh EVPN MAC route, where the eighth EVPN MAC route carries the first MAC address and a fourth VNI corresponding to the first SRv6 SID.

The transceiver unit 2001 is further configured to send the eighth EVPN MAC route to the third communication apparatus.

In a possible design, the transceiver unit 2001 is further configured to receive a first VXLAN packet that is from the third communication apparatus and that includes the first VNI, where the first VXLAN packet includes a first layer 2 packet whose destination address is the first MAC address.

The processing unit 2002 is further configured to generate the first SRv6 SID based on the first VNI.

The processing unit 2002 is further configured to perform SRv6 encapsulation on the first layer 2 packet to obtain a first SRv6 packet, where the first SRv6 packet includes the first SRv6 SID.

The transceiver unit 2001 is further configured to forward the first SRv6 packet to the second communication apparatus.

In a possible design, that the processing unit 2002 is further configured to determine the first SRv6 SID based on the first VNI includes:

The processing unit 2002 is further configured to determine the first EVPN instance based on the first VNI; and
the processing unit 2002 is further configured to determine, based on the first MAC address, the first SRv6 SID from the MAC table corresponding to the first EVPN instance, where the MAC table includes the correspondence between the first MAC address and the first SRv6 SID.

In a possible design, the transceiver unit 2001 is further configured to receive a second VXLAN packet that is from the third communication apparatus and that includes the second VNI, where the second VXLAN packet includes a second layer 2 packet whose destination address is the second MAC address.

The processing unit 2002 is further configured to determine a second EVPN instance based on the second VNI.

The processing unit 2002 is further configured to determine, based on the second MAC address, the second SRv6 SID from a MAC table corresponding to the second EVPN instance, where the MAC table includes a correspondence between the second MAC address and the second SRv6 SID.

The processing unit 2002 is further configured to perform SRv6 encapsulation on the second layer 2 packet to obtain a second SRv6 packet, where the second SRv6 packet includes the second SRv6 SID.

The transceiver unit 2001 is further configured to forward the second SRv6 packet.

In a possible design, that the processing unit 2002 is further configured to determine the first SRv6 SID based on the first VNI includes:

The processing unit 2002 is further configured to determine the first SRv6 SID based on the first VNI and the correspondence that is between the first VNI and the first SRv6 SID and that is recorded in the first communication apparatus.

In a possible design, the transceiver unit 2001 is further configured to receive a third VXLAN packet that is from the third communication apparatus and that includes the third VNI, where the third VXLAN packet includes a third layer 2 packet whose destination address is the third MAC address.

The processing unit 2002 is further configured to determine the first SRv6 SID based on the third VNI and a correspondence that is between the third VNI and the first SRv6 SID and that is recorded in the first communication apparatus.

The processing unit 2002 is further configured to perform SRv6 encapsulation on the third layer 2 packet to obtain a third SRv6 packet, where the third SRv6 packet includes the first SRv6 SID.

The transceiver unit 2001 is further configured to forward the third SRv6 packet to the second communication apparatus.

In a possible design, the transceiver unit 2001 is further configured to receive a fourth VXLAN packet that is from the third communication apparatus and that includes the fourth VNI, where the fourth VXLAN packet includes a fourth layer 2 packet whose destination address is the first MAC address.

The processing unit 2002 is further configured to determine the first SRv6 SID based on the fourth VNI and a correspondence that is between the fourth VNI and the first SRv6 SID and that is recorded in the first communication apparatus.

The processing unit 2002 is further configured to perform SRv6 encapsulation on the fourth layer 2 packet to obtain a fourth SRv6 packet, where the fourth SRv6 packet includes the first SRv6 SID.

The transceiver unit 2001 is further configured to forward the fourth SRv6 packet to the fourth communication apparatus.

In another possible implementation, the transceiver unit 2001 is configured to receive a first virtual extensible local area network VXLAN packet that is from a second communication apparatus and that includes a first virtual extensible local area network identifier VNI, where the first VXLAN packet includes a first layer 2 packet whose destination address is a first media access control MAC address.

The processing unit 2002 is configured to determine a first segment routing over IPv6 segment identifier SRv6 SID based on the first VNI.

The processing unit 2002 is further configured to perform SRv6 encapsulation on the first layer 2 packet to obtain a first SRv6 packet, where the first SRv6 packet includes the first SRv6 SID.

The transceiver unit 2001 is further configured to forward the first SRv6 packet to a third communication apparatus.

In a possible design, the first VNI is a VNI allocated to a first Ethernet virtual private network EVPN instance of the first communication apparatus.

In a possible design, that the processing unit 2002 is configured to determine the first segment routing over IPv6 segment identifier SRv6 SID based on the first VNI includes:

The processing unit 2002 is configured to determine the first EVPN instance based on the first VNI; and
the processing unit 2002 is configured to determine, based on the first MAC address, the first SRv6 SID from a MAC table corresponding to the first EVPN instance, where the MAC table includes a correspondence between the first MAC address and the first SRv6 SID.

In a possible design, the transceiver unit 2001 is further configured to receive a second VXLAN packet that is from the second communication apparatus and that includes a second VNI, where the second VXLAN packet includes a second layer 2 packet whose destination address is a second MAC address.

The processing unit 2002 is further configured to determine a second EVPN instance based on the second VNI.

The processing unit 2002 is further configured to determine, based on the second MAC address, a second SRv6 SID from a MAC table corresponding to the second EVPN instance, where the MAC table includes a correspondence between the second MAC address and the second SRv6 SID.

The processing unit 2002 is further configured to perform SRv6 encapsulation on the second layer 2 packet to obtain a second SRv6 packet, where the second SRv6 packet includes the second SRv6 SID.

The transceiver unit 2001 is further configured to forward the second SRv6 packet.

In a possible design, that the processing unit 2002 is further configured to determine the first segment routing over IPv6 segment identifier SRv6 SID based on the first VNI includes:

The processing unit 2002 is further configured to determine the first SRv6 SID based on the first VNI and a correspondence that is between the first VNI and the first SRv6 SID and that is recorded in the first communication apparatus.

In a possible design, the transceiver unit 2001 is further configured to receive a third VXLAN packet that is from the second communication apparatus and that includes a third VNI, where the third VXLAN packet includes a third layer 2 packet whose destination address is a third MAC address.

The processing unit 2002 is further configured to determine the first SRv6 SID based on the third VNI and a correspondence that is between the third VNI and the first SRv6 SID and that is recorded in the first communication apparatus.

The processing unit 2002 is further configured to perform SRv6 encapsulation on the third layer 2 packet to obtain a third SRv6 packet, where the third SRv6 packet includes the first SRv6 SID.

The transceiver unit 2001 is further configured to forward the third SRv6 packet to the third communication apparatus.

In a possible design, the transceiver unit 2001 is further configured to receive a fourth VXLAN packet that is from the second communication apparatus and that includes the fourth VNI, where the fourth VXLAN packet includes a fourth layer 2 packet whose destination address is the first MAC address.

The processing unit 2002 is further configured to determine the first SRv6 SID based on the fourth VNI and a correspondence that is between the fourth VNI and the first SRv6 SID and that is recorded in the first communication apparatus.

The processing unit 2002 is further configured to perform SRv6 encapsulation on the fourth layer 2 packet to obtain a fourth SRv6 packet, where the fourth SRv6 packet includes the first SRv6 SID.

The transceiver unit 2001 is further configured to forward the fourth SRv6 packet to a fourth communication apparatus.

It should be noted that, in this embodiment of this application, division into the units is an example, and is merely a logical function division. In actual implementation, another division manner may be used. Functional units in embodiments of this application may be integrated into one processing unit, or each of the units may exist alone physically, or two or more units are integrated into one unit. For example, in the foregoing embodiments, the processing unit and the sending unit may be a same unit or different units. The integrated unit may be implemented in a form of hardware, or may be implemented in a form of a software functional unit.

FIG. 23 is a schematic diagram of another possible structure of a communication apparatus in the foregoing method embodiment. The first communication apparatus 300 may implement functions of the communication apparatus 101 in embodiments shown in FIG. 2 to FIG. 15, the first communication apparatus 300 may implement functions of the communication apparatus 102 in embodiments shown in FIG. 2 to FIG. 17, or the first communication apparatus 300 may implement functions of the first communication apparatus in embodiments shown in FIG. 18 to FIG. 21.

Refer to FIG. 23. The first communication apparatus 300 includes all or some hardware in a processor 3001, a communication interface 3002, and a memory 3003. There may be one or more processors 3001 in the first communication apparatus 300. In FIG. 23, one processor is used as an example. In this embodiment of this application, the processor 3001, the communication interface 3002, and the memory 3003 may be connected by using a bus system or in another manner. In FIG. 23, an example in which a bus system 3004 is used for the connection.

The processor 3001 may be a central processing unit (central processing unit, CPU), a network processor (network processor, NP), or a combination of a CPU and an NP. The processor 3001 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The communication interface 3002 is configured to receive and send data. Specifically, the communication interface 3002 may include a receiving interface and a sending interface. The receiving interface may be configured to receive data, and the sending interface may be configured to send data. There may be one or more communication interfaces 3002.

The memory 3003 may include a volatile memory (volatile memory), for example, a random access memory (random access memory, RAM). Alternatively, the memory 3003 may include a non-volatile memory (non-volatile memory), for example, a flash memory (flash memory), a hard disk drive (hard disk drive, HDD), or a solid-state drive (solid-state drive, SSD). Alternatively, the memory 3003 may include a combination of the foregoing types of memories.

Optionally, the memory 3003 stores an operating system and a program, an executable module or a data structure, a subset thereof, or an extended set thereof. The program may include various operation instructions for implementing various operations. The operating system may include various system programs, to implement various basic services and process a hardware-based task. The processor 3001 may read the program in the memory 3003, to implement the method provided in embodiments of this application.

The memory 3003 may be a storage device in the first communication apparatus 300, or may be a storage apparatus independent of the first communication apparatus 300.

The bus system 3004 may be a peripheral component interconnect (peripheral component interconnect, PCI) bus, an extended industry standard architecture (extended industry standard architecture, EISA) bus, or the like. The bus system 3004 may be classified into an address bus, a data bus, a control bus, and the like. For ease of representation, only one thick line is used to represent the bus in FIG. 23, but this does not mean that there is only one bus or only one type of bus.

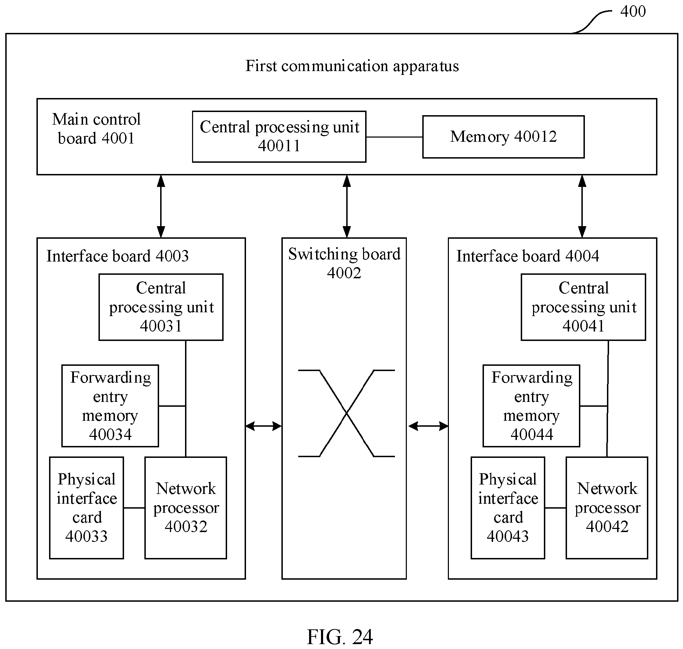

FIG. 24 is a schematic diagram of another structure of a communication apparatus according to an embodiment of this application. The first communication apparatus 400 may implement functions of the communication apparatus 101 in embodiments shown in FIG. 2 to FIG. 15, the first communication apparatus 400 may implement functions of the communication apparatus 102 in embodiments shown in FIG. 2 to FIG. 17, or the first communication apparatus 400 may implement functions of the first communication apparatus in embodiments shown in FIG. 18 to FIG. 21.

The first communication apparatus 400 includes a main control board 4001 and an interface board 4003.

The main control board 4001 is also referred to as a main processing unit (main processing unit, MPU) or a route processor card (route processor card). The main control board 4001 controls and manages components in the first communication apparatus 400, including functions such as routing calculation, device management, device maintenance, and protocol processing. The main control board 4001 includes a central processing unit 40011 and a memory 40012.

The interface board 4003 is also referred to as a line processing unit (line processing unit, LPU), a line card (line card), or a service board. The interface board 4003 is configured to provide various service interfaces, and forward a data packet. The service interface includes, but is not limited to, an Ethernet interface, a POS (Packet over SONET/SDH) interface, and the like. The Ethernet interface is, for example, a flexible Ethernet service interface (flexible Ethernet clients, FlexE Clients). The interface board 4003 includes a central processing unit 40031, a network processor 40032, a forwarding entry memory 40034, and a physical interface card (physical interface card, PIC) 40033.

The central processing unit 40031 on the interface board 4003 is configured to control and manage the interface board 4003, and communicate with the central processing unit 40011 on the main control board 4001.

The network processor 40032 is configured to implement packet forwarding processing. A form of the network processor 40032 may be a forwarding chip. Specifically, processing on an uplink packet includes processing at a packet ingress interface and forwarding table lookup, and processing on a downlink packet includes forwarding table lookup and the like.

The physical interface card 40033 is configured to implement an interconnection function at a physical layer. Original traffic enters the interface board 4003 from the physical interface card 40033, and a processed packet is sent from the physical interface card 40033. The physical interface card 40033 includes at least one physical interface. The physical interface is also referred to as a physical port. The physical interface card 40033, also referred to as a subcard, may be installed on the interface board 4003, and is responsible for converting an optical/electrical signal into a packet, performing validity check on the packet, and forwarding the packet to the network processor 40032 for processing. In some embodiments, the central processing unit 40031 of the interface board 1103 may alternatively perform a function of the network processor 40032, for example, implement software forwarding based on a general-purpose CPU. Therefore, the network processor 40032 is not necessary in the physical interface card 40033.

Optionally, the first communication apparatus 400 includes a plurality of interface boards. For example, the first communication apparatus 400 further includes an interface board 4004, and the interface board 4004 includes a central processing unit 40041, a network processor 40042, a forwarding entry memory 40044, and a physical interface card 40043.

Optionally, the first communication apparatus 400 further includes a switching board 4002. The switching board 4002 may also be referred to as a switch fabric unit (switch fabric unit, SFU). When the first communication apparatus has a plurality of interface boards 4003, the switching board 4002 is configured to complete data exchange between the interface boards. For example, the interface board 4003 and the interface board 4004 may communicate with each other through the switching board 4002.

The main control board 4001 is coupled to the interface board 4003. For example, the main control board 4001, the interface board 4003, the interface board 4004, and the switching board 4002 are connected to a system backplane through a system bus to implement interworking. In a possible implementation, an inter-process communication (inter-process communication, IPC) channel is established between the main control board 4001 and the interface board 4003, and communication is performed between the main control board 4001 and the interface board 4003 through the IPC channel.

Logically, the first communication apparatus 400 includes a control plane and a forwarding plane. The control plane includes the main control board 4001 and the central processing unit 40031. The forwarding plane includes components for performing forwarding, for example, the forwarding entry memory 40034, the physical interface card 40033, and the network processor 40032. The control plane performs functions such as routing, generating a forwarding table, processing signaling and a protocol packet, and configuring and maintaining a device status. The control plane delivers the generated forwarding table to the forwarding plane. On the forwarding plane, based on the forwarding table delivered from the control plane, the network processor 40032 looks up the table, and forwards a packet received by the physical interface card 40033. The forwarding table delivered by the control plane may be stored in the forwarding entry memory 40034. In some embodiments, the control plane and the forwarding plane may be completely separated, and are not on a same device.

It should be understood that the processing unit 2002 in the first communication apparatus 200 may be equivalent to the central processing unit 40011 or the central processing unit 40031 in the first communication apparatus 400.

It should be understood that, in this embodiment of this application, operations on the interface board 4004 are the same as operations on the interface board 4003. For brevity, details are not described again.

It can be understood that, there may be one or more main control boards. When there are a plurality of main control boards, the main control boards may include an active main control board and a standby main control board. There may be one or more interface boards, and the first communication apparatus 400 with a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the first communication apparatus 400 may not need a switching board, and the interface board undertakes a service data processing function of an entire system. In a distributed forwarding architecture, the first communication apparatus 400 may have at least one switching board, and data is exchanged between a plurality of interface boards by using the switching board, to provide a capability of exchanging and processing a large capacity of data. Therefore, a data access and processing capability of the first communication apparatus 400 in the distributed architecture is greater than the device in the centralized architecture. Optionally, the first communication apparatus 400 may alternatively be in a form in which there is only one card. To be specific, there is no switching board, and functions of the interface board and the main control board are integrated on the card. In this case, the central processing unit on the interface board and the central processing unit on the main control board may be combined to form one central processing unit on the card, to perform functions obtained by combining the two central processing units. This form of device (for example, a low-end switch or a router) has a relatively weak data exchange and processing capability. A specific architecture that is to be used depends on a specific networking deployment scenario.

In some possible embodiments, the foregoing communication apparatus may be implemented as a virtualized device. For example, the virtualized device may be a virtual machine (virtual machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as a communication apparatus. For example, the function of the communication apparatus may be implemented based on a general-purpose physical server in combination with a network functions virtualization (network functions virtualization, NFV) technology. By reading this application, persons skilled in the art may obtain, on the general-purpose physical server through virtualization with reference to the NFV technology, the communication apparatus having the foregoing functions. Details are not described herein.

An embodiment of this application further provides a chip, including a processor and an interface circuit. The interface circuit is configured to receive instructions and transmit the instructions to the processor. The processor may be configured to perform operations of each communication apparatus in the foregoing communication method. The processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit,ASIC), a system on chip (system on chip, SoC), a central processing unit (central processing unit, CPU), a network processor (network processor, NP), a digital signal processor (digital signal processor, DSP), a micro controller unit (micro controller unit, MCU), or a programmable controller (programmable logic device, PLD) or another integrated chip.

An embodiment of this application further provides a computer-readable storage medium, including instructions or a computer program. When the instructions or the computer program are/is run on a computer, the computer is enabled to perform the communication method provided in the foregoing embodiment.

An embodiment of this application further provides a computer program product including instructions or a computer program. When the computer program product is run on a computer, the computer is enabled to perform the packet forwarding method provided in the foregoing embodiment.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into units is merely logical service division and may be another division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments in this application.

Persons skilled in the art should be aware that in the foregoing one or more examples, the services described in this application may be implemented by hardware, software, firmware, or any combination thereof. When the services are implemented by using the software, the services may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and the benefits of this application are further described in detail. It should be understood that the foregoing descriptions are merely specific implementations of this application.

The foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, wherein the method comprises:
receiving, by a first communication apparatus, a first Ethernet virtual private network media access control EVPN MAC route from a second communication apparatus, wherein the first EVPN MAC route carries a first MAC address and a first virtual extensible local area network identifier VNI;
generating, by the first communication apparatus, a second EVPN MAC route based on the first EVPN MAC route, wherein the second EVPN MAC route carries the first MAC address and a first segment routing over IPv6 segment identifier SRv6 SID that is of the first communication apparatus and that corresponds to the first VNI; and
sending, by the first communication apparatus, the second EVPN MAC route to a third communication apparatus.

2. The method according to claim 1, wherein the method further comprises:
determining, by the first communication apparatus according to an SRv6 SID allocation policy, the first SRv6 SID corresponding to the first VNI, wherein
the SRv6 SID allocation policy comprises at least one of the following: allocating different SRv6 SIDs based on different EVPN instances corresponding to EVPN MAC routes, allocating different SRv6 SIDs based on different MAC addresses carried in EVPN MAC routes; or allocating different SRv6 SIDs based on EVPN MAC routes from different communication apparatuses.

3. The method according to claim 1, wherein the first SRv6 SID is an SRv6 SID allocated to a first Ethernet virtual private network EVPN instance of the first communication apparatus.

4. The method according to claim 3, wherein a MAC table corresponding to the first EVPN instance comprises a correspondence between the first MAC address and the first VNI.

5. The method according to claim 3 or 4, wherein the method further comprises:
receiving, by the first communication apparatus, a third EVPN MAC route, wherein the third EVPN MAC route carries a second MAC address and a second VNI, and the third EVPN MAC route corresponds to a second EVPN instance of the first communication apparatus;
generating, by the first communication apparatus, a fourth EVPN MAC route based on the third EVPN MAC route, wherein the fourth EVPN MAC route carries the second MAC address and a second SRv6 SID, and the second SRv6 SID is an SRv6 SID allocated to the second EVPN instance; and
sending, by the first communication apparatus, the fourth EVPN MAC route to the third communication apparatus.

6. The method according to any one of claims 1 to 5, wherein the method further comprises: recording, by the first communication apparatus, a correspondence between the first SRv6 SID and the first VNI.

7. The method according to claim 6, wherein the first SRv6 SID is associated with a first operation, and the first operation is performing virtual extensible local area network VXLAN encapsulation.

8. A communication method, wherein the method comprises:
receiving, by a first communication apparatus, a first SRv6 packet whose destination address is a first segment routing over IPv6 segment identifier SRv6 SID from a second communication apparatus, wherein the first SRv6 packet comprises a first layer 2 packet whose destination address is a first media access control MAC address;
determining, by the first communication apparatus, a first virtual extensible local area network identifier VNI based on the first SRv6 SID;
performing, by the first communication apparatus, virtual extensible local area network VXLAN encapsulation on the first layer 2 packet to obtain a first VXLAN packet, wherein the first VXLAN packet comprises the first VNI; and
forwarding, by the first communication apparatus, the first VXLAN packet to a third communication apparatus.

9. The method according to claim 8, wherein the first SRv6 SID is an SRv6 SID allocated to a first Ethernet virtual private network EVPN instance of the first communication apparatus.

10. The method according to claim 9, wherein the determining, by the first communication apparatus, a first VNI based on the first SRv6 SID comprises:
determining, by the first communication apparatus, the first EVPN instance based on the first SRv6 SID;
determining, by the first communication apparatus based on the first MAC address, the first VNI from a MAC table corresponding to the first EVPN instance, wherein the MAC table comprises a correspondence between the first MAC address and the first VNI.

11. The method according to claim 9 or 10, wherein the method further comprises:
receiving, by the first communication apparatus, a second SRv6 packet whose destination address is a second SRv6 SID from the second communication apparatus, wherein the second SRv6 packet comprises a second layer 2 packet whose destination address is a second MAC address;
determining, by the first communication apparatus, a second EVPN instance based on the second SRv6 SID;
determining, by the first communication apparatus based on the second MAC address, a second VNI from a MAC table corresponding to the second EVPN instance, wherein the MAC table comprises a correspondence between the second MAC address and the second VNI;
performing, by the first communication apparatus, VXLAN encapsulation on the second layer 2 packet to obtain a second VXLAN packet, wherein the second VXLAN packet comprises the second VNI; and
forwarding, by the first communication apparatus, the second VXLAN packet.

12. The method according to claim 8, wherein the determining, by the first communication apparatus, a first VNI based on the first SRv6 SID comprises:
determining, by the first communication apparatus, the first VNI based on the first SRv6 SID and a correspondence that is between the first SRv6 SID and the first VNI and that is recorded in the first communication apparatus.

13. The method according to claim 11, wherein the first SRv6 SID is associated with a first operation, and the first operation is performing VXLAN encapsulation.

14. The method according to any one of claims 8 to 13, wherein the method further comprises:
receiving, by the first communication apparatus, a third SRv6 packet whose destination address is a third SRv6 SID from the second communication apparatus, wherein the third SRv6 packet comprises a third layer 2 packet whose destination address is a third MAC address;
determining, by the first communication apparatus, the first VNI based on the third SRv6 SID and a correspondence that is between the third SRv6 SID and the first VNI and that is recorded in the first communication apparatus;
performing, by the first communication apparatus, VXLAN encapsulation on the third layer 2 packet to obtain a third VXLAN packet, wherein the third VXLAN packet comprises the first VNI; and
forwarding, by the first communication apparatus, the third VXLAN packet to the third communication apparatus.

15. A communication apparatus, comprising a processor and an interface, wherein the processor receives or sends data through the interface, and the processor is configured to implement the method according to any one of claims 1 to 14.
